(19) Europäisches Patentamt / European Patent Office / Office européen des brevets

(11) **EP 3 247 016 B1**

(12) **EUROPEAN PATENT SPECIFICATION**

(45) Date of publication and mention
of the grant of the patent:
**08.06.2022 Bulletin 2022/23**

(21) Application number: **15877877.9**

(22) Date of filing: **25.06.2015**

(51) International Patent Classification (IPC):
*H02J 3/38* (2006.01)    *H02J 3/00* (2006.01)
*H02J 3/28* (2006.01)    *G06Q 50/06* (2012.01)
*H02J 3/32* (2006.01)    *F24D 19/10* (2006.01)

(52) Cooperative Patent Classification (CPC):
**G06Q 50/06; H02J 3/003; H02J 3/28; H02J 3/38;
H02J 3/381;** F24D 19/1063; H02J 2300/24;
H02J 2310/12; H02J 2310/64; Y02B 70/3225;
Y02E 10/56; Y02E 70/30; Y04S 20/222; Y04S 50/10

(86) International application number:
**PCT/JP2015/068307**

(87) International publication number:
**WO 2016/113925 (21.07.2016 Gazette 2016/29)**

(54) **ELECTRICAL POWER MANAGEMENT DEVICE**

STROMVERWALTUNGSVORRICHTUNG

DISPOSITIF DE GESTION D'ÉNERGIE ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.01.2015 JP 2015006354**

(43) Date of publication of application:
**22.11.2017 Bulletin 2017/47**

(73) Proprietor: **Mitsubishi Electric Corporation
Chiyoda-ku
Tokyo 100-8310 (JP)**

(72) Inventors:
• **INOUE Sadayuki
Tokyo 100-8310 (JP)**

• **OKUDA Tatsuya
Tokyo 100-8310 (JP)**

(74) Representative: **Sajda, Wolf E.
Meissner Bolte Patentanwälte
Rechtsanwälte Partnerschaft mbB
Postfach 86 06 24
81633 München (DE)**

(56) References cited:
**EP-A1- 2 800 221**    **EP-A2- 2 375 528**
**EP-B1- 2 375 528**    **WO-A1-2012/057305**
**JP-A- 2011 055 575**    **JP-A- 2011 075 364**
**JP-A- 2013 002 794**    **JP-A- 2013 044 466**
**JP-A- 2013 044 466**    **JP-A- 2013 124 926**
**US-A1- 2012 130 556**    **US-A1- 2012 205 456**

**Description**

Technical Field

The present invention relates to an electrical power management device that manages an operation of an energy creating device, energy storing device, or load device, and in particular, relates to management and control of an energy storing device.

Background Art

In recent years, aiming at reducing the burden on the environment, power generation systems utilizing natural energy, such as photovoltaic power generation, that does not emit carbon dioxide are spreading in homes. Also, in order to combat a power shortage or the like, there is advancing commercialization of a system that includes a storage battery, a system that utilizes an electric vehicle as a storage battery, a system wherein photovoltaic power generation and a storage battery are combined, and the like.

Meanwhile, the expense of introducing this kind of energy creating device or energy storing device is high. Because of this, there is advancing development of an electrical power management device (a home energy management system, hereafter called an HEMS) that efficiently operates an introduced energy creating device, energy storing device, or load device, and reduces power charges.

For example, an electrical power management device that manages an energy creating device such as a photovoltaic cell (hereafter called a PV) or fuel cell, a storage battery, a heat pump, and an electrical load is described in PTL 1.

Specifically, power generated by a PV is predicted from a weather forecast, and surplus power of the PV is calculated based on a result of the prediction. When distributing the calculated surplus power to a storage battery and heat pump, the behavior of an energy supply system is managed using a system evaluation function, and operating cost is managed with a cost function. Further, a control method for determining the behavior of the energy supply system so that the operating cost is minimal (an operating plan formulation) is disclosed.

Also, a control system for determining an operating plan based on a schedule compiled based on actual weather forecast records, a database of energy generation records, and a database of power supply and demand records, an energy storing device state evaluation function, and weather forecast information is disclosed in PTL 2. PTL 2 discloses that the databases have a learning function.

As a specific example, PTL 2 discloses as an example of a value of stored power that as an increase in a power load is predicted when a maximum air temperature in summer is high, the stored power has a high value.

Also, a heat storing device control method for carrying out scheduling so that a heat storing device has a predetermined amount of stored heat at a predetermined time is disclosed in PTL 3. When this scheduling is carried out, a schedule that causes the heat storing device to operate is compiled based on an operating time necessary in order to reach the predetermined amount of stored heat or more, and on a surplus power time for which it is predicted that surplus photovoltaic power-generated power will be generated. Specifically, PTL 3 discloses that a schedule is compiled so that an amount of stored heat not secured by heating in the surplus power time is secured using late night power for which power charges are low.

PTL 4 discloses an energy management system applied at the time of operating energy equipment such as photovoltaic power generation facilities, a battery, and an electric water heater on a consumer end.

PTL 5 discloses a solar power generation information calculation method and solar power generation information calculation apparatus in solar power generation amount calculation.

PTL 6 discloses a power management system and a power management method. PTL 7 discloses a heat pump hot-water supply system wherein a heat pump hot-water supply device is operated by using electric energy stored in an electricity storage device.

PTL 8 discloses various computer-based systems and methods for managing the implementation, inclusion and aggregation of distributed renewable energy sources and energy storage in the electric grid.

PTL 9 discloses a hot water supply control device provided with a storage battery capable of storing electric energy.

PTL 10 discloses a power management control device that includes an electrical storage device and performs ancillary service for supplying surplus power to a power system.

PTL 11 discloses an operation management device manages an operation of a water heater.

PTL 12 discloses an electric vehicle including a power storage device for supplying electric power to a drive device.

PTL 13 discloses that the battery life is extended in a wind power generation system, by accurately grasping the battery state (SOC: State of Charge) of a storage battery used for suppressing fluctuations in wind power generation.

List of Citations

Patent Literature

| | |
|---|---|
| PTL 1: | International Publication (re-publication) WO 2011/086886 A |
| PTL 2: | Japanese Patent No. JP 5 215 822 B2 |
| PTL 3: | JP 2012-172 915 A |
| PTL 4: | EP 2 375 528 A2 |
| PTL 5: | JP 2013 124926 A |
| PTL 6: | EP 2 800 221 A1 |
| PTL 7: | US 2012/205456 A1 |
| PTL 8: | US 2012/130556 A1 |
| PTL 9: | JP 2013 044466 A |
| PTL 10: | WO 2012/057305 A1 |
| PTL 11: | JP 2013 002794 A |
| PTL 12: | JP 2011 055575 A |
| PTL 13: | JP 2011 075364 A |

Summary of the Invention

Technical Problem

As heretofore described, the electrical power management device described in PTL 1 is such that power consumption and stored heat consumption are acquired, supply and demand for power consumption and stored heat consumption are predicted based on a result of the acquisition, storage battery and heat storage device control parameters (an operating plan) are obtained by the predicted supply and demand prediction data being input into predetermined functions (a system function and a cost function), and storage battery charging power can be reduced, and deterioration of the storage battery restricted, by the operating plan being optimized.

However, efficiency and characteristics of an energy storing device change in accordance with external air temperature. Also, an energy storing device in which a heat pump is employed is such that, in addition to external air temperature, operating points for operating efficiently differ.

Consequently, when compiling control parameters (an operating plan) of an energy storing device (for example, when using a storage battery as an electricity storing device or an EcoCute (registered trademark, hereafter called an EC) as a heat storing device) using an existing electrical power management device, characteristics of the electricity storing device and heat storing device are not taken into consideration. Because of this, for example, when using a lithium ion battery as the storage battery, there is a problem in that deterioration of the storage battery advances when carrying out charging and discharging at a high temperature or low temperature, which has a considerable effect on the lifespan of the storage battery. EcoCute is a product name representing a natural refrigerant $CO_2$ heat pump water heater that uses carbon dioxide as a refrigerant, and can heat water using air heat.

Specifically, a storage battery such as a lithium ion battery is generally such that when carrying out charging at an external air temperature (to be precise, cell temperature) of 0 °C or less in order to store electrical power using a chemical change, deterioration of the storage battery advances unnecessarily. In the same way, when the cell temperature increases, deterioration of the storage battery advances, because of which charging and discharging currents are limited, and barely any charging or discharging can be carried out when the cell temperature exceeds 40 °C.

Also, a storage battery is such that when the charging power increases, a limit is imposed on the charging current, regardless of temperature, in order to restrict deterioration of the storage battery. Generally, a storage battery is such that charging is carried out at a fixed current within a range wherein the amount of electrical power stored is small, and when a predetermined charge (storage battery voltage) is exceeded, a shift is made from fixed current charging to a fixed voltage charging mode.

In this way, the existing electrical power management device does not take storage battery characteristics into consideration, because of which, for example, even when formulating an operating plan such that the storage battery is charged with surplus power in a time period around midday in summer, when PV power generation is at a peak, the storage battery can sometimes be charged with barely any surplus power when the external air temperature is near 35 °C. Also, when controlling an EC, an error occurs in predicting power consumption for securing a necessary amount of stored heat when formulating an operating plan without taking energy conversion efficiency with respect to external air temperature or an operating point into consideration, because of which, for example, an error occurs in a prediction result, and there is a problem in that an unnecessary selling or purchasing of electricity occurs. Also, depending on the temperature, there are times when barely any charging or discharging of the storage battery can be carried out, as heretofore described.

Also, the electrical power management device described in PTL 2 learns, and creates a database of, actual weather forecast records and power generation records, and learns and creates a database of supply and demand records, and obtains an operating plan based on a schedule compiled based on the data in database form, an energy storing device state evaluation function, and weather forecast information.

However, in the same way as in the case of PTL 1, the operating plan is formulated without taking energy storing device characteristics into consideration, because of which, when charging a storage battery using late night power in a cold period in winter, and heating water by driving an EC in a warm time period in daytime using PV surplus power and cheap late night power with which the storage battery is charged late at night, there are cases in which the storage battery cannot secure an envisaged charging current (for example, when planning full charging with late night power) at an air temperature of, for example, 0 °C or less, and less than half of the planned charging can be carried out.

As an envisaged charging power cannot be secured in this kind of case, there is a problem in that water is heated by purchasing electricity at high daytime power charges. Also, when heating water using an EC too, energy conversion efficiency is not taken into consideration, because of which there is also a problem in that more power than necessary is used.

Also, the electrical power management device described in PTL 3 carries out scheduling so that a heat storing device has a predetermined amount of stored heat at a predetermined time. At this time, a schedule that causes the heat storing device to operate in daytime is compiled based on an operating time necessary in order to reach the predetermined amount of stored heat or more, and on a surplus power time for which it is predicted that surplus PV power will be generated. Meanwhile, in a late night power time period, an amount of stored heat not secured by heating in the surplus power time is calculated, and a late night time period schedule is compiled based on a result of the calculation so that heating is carried out using late night power, for which power charges are low.

However, this kind of existing electrical power management device is such that an operating plan is formulated without taking energy conversion efficiency with respect to external air temperature or an operating point into consideration, because of which there is a problem in that an amount of heat necessary when using hot water is not secured, or that more heating than necessary is carried out.

The invention, having been contrived in order to resolve the problems of the heretofore described kinds of existing technology, provides an electrical power management device that controls an energy creating device and an energy storing device, carries out energy management (operating cost minimization), and can take energy storing device characteristics into consideration to compile an optimal energy storing device operating plan.

Solution to the Problem

The present invention provides a solution to the above mentioned problems according to the independent claims. Preferred embodiments are provided by the dependent claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims.

Advantageous Effects of the Invention

According to the electrical power management device of the invention, an operating plan is formulated based on energy storing device characteristics (for example, charging and discharging current characteristics of the heretofore described storage battery, and the like), which characteristics change considerably in accordance with external air temperature, and on power charge structure information, because of which an operating plan such that operating costs are kept to a minimum can be executed. Also, limits of heat storing device efficiency and storage battery charging and discharging currents due to external air temperature, a charging current limit caused by an amount of power charged in the storage battery, and the like, are considered in advance, because of which, for example, the occurrence of problems such as the external air temperature being too high in a time period in which storage battery charging is planned, or the amount of power stored being too high and not being able to secure the planned charging current, can be restricted. Furthermore, by the operating plan being compiled with consideration to an energy conversion efficiency based on the external air temperature and load characteristics of a heat storing device in which a heat pump is utilized, errors in predicting power consumption and amount of heat stored due to the heat storing device characteristics in an actual operation can be kept to a minimum.

Brief Description of the Drawings

FIG. 1 is a schematic view showing an overall configuration of an electrical power management structure including an electrical power management device according to a first embodiment of the invention.

FIG. 2 is a block diagram schematically showing a system configuration of the electrical power management device in the first embodiment of the invention.

FIG. 3 is a block diagram schematically showing a configuration of a operation plan compilation unit in the electrical power management device shown in FIG. 2.

FIG. 4 is a diagram for describing characteristics of a storage battery used in the first embodiment of the invention.

FIG. 5 is a diagram for describing characteristics of a storage battery used in the first embodiment of the invention.

FIG. 6 is a diagram for describing characteristics of an EC used in the first embodiment of the invention.

FIG. 7 is a main flowchart diagram for describing an operating plan compilation of the electrical power management device according to the first embodiment of the invention.

FIG. 8 is a flowchart relating to a PV power generation prediction according to the first embodiment of the invention.

FIG. 9 is a diagram showing an example of solar radiation prediction data for each kind of weather at each time stored in a database of a PV power generation learning management unit according to the first embodiment of the invention.

FIG. 10 is a diagram showing an example of external air temperature prediction data for each kind of weather at each time stored in a database of a load power consumption prediction management unit according to the first embodiment of the invention.

FIG. 11 is a diagram for describing an operation when correcting a prediction result based on solar radiation information calculated from actually measured PV power generation with respect to solar radiation prediction information according to the first embodiment of the invention.

FIG. 12 is a diagram for describing an operation when correcting air temperature prediction information according to the first embodiment of the invention, based on actually measured air temperature information.

FIG. 13 is a diagram showing a flow relating to a load power consumption prediction according to the first embodiment of the invention.

FIG. 14 is a diagram for describing an operation when correcting load power consumption prediction information according to the first embodiment of the invention, based on actually measured load-use power information.

FIG. 15 is a diagram showing an example of a power charge structure according to the first embodiment of the invention.

FIG. 16 is a diagram showing an example of a hot water usage time and usage amount based on a family schedule according to the first embodiment of the invention.

FIG. 17A is a diagram showing a main flow relating to compilation of storage battery and EC operating plans compiled based on previous-day weather forecast information according to the first embodiment of the invention.

FIG. 17B is a diagram showing a sub-flow branched from FIG. 17A.

FIG. 18A is a diagram showing a sub-flow relating to compilation of storage battery and EC operating plans compiled based on previous-day weather forecast information according to the first embodiment of the invention.

FIG. 18B is a diagram showing a sub-flow branched from FIG. 18A.

FIG. 18C is a diagram showing a sub-flow branched from FIG. 18A.

FIG. 19A is a diagram showing a sub-flow relating to a same-day operating plan formulation that corrects an operating plan based on same-day weather forecast information, air temperature information, and information on PV power generation, load-use power, and the like, in the first embodiment of the invention.

FIG. 19B is a diagram showing a sub-flow branched from FIG. 19A.

FIG. 20 is a diagram for describing an operation when compiling an operating plan without considering storage battery characteristics according to the first embodiment of the invention.

FIG. 21 is a diagram for describing an operation when compiling an operating plan without considering storage battery characteristics together with FIG. 20.

FIG. 22 is a diagram for describing an operation when compiling an operating plan with consideration to storage battery characteristics according to the first embodiment of the invention.

FIG. 23 is a diagram for describing an operation when compiling an operating plan with consideration to storage battery characteristics together with FIG. 22.

## Description of Embodiments

### First Embodiment

Hereafter, the invention will be described with reference to the drawings, which are an embodiment.

Identical reference signs in the drawings indicate identical or corresponding portions.

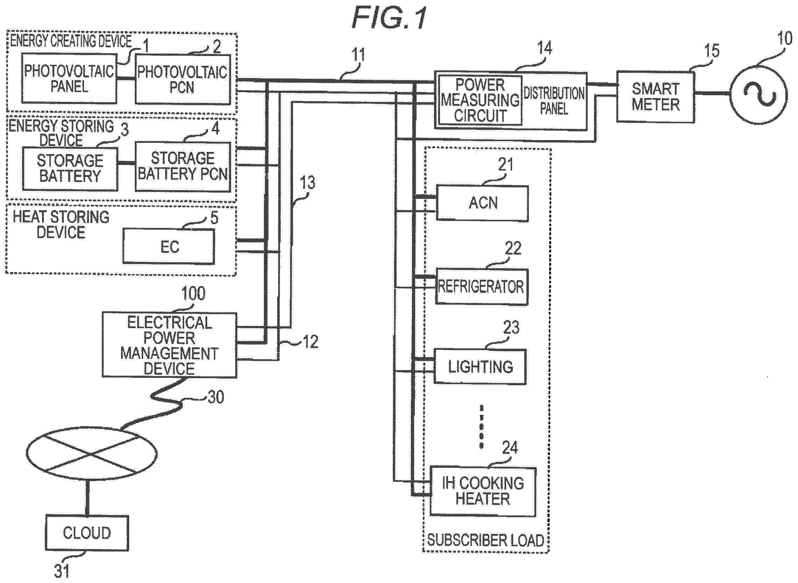

FIG. 1 is a schematic view including an electrical power management device according to a first embodiment of the invention, and shows an overall configuration of a domestic electrical power management system configured of an energy creating device, electricity storing device, heat storing device, load, and commercial system managed by the electrical power management device.

In the diagram, a photovoltaic panel 1 is connected to a photovoltaic power conditioner 2 (hereafter called a photovoltaic PCN), and direct current power output from the photovoltaic panel 1 is converted into alternating current power by the photovoltaic PCN 2. Herein, a description will be given of a case wherein a photovoltaic power generating device configured of the photovoltaic panel 1 and photovoltaic PCN 2 is used as an example of an energy creating device, but the energy creating device, not being limited to a photovoltaic power generating device, may be a wind power generating device or the like.

Also, a storage battery 3 is connected to a storage battery power conditioner 4 (hereafter called a storage battery PCN), and charging and discharging currents of the storage battery 3 are controlled by the storage battery PCN 4. Herein, a description will be given of a case wherein an electricity storing device configured of the storage battery 3, for which a lithium ion battery is used, and the storage battery PCN 4 is used as an example of an electricity storing device, but the electricity storing device, not being limited to a storage battery (lithium ion battery), may be, for example, a case wherein a battery of an electric vehicle is utilized as a storage battery, or a case wherein a lead-acid storage battery is used.

Furthermore, a heat storing device, not being limited to an EC 5, may be, for example, a fuel cell that heats water by utilizing heat generated when power is generated, or the like. Also, when using a fuel cell, the fuel cell can also be utilized as an energy creating device.

A system power supply 10 supplies 200 V alternating current power, and is connected to each device via a commercial system 11. An electrical power management device 100, which is a main portion of the invention, is connected via a communication network 12 to the energy creating device, the electricity storing device, the heat storing device, a subscriber load, a distribution panel 14, and a smart meter 15. Herein, a description will be given of a case wherein an Ethernet (registered trademark) (wired) is used as the communication network 12, and connects each device, but this not being limiting, connection may be carried out using wireless or PLC (power line communication) determined by a physical layer of an Echonet Lite standard, or the like.

A power measuring circuit in the distribution panel 14 measures power generated by the energy creating device, charging and discharging power of the electricity storing device, and power consumption of devices installed in the home, including the heat storing device, and notifies the electrical power management device 100 of results of the measurements via a signal line 13. Herein, a distribution panel that does not have a power measuring circuit may be used as the distribution panel 14, in which case it is sufficient to employ a configuration wherein power consumption and the like of each kind of device is measured inside the device, and the electrical power management device 100 is notified of results of the measurements via the communication network 12, or the like.

Furthermore, an air conditioner 21 (hereafter called an ACN), a refrigerator 22, lighting 23, and an IH cooking heater 24 are shown as representative examples of the subscriber load, but these not being limiting, the subscriber load may also be, for example, a television, a personal computer, a vacuum cleaner, a dish washing machine, a ventilator, or a heater.

Also, each subscriber load device, not being limited to one, may be multiple (for example, there may be three of the ACN 21). In the same way, the energy creating device, electricity storing device, and heat storing device too not being limited to one, a system may be such that the electricity storing device is a combination of a storage battery and an electric vehicle, the energy creating device is a combination of a PV, wind power, and a fuel cell, and the heat storing device utilizes an EC and surplus fuel cell energy. The electrical power management device 100 is connected to a cloud server (registered trademark) 31 via a public network 30.

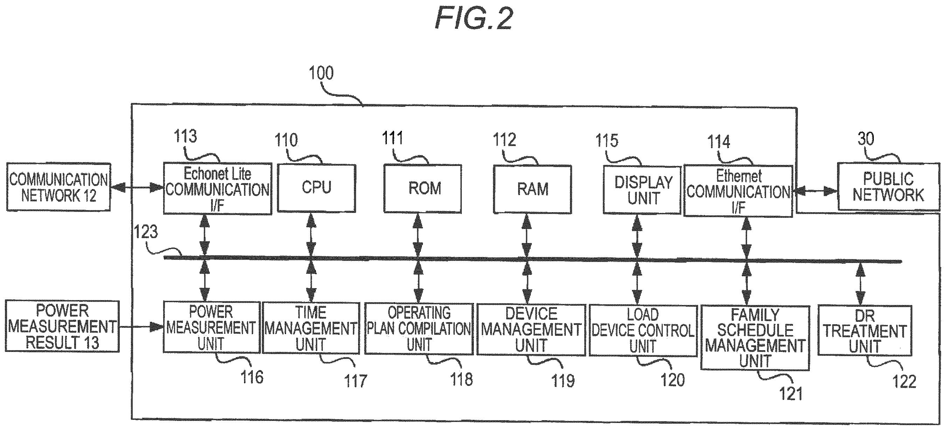

Next, a description will be given of FIG. 2, which shows a system configuration of the electrical power management device 100. In the drawing, the electrical power management device 100 has a CPU 110 (central processing unit) that controls various kinds of device and processes data, a ROM 111 (read only memory) that stores a program, and a RAM 112 (random access memory) that temporarily stores data when the program is executed and is used as a work area when the program is executed, and is connected to the photovoltaic PCN 2, storage battery PCN 4, EC 5, distribution panel 14, smart meter 15, ACN 21, refrigerator 22, lighting 23, IH cooking heater 24, and the like, via an Echonet Lite communication I/F (a physical layer is Ethernet) 113. Herein, a description will be given of a case wherein Echonet Lite is used as an example of a communication protocol, but this not being limiting, the communication protocol may be, for example, an independently selected communication protocol, or a protocol using another standard.

Also, the electrical power management device 100 has an Ethernet communication I/F (interface) 114 connected to the public network 30. Herein, a description will be given of a case wherein Ethernet is used as a physical layer, but a wireless LAN (local area network) or optical communication I/F (interface) may also be used. Also, a description will be given of a case wherein the electrical power management device 100 is connected directly to the public network 30, but this not being limiting, the electrical power management device 100 can be implemented in the same way when connected to the public network 30 via a residential gateway or the like.

Furthermore, a display unit 115 that displays various kinds of operating state, a power measurement unit 116 that stores a power measurement result output from the power measuring circuit in the distribution panel 14, a time management unit 117 that manages time (including day, month, and year), an operating plan compilation unit 118 that compiles an operating plan, and a device management unit 119 that manages an operating condition, and the like, of the energy creating device, energy storing device, and each load, are provided in the electrical power management device 100. Device verification when a device is newly introduced is assumed to be implemented in the device management unit 119.

Also, the electrical power management device 100 has a load device control unit 120 that controls an operation of a load device, a family schedule management unit 121 that manages a family schedule, and a DR treatment unit 122 that determines the magnitude of a reduction in power usage, an order of priority of devices whose power usage is to be reduced, and the like, when a demand response (hereafter called a DR) is received, and is configured so that signals from each device are transmitted and received via a CPU bus 123.

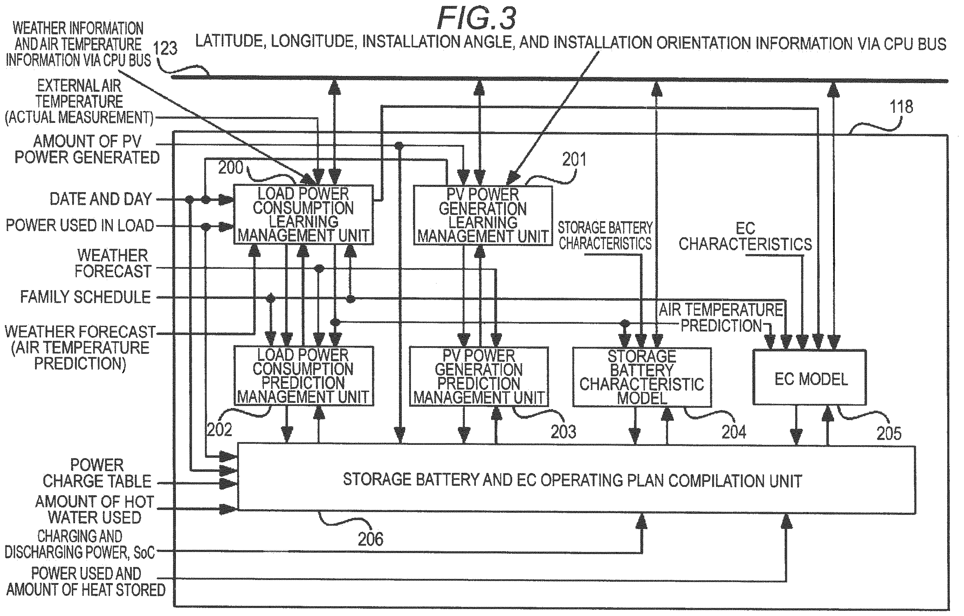

FIG. 3 is a block diagram showing a configuration of the operating plan compilation unit 118 in the electrical power management device 100.

In the diagram, the operating plan compilation unit 118 has a load power consumption learning management unit 200, which learns power consumption of the load devices, including the EC 5, from information input from the power measurement unit 116 based on current weather information obtained via the Ethernet communication I/F 114 and current air temperature information measured by an unshown temperature gauge, in addition to date, day, and time data input from the time management unit 117, a PV power generation learning management unit 201, which learns an amount of power generated by the photovoltaic panel 1 input from the power measurement unit 116 based on date and time data input from the time management unit 117 and the current weather obtained via the Ethernet communication I/F 114, and a load power consumption prediction management unit 202, which predicts load power consumption based on weather forecast information and air temperature information (maximum air temperature, minimum air temperature) obtained via the Ethernet communication I/F 114, a family schedule input from the family schedule management unit 121, and a database in the load power consumption learning management unit 200. Herein, it is assumed that the load power consumption prediction management unit 202 predicts a total power consumption of the load devices excluding power consumption of the EC 5, but the load power consumption prediction management unit 202 may also be configured so as to predict the power consumption of each load individually.

Also, a PV power generation prediction management unit 203, which predicts a subsequent amount of PV power generation based on a weather forecast, a database in the PV power generation learning management unit 201, and PV power generation records, a storage battery characteristic model 204, which calculates a surface temperature of each cell inside the storage battery from input storage battery characteristic data, external air temperature prediction information, and an operating plan output from a storage battery and EC operating plan compilation unit 206, uses a result of the calculation to calculate various kinds of limit information that are heavily influenced by storage battery deterioration, such as charging and discharging current, charge termination voltage, and discharge termination voltage, from the storage battery characteristic data, and based on a result of this calculation, simulates an operation based on an operating plan of charging and discharging current or charging and discharging power, an EC model 205, which calculates power consumption and an amount of heat stored at each time based on an external air temperature prediction, EC 5 characteristic data, and an amount of hot water used and EC operating plan output from the storage battery and EC operating plan compilation unit 206, and the storage battery and EC operating plan compilation unit 206, are included in the operating plan compilation unit 118. Herein, it is assumed that when power consumption is calculated by the EC model 205, calculation is carried out using a database in the load power consumption learning management unit 200.

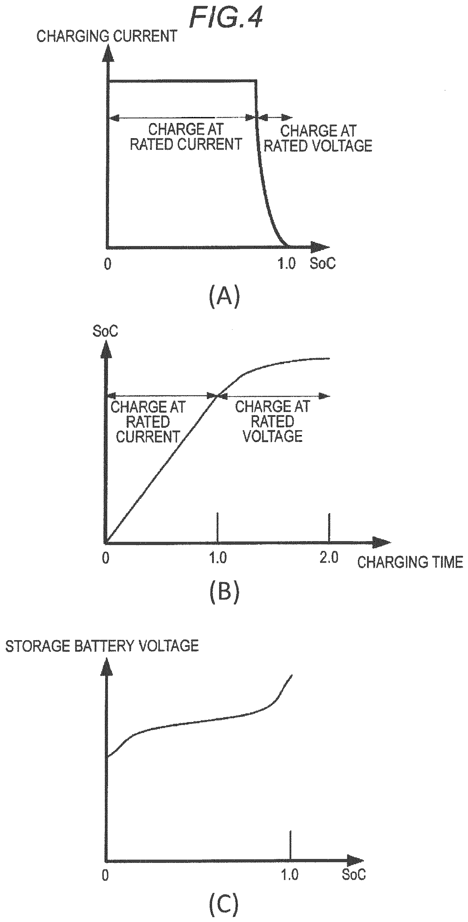

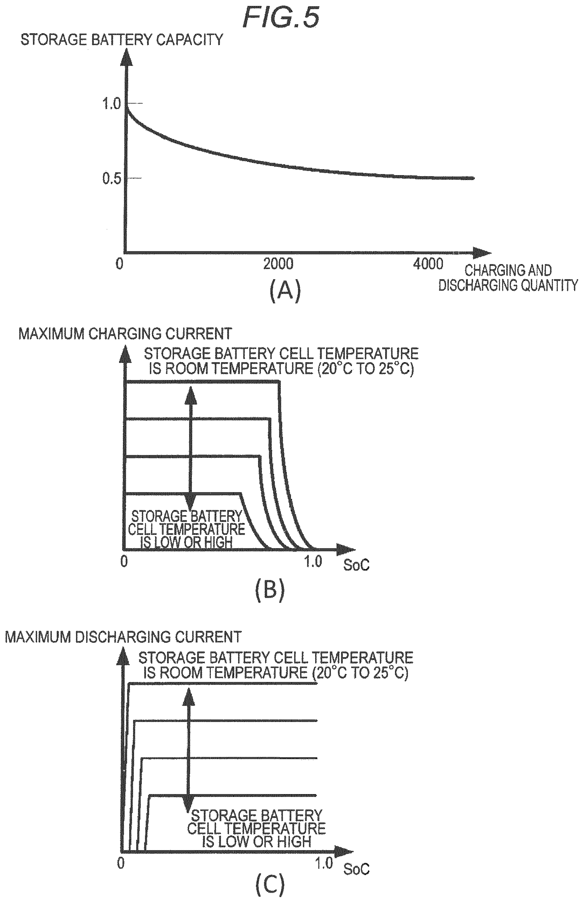

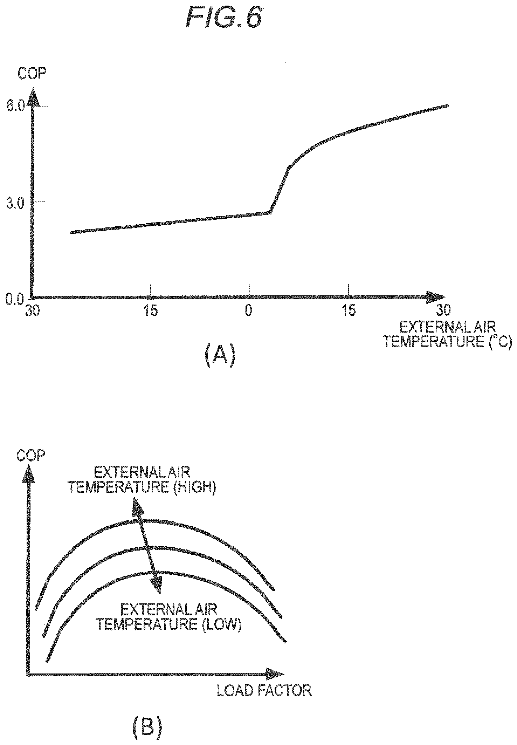

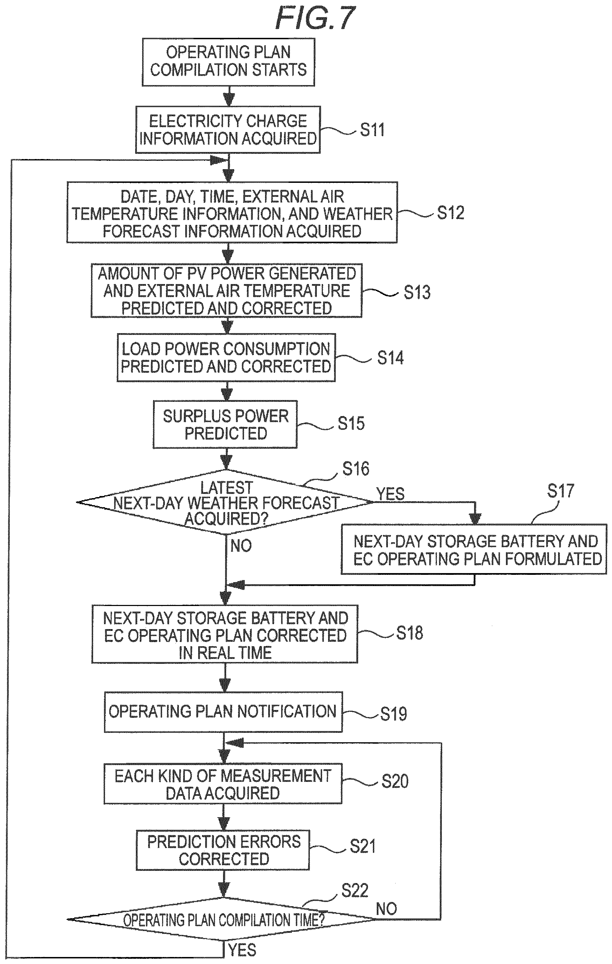

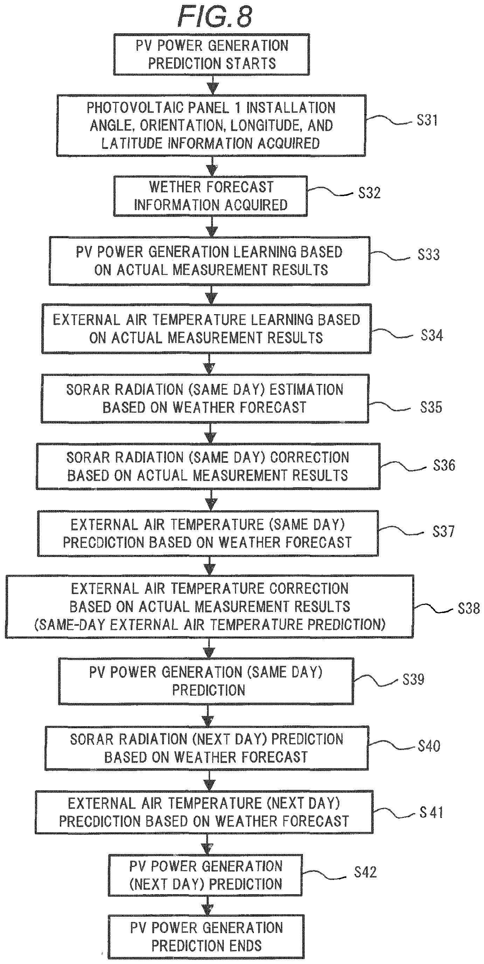

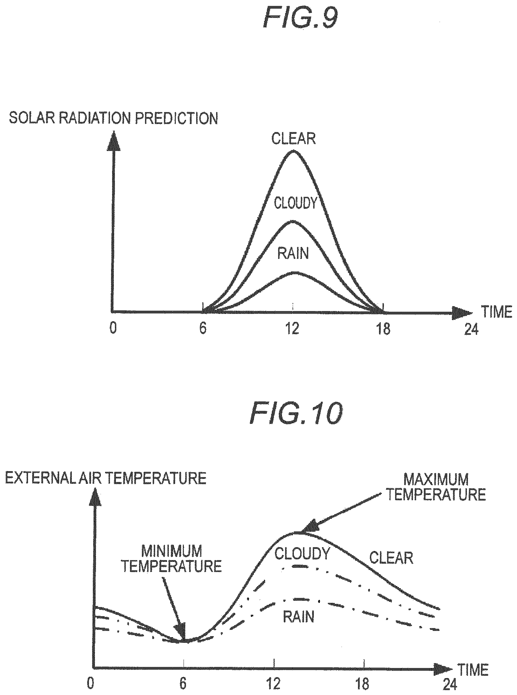

FIG. 4 and FIG. 5 are diagrams showing characteristics of the storage battery 3 used in the first embodiment of the invention, FIG. 6 is a diagram showing characteristics of the EC 5, FIG. 7 is a diagram showing a main flow when compiling an operating plan of the electrical power management device 100, FIG. 8 is a diagram showing a PV power generation prediction flow, and FIG. 9 is a diagram showing in graph form data regarding an amount of solar radiation in each weather condition calculated from an amount of PV power generation at each time stored in a database in the PV power generation learning management unit 201.

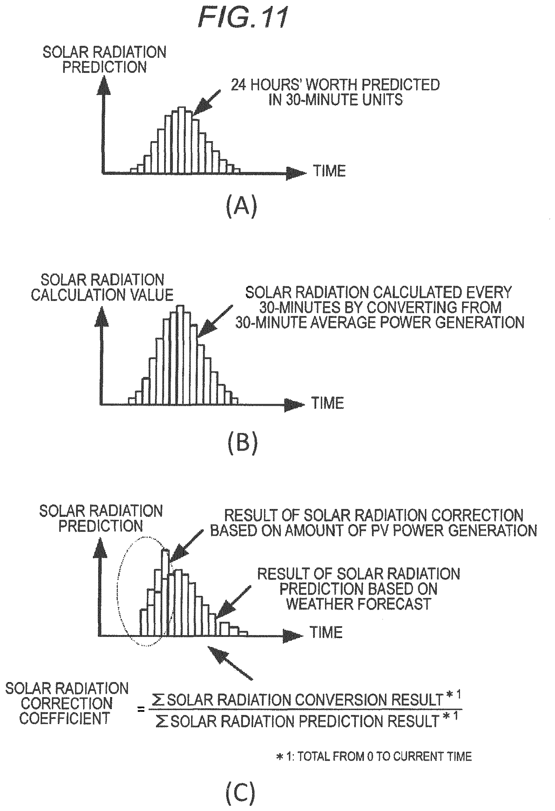

Also, FIG. 10 is a diagram showing in graph form data regarding air temperature information at each time stored in a database in the load power consumption learning management unit 200 used when predicting external air temperature using maximum air temperature and minimum air temperature information in each weather condition, FIG. 11 is a diagram for describing an operation when correcting a prediction result of solar radiation amount prediction information, predicted based on a weather forecast, based on solar radiation amount information calculated from an actually measured amount of PV power generation.

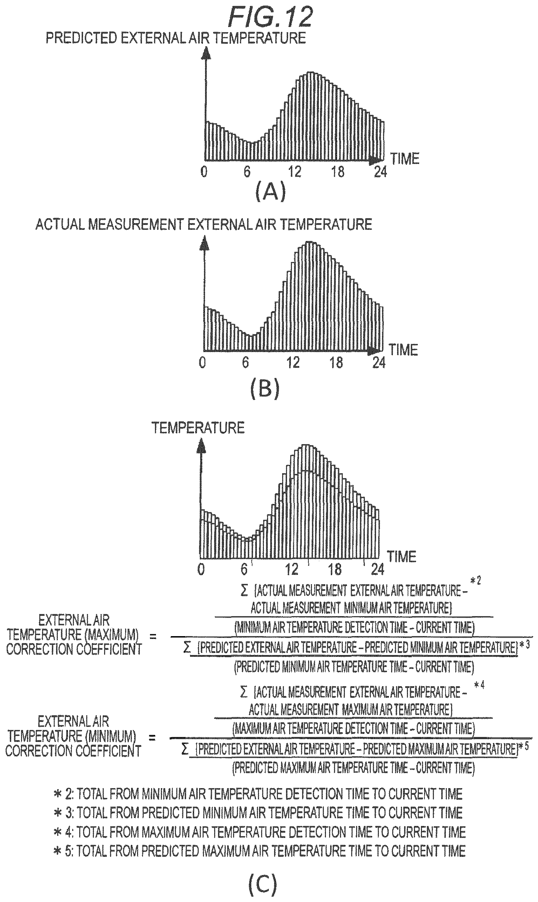

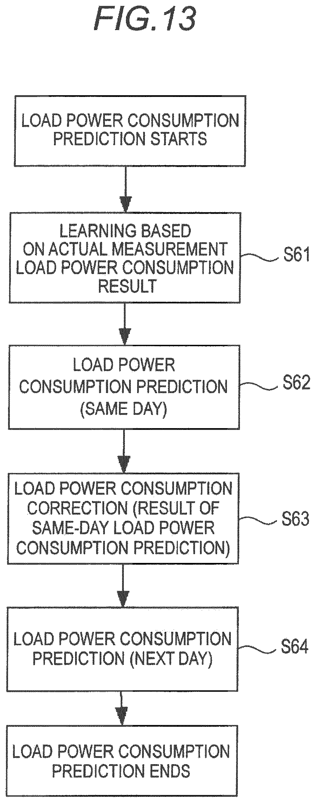

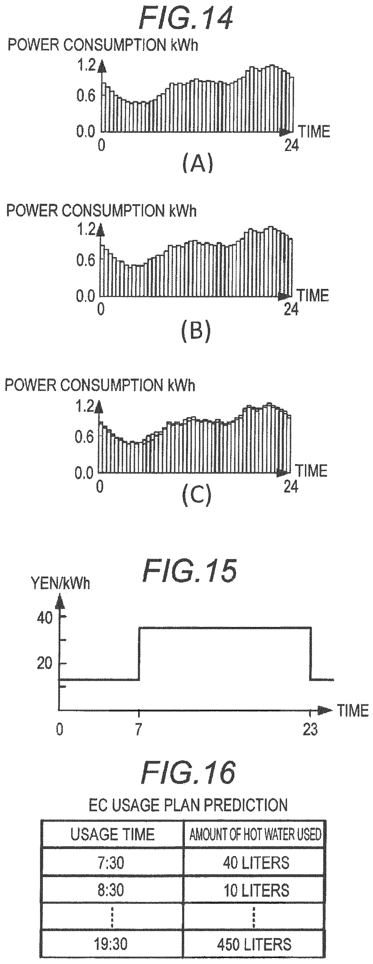

FIG. 12 is a diagram for describing an operation when correcting air temperature prediction information estimated based on a weather forecast (maximum air temperature and minimum air temperature information) based on actually measured air temperature information, FIG. 13 is a diagram showing a load power consumption prediction flow, and FIG. 14 is a diagram for describing an operation when correcting load power consumption prediction information based on actually measured load power usage information.

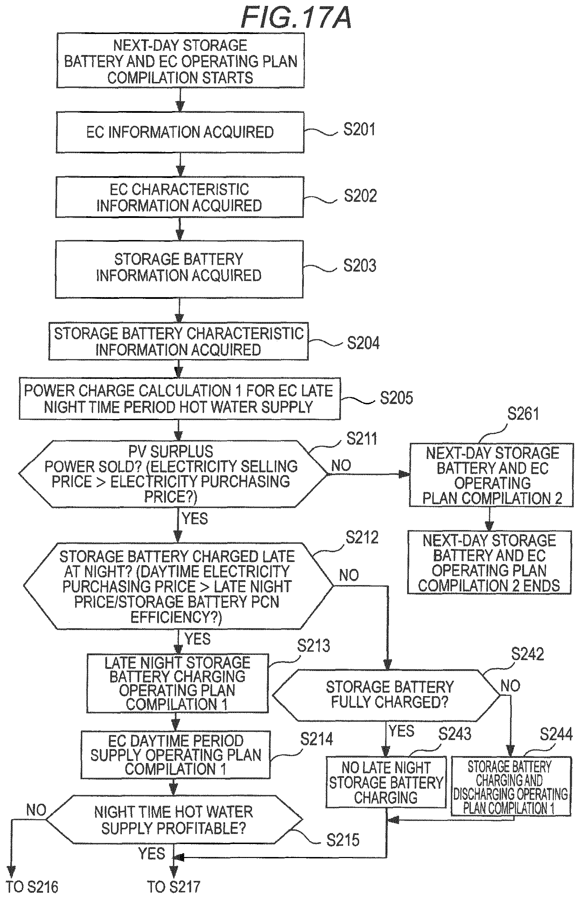

Furthermore, FIG. 15 is a diagram showing an example of an electrical power charge structure, with a horizontal axis being time and a vertical axis an electrical power charge, and a description herein takes a time period from 11 p.m. to 7 a.m. to be a late night power time period, wherein electricity can be purchased at an electrical power charge in the region of approximately one-third that of daytime power. FIG. 16 is a diagram showing an example of usage time and usage amount of hot water based on a family schedule, FIG. 17A is a diagram showing a main flow of compiling storage battery 3 and EC 5 operating plans compiled based on a previous day's weather forecast information.

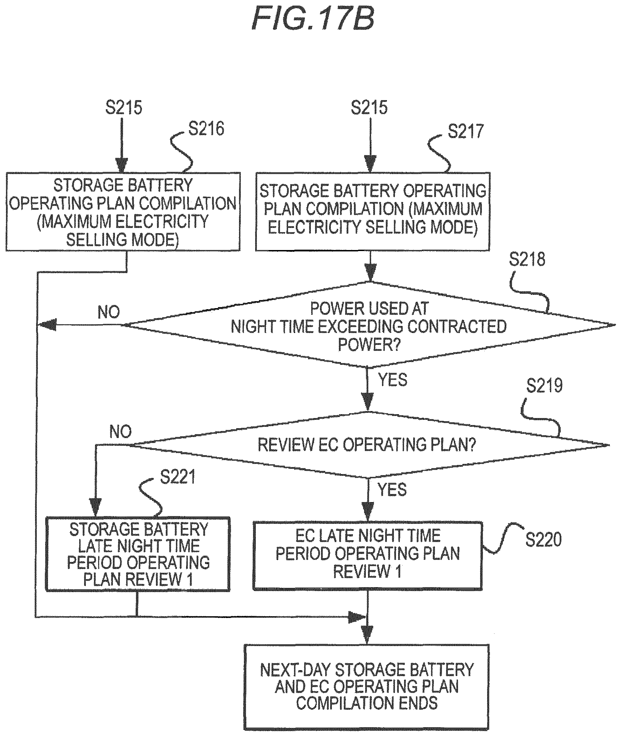

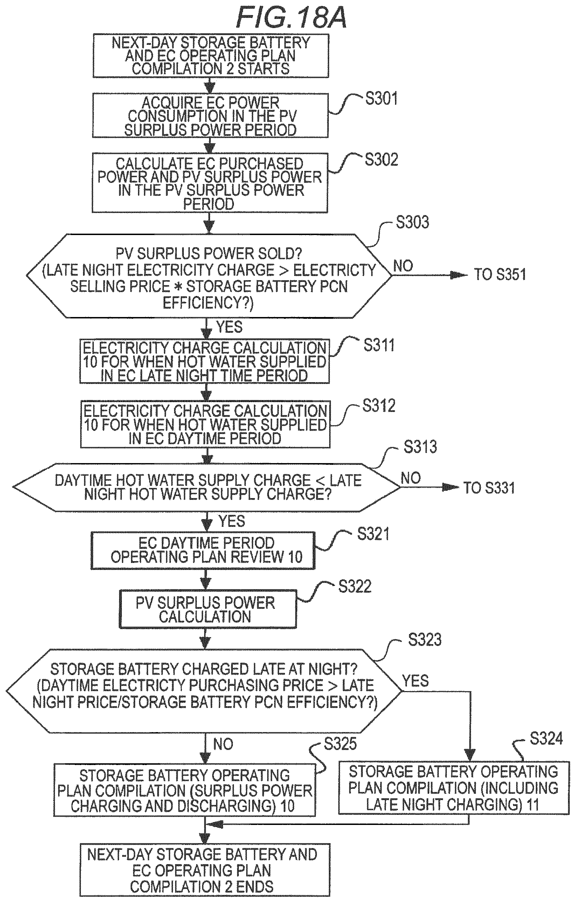

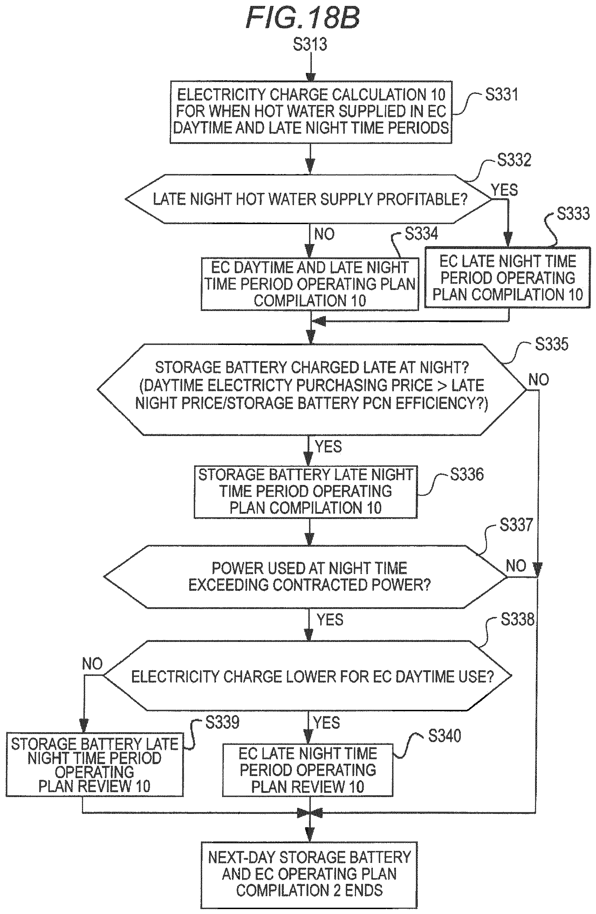

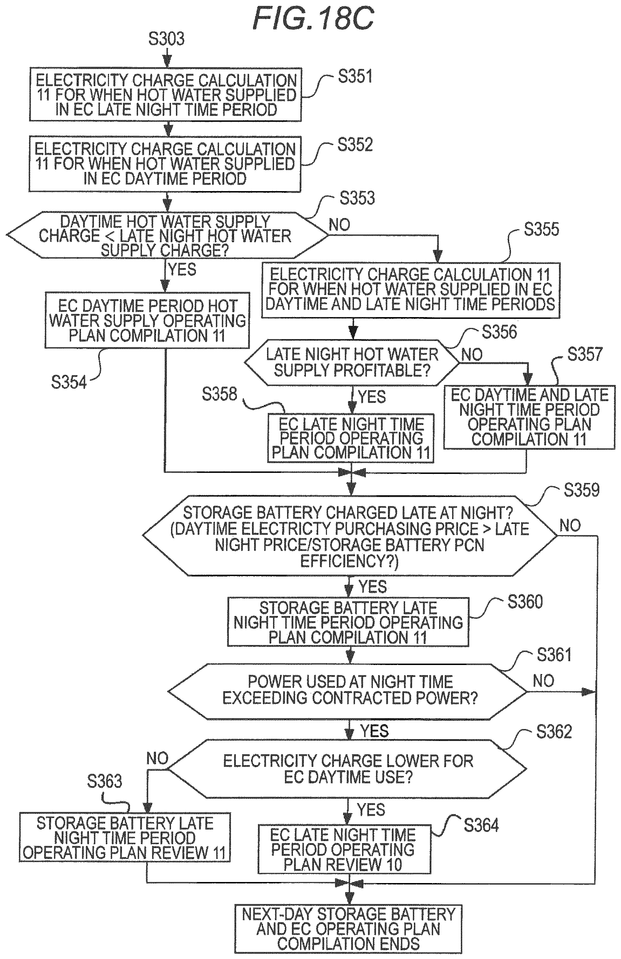

FIG. 17B is a diagram showing a sub-flow of compiling storage battery 3 and EC 5 operating plans compiled based on a previous day's weather forecast information, and FIG. 18A is a diagram showing a flow of compiling a following day's operating plan that corrects the operating plan using information such as a previous day's weather forecast information, air temperature information, an amount of PV power generation, and load power usage. FIG. 18B and FIG. 18C are diagrams showing sub-flows branching from FIG. 18A.

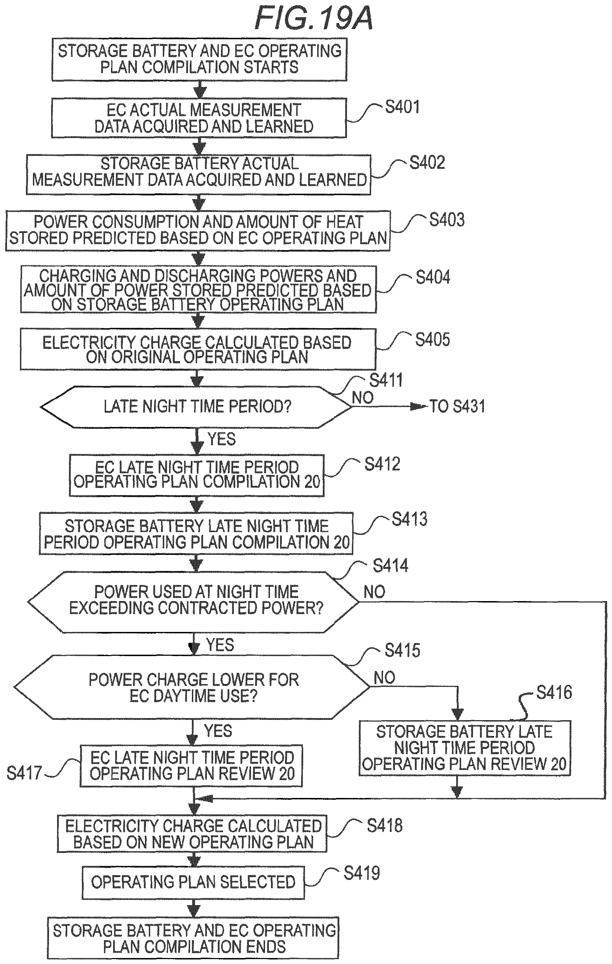

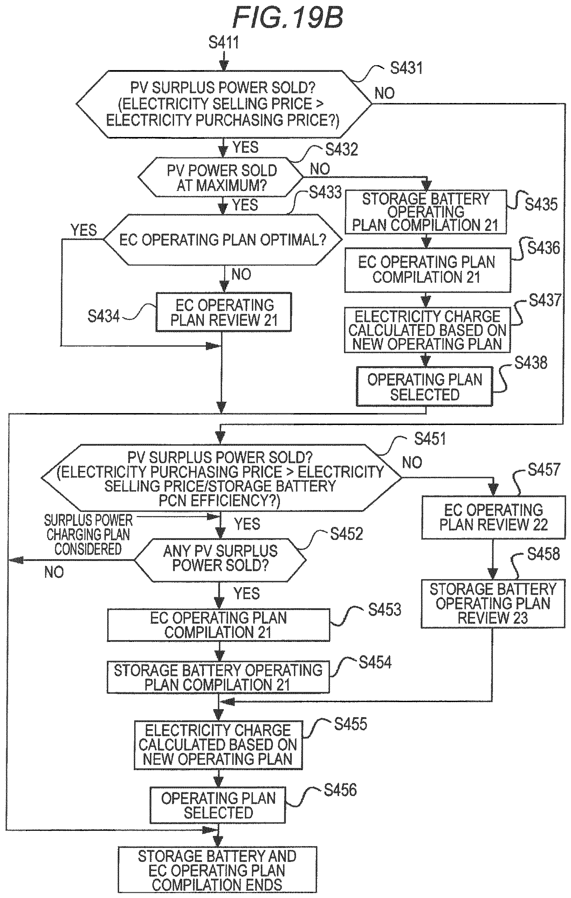

FIG. 19A is a diagram showing a sub-flow relating to formulating a same-day operating plan that corrects the operating plan using information such as same-day weather forecast information, air temperature information, an amount of PV power generation, and load power usage, and FIG. 19B is a diagram showing a sub-flow branching from FIG. 19A.

Next, a description will be given of a specific operation of the electrical power management device 100 of the first embodiment.

Firstly, various kinds of device provided on a subscriber's premises are connected via the communication network 12 to the electrical power management device 100, power of each load device, energy storing device, and energy creating device is measured by the power measuring circuit installed in the distribution panel 14, and the electrical power management device 100 is notified of a result of the measurement.

When starting-up of the electrical power management device 100 is completed, the CPU 110 issues an instruction for verification of devices connected to the device management unit 119 to be implemented. Herein, it is assumed that an Echonet Lite standard is used, and a detailed description of verifying connection with each device, and the like, will be omitted. When verification of the connection with each device is completed, the CPU 110 issues an instruction to the Echonet Lite communication I/F 113 to confirm an operating state of each device connected to the device management unit 119.

The Echonet Lite communication I/F 113, on receiving the instruction, transmits a command defined by the Echonet Lite standard to the communication network 12 so that a device instructed by the device management unit 119 notifies of an operating state thereof. On receiving the command sent to each device from the Echonet Lite communication I/F 113, each device transmits a current operating state via the communication network 12 to the Echonet Lite communication I/F 113, based on the command defined by the Echonet Lite standard. On receiving the operating state of each device, the Echonet Lite communication I/F 113 notifies the device management unit 119 of the details of the operating state. When acquisition of the operating states of all verified devices is finished, the device management unit 119 notifies the CPU 110 of the fact.

The CPU 110, on ascertaining the operating state of each device, issues an instruction to the Ethernet communication I/F unit 114 to obtain weather forecast information including air temperature prediction information from the cloud server 31. On receiving the weather forecast information acquisition instruction from the CPU 110, the Ethernet communication I/F unit 114 sends a weather forecast information transmission request to the cloud server 31. On receiving the weather forecast information transmission request, the cloud server 31 transmits weather forecast information including air temperature prediction information to the Ethernet communication I/F unit 114. On receiving the weather forecast information, the Ethernet communication I/F unit 114 notifies the CPU 110 of the fact.

Herein, it is assumed that "clear", "cloudy", "rain", or "snow" is used as weather forecast information, and maximum air temperature information and minimum air temperature information are used as air temperature prediction information. Weather information not being limited to the heretofore described four kinds, the weather information may be, other than the heretofore described four kinds, a more detailed category such as "clear, cloudy later", "cloudy, clear later", clear, rain later".

Also, although a description will be given of a case wherein maximum temperature and minimum temperature information are used as air temperature prediction information, this is not limiting. For example, by configuring so that one day's air temperature prediction data are notified of, those data may be used. The CPU 110, on obtaining the weather forecast information, issues an instruction to the operating plan compilation unit 118 to compile an operating plan.

Next, using FIG. 4 to FIG. 6, a description will be given of characteristics of the storage battery 3 (herein, a lithium ion battery is used) and EC 5 used in the first embodiment.

FIG. 4(A) is a diagram for describing characteristics of the storage battery 3, with a charging power ratio (hereafter called an SoC) shown on a horizontal axis, and a charging current shown on a vertical axis. In FIG. 4(B), in the same way, a charging time is shown on a horizontal axis and the SoC on a vertical axis, and in FIG. 4(C), the SoC is shown on a horizontal axis and a voltage output from the storage battery 3 on a vertical axis.

Generally, when an overcharge (the storage battery voltage is charged in excess of a predetermined value) or over-discharge (the storage battery voltage is discharged to or below a predetermined value) of the storage battery 3 is carried out, deterioration of the storage battery 3 advances more than necessary, and in the worst case, the storage battery 3 breaks.

In particular, when the lithium ion battery is in the vicinity of being fully charged (the SoC is in the vicinity of 1.0), the storage battery voltage rises sharply, as shown in FIG. 4(C). Also, when a current ripple of the charging current is large in the vicinity of a full charge, deterioration of the storage battery 3 sometimes advances more than necessary. Consequently, a method whereby the storage battery 3 is charged at a constant current until the storage battery voltage reaches a predetermined voltage, and charged at a constant voltage when the predetermined voltage is reached, is adopted in order to prevent an overcharge and reduce charging current ripple when charging the storage battery 3.

For example, FIG. 4(B) shows a relationship between the SoC and charging time when charging is carried out at a constant current until a storage battery voltage at which the SoC is 0.8, after which charging is carried out at a constant voltage until fully charged. Although depending on storage battery characteristics and a current magnitude for charging at a constant current, as shown in FIG. 4(B), an example is shown herein of charging characteristics when a period of charging under constant current control is 0.8 C (1 C is a current magnitude such that the storage battery 3 can be fully charged in one hour). As shown in the diagram, a time of charging under constant current control and a time of charging under constant voltage control are practically equal. Regarding discharge, unlike when charging, control switching is generally not carried out until the storage voltage battery reaches the discharge termination voltage.

Also, deterioration of the lithium ion battery normally advances at a pace commensurate with use. FIG. 5 (A) shows an example of a relationship between a charge and discharge implementation quantity and storage battery capacity when implementing full charge and full discharge. Herein, as shown in the drawing, the capacity of the storage battery 3 has decreased to in the region of one-half after charging and discharging approximately 4,000 times. Hereafter, a description will be given with a point at which the storage battery capacity drops below 50 % as a usage limit but, not being limited to the point at which the storage battery capacity drops below 50 %, the usage limit may be determined to be, for example, a storage battery residual capacity, fixed by the battery maker, at which the storage battery 3 can safely be used, or the like.

Generally, as typical causes of advancing storage battery deterioration, there are storage battery 3 cell temperature, charging and discharging currents, charge termination voltage, discharge termination voltage, storage time, and the like. For example, with regard to storage time, deterioration in a state near a full charge advances further than in a state near empty. Also, the higher the temperature, the faster the advance of deterioration. Also, with regard to charging and discharging currents too, deterioration advances further the greater the current magnitude, and the ratio of the deterioration advance depends on storage battery cell temperature.

Furthermore, the same applying to charge termination voltage and discharge termination voltage, for example, when only charging to in the region of 90 % of the capacity of an original charging power, deterioration of the storage battery 3 is less than when charging to 100 %. In the same way, the greater the residual stored power of the storage battery 3 when discharging is completed, the less the deterioration of the storage battery 3 compared with when fully discharging. Also, the state of an advance in deterioration when fully charging or fully discharging also depends heavily on storage battery cell temperature.

Furthermore, the lithium ion battery is charged with and discharges power using a chemical reaction. For example, when attempting to charge with a predetermined current (for example, 1 C) at a low temperature, the chemical reaction is unable to follow the charging current, metal lithium precipitates, and the lithium ion battery deteriorates. When repeating charging and discharging of the storage battery 3 without considering storage battery cell temperature in this way, storage battery deterioration advances more than necessary, and the storage battery 3 deteriorates before a desired usage period (for example, ten years) elapses, becoming unusable.

In order to restrict this storage battery deterioration, it is often the case that a mechanism whereby the storage battery 3 and storage battery PCN 4 are forcibly separated is contrived, such as carrying out charging and discharging in a high or low temperature state when an overcharge or over-discharge is detected by a battery management unit in the storage battery 3.

Consequently, in the first embodiment, a description will be given of a case wherein maximum values of charging and discharging currents, charge termination voltage, and discharge termination voltage, which cause deterioration of the storage battery 3, are limited based on the cell temperature of the storage battery 3 so that the storage battery 3 can be utilized for or beyond a desired usage period.

FIG. 5(B) shows a relationship between maximum charging current and SoC (storage battery voltage) at each cell temperature, and as shown in the diagram, the storage battery 3 can be charged as rated when the storage battery cell temperature is room temperature (for example, 20 °C to 25 °C). The reason for the maximum charging current being throttled when the SoC reaches 0.8 or higher is that the heretofore described storage battery 3 charge control switches from constant current control to constant voltage control.

When the cell temperature rises from room temperature, the maximum charging current gradually decreases, and the SoC (charge termination voltage) also decreases. Further, when the storage battery cell temperature exceeds 45 °C, a charging operation is forbidden. When the battery cell temperature decreases from room temperature, the maximum charging current gradually decreases, and the SoC (charge termination voltage) also decreases, as shown in the diagram. Further, when the storage battery cell temperature reaches 0 °C or lower, a charging operation is forbidden.

FIG. 5(C) shows a relationship between maximum discharging current and SoC (storage battery voltage) at each cell temperature, wherein the storage battery 3 can be discharged as rated when the storage battery cell temperature is room temperature (for example, 20 °C to 25 °C). When the SoC reaches the vicinity of 0, the maximum discharging current is abruptly throttled, becoming 0. When the cell temperature rises from room temperature, the maximum discharging current gradually decreases, and the SoC (discharge termination voltage) increases. Furthermore, when the storage battery cell temperature reaches 0 °C or lower, a discharging operation is forbidden.

Limit tables limiting the maximum values of charging and discharging currents with respect to storage battery cell temperature not being limited to those shown in FIGS. 5(B) and 5(C), it is sufficient that a table in accordance with the characteristics of the storage battery 3 used is used. Also, although a description of storage battery storage deterioration, which is a factor in storage battery deterioration, is omitted here, a limit table may be further provided so as to limit an upper limit value of maximum charging power (charge termination voltage) based on an air temperature prediction result at, for example, a time of high temperature when storage deterioration advances.

Also, a description has been given of storage battery cell temperature, maximum charging and discharging currents, charge termination voltage, discharge termination voltage, and storage deterioration as factors in advancing deterioration of the storage battery 3, but this is not limiting. For example, limit tables when charging or discharging may be switched and used in accordance with a state of deterioration (current storage battery capacity/initial storage battery capacity) of the storage battery 3. Specifically, a configuration is such that a stricter limit table is used for the storage battery 3 in which deterioration is advanced.

Next, using FIG. 6, a description will be given of characteristics of the EC 5. In FIG. 6 (A), external air temperature is shown on a horizontal axis and an energy conversion efficiency (hereafter called a COP) shown on a vertical axis. An energy conversion efficiency of the EC 5 that utilizes a heat pump cycle differs in accordance with external air temperature. For example, when heating the same amount of water of the same temperature to hot water of a predetermined temperature, two times or more the amount of power is needed when the external air temperature is 0 °C (the COP is in the region of approximately 2.7) compared to when the external air temperature is 30 °C (the COP is in the region of approximately 6). Consequently, when heating water, power consumption is lower the higher the external air temperature.

Also, as shown in FIG. 6(B), an operating point (load rate) at which the EC 5 that heats water by utilizing a heat pump cycle can operate at maximum efficiency also differs in accordance with external air temperature, load (amount of hot water), and the like. Consequently, in the first embodiment, prediction errors can be kept to a minimum by obtaining predicted values of power consumption at each time, a heating completion time, an amount of heat stored, and the like, using the external air temperature and the EC 5 characteristics shown in FIG. 6.

In the same way, when predicting power charges too, power charge prediction errors can be kept to a minimum by obtaining power consumption at each time based on the external air temperature and the characteristics shown in FIG. 6, and calculating power charges. The EC 5 characteristics not being limited to those shown in FIG. 6, it is sufficient that characteristic table data in accordance with the characteristics of the EC 5 used are used.

Next, a description will be given of a detailed operation of the operating plan compilation unit 118. In the first embodiment, the storage battery and EC operating plan compilation unit 206 shown in FIG. 3 is central, and controls the load power consumption learning management unit 200, PV power generation learning management unit 201, load power consumption prediction management unit 202, PV power generation prediction management unit 203, storage battery characteristic model 204, and EC model 205. Herein, in order to simplify the description, information supplied by rights from the storage battery and EC operating plan compilation unit 206 to each block, such as an external air temperature prediction result, is also described as being supplied from the exterior in order to facilitate understanding of connection destinations.

FIG. 7 shows a main flow relating to an operating plan compilation of the electrical power management device 100 according to the first embodiment of the invention.

In the drawing, in step S11, the operating plan compilation unit 118 firstly, on receiving an operating plan compilation instruction from the CPU 110, requests the cloud server 31 via the Ethernet communication I/F unit 114 to send a currently contracted electricity charge table, and the cloud server 31 transmits a power charge table for which a current user is contracted to the storage battery and EC operating plan compilation unit 206 in the operating plan compilation unit 118 via the Ethernet communication I/F unit 114. Selling price information of power generated in the photovoltaic panel 1 is also included in the power charge table.

On receiving the power charge table information from the cloud server 31, the storage battery and EC operating plan compilation unit 206 stores the power charge table in an unshown data storage unit. Herein, a description will be given of a case wherein the kind of charge table shown in FIG. 15 is used as the power charge table. In FIG. 15, a time period from 11 p.m. to 7 a.m. is assumed to be a late night power time period, and a power charge in the late night power time period is assumed to be an electricity charge in the region of approximately one-third that of a power charge in a daytime time period. The power charge structure is not limited to that shown in FIG. 15.

For example, as power demand is severe in summer, a charge structure such that the power charge is set high from 1 p.m. to 4 p.m., a variable electricity charge structure such that the charge structure changes from minute to minute in accordance with a current total demand, or the like, may be adopted. Also, when an incentive based on a demand response (DR) occurs, a power charge structure that takes the incentive into consideration may be adopted.

After storing the electricity charge table data received from the cloud server 31 in the data storage unit, the storage battery and EC operating plan compilation unit 206 acquires current date (month and day information), day, and time information from the time management unit 117, and stores external air temperature prediction information and weather forecast information notified of by the CPU 110 in a storage region (step S12). When the storage of these items of information is completed, the storage battery and EC operating plan compilation unit 206 issues an instruction to the PV power generation prediction management unit 203 to carry out a prediction and correction of an amount of PV power generation (step S13).

The PV power generation prediction management unit 203, on receiving the instruction, acquires information on an installation angle, installation orientation, latitude, and longitude of the photovoltaic panel 1 in accordance with a flow shown in FIG. 8 (step S31). Specifically, with regard to the photovoltaic panel 1 installation angle and installation orientation information, information input by a user when the photovoltaic panel 1 installation work is completed is stored in the ROM 111, and these data are read out. Also, longitude and latitude information is obtained from the cloud server 31. When the acquisition of each kind of information is completed, weather forecast information and air temperature prediction information (maximum temperature and minimum temperature information) is read out from the storage region in the storage battery and EC operating plan compilation unit 206 in step S32.

Regarding the weather forecast information and air temperature prediction information, the CPU 110 regularly communicates with the cloud server 31, independently from this operating plan compilation flow, and when the information has been updated, the CPU 110 downloads the information via the Ethernet communication I/F unit 114, and stores the data in a predetermined storage region. Subsequently, solar radiation is calculated from PV power generation measured by the power measuring circuit in the distribution panel 14, based on the information obtained in step S31 (step S33).

Hereafter, a description will be given of a PV power generation amount learning method (step S33).

In the first embodiment, it is assumed that a database table for each kind of weather information is provided every month as a database for solar radiation prediction. In the same way, it is assumed that a database table for each kind of weather information is provided every month as a database for air temperature prediction. A configuration may also be such that the databases for solar radiation prediction and air temperature prediction are provided every day, every week, or every season.

PV power generation measured by the power measuring circuit in the distribution panel 14 is such that an average power generation over 30 minutes is calculated in the PV power generation learning management unit 201. Further, the height of the sun is calculated based on the longitude and latitude information acquired in step S31 and the month, day, and time information acquired in step S12, and solar radiation is calculated from a result of calculating the height of the sun, and the installation orientation, installation angle, and actually measured power generation of the photovoltaic panel 1.

When the estimation of the solar radiation is completed, data are read out from a learning database based on the current month, day, and time and the weather information acquired in step S32, the learning data are corrected based on the calculated solar radiation, and the learning data are written into the learning database again. Solar radiation prediction values read out from the learning database are shown in FIG. 11 (A). In the diagram, a vertical axis shows a solar radiation prediction value, and a horizontal axis shows time. In the same way, solar radiation learning results obtained by interpolating learning data on each kind of weather ("clear", "cloudy", and "rain") stored in a learning table are shown in FIG. 9 (as three kinds of data cannot be displayed on a bar graph of 30-minute units).

In the diagram, a vertical axis shows a solar radiation prediction value, and a horizontal axis shows time. A description has been given of a case wherein a database is configured of 30-minute units, but this not being limiting, a database may also be configured of, for example, 15-minute units or 1-hour units in accordance with a memory size provided. Also, in winter, a database is compiled for "snow" too.

Next, when the PV power generation learning is completed, the PV power generation learning management unit 201 implements an update of an external air temperature learning table based on an actual measurement result (step S34). In the same way as in the case of step S33, external air temperature measured using a temperature gauge is such that an average temperature over 30 minutes is calculated in the PV power generation learning management unit 201. Subsequently, data are read out from a learning database based on the weather information acquired in step S32, the learning data are corrected based on the calculated average air temperature, and the learning data are written into the learning database again.

External air temperature prediction values read out from the learning database are shown in FIG. 12 (A). In the diagram, a vertical axis shows an external air temperature prediction value, and a horizontal axis shows time. In the same way, external air temperature learning results obtained by interpolating learning data on each kind of weather ("clear", "cloudy", and "rain") stored in a learning table are shown in FIG. 10 (as three kinds of data cannot be displayed on a bar graph of 30-minute units). In the diagram, a vertical axis shows an external air temperature prediction value, and a horizontal axis shows time. A description has been given of a case wherein a database is configured of 30-minute units, but this not being limiting, a database may also be configured of, for example, 15-minute units or 1-hour units in accordance with a memory size provided.

When the external air temperature learning based on the actual measurement result in step S34 is completed, the PV power generation learning management unit 201 notifies the PV power generation prediction management unit 203 of the fact. The PV power generation prediction management unit 203, on receiving the completion notification, reads out 24 hours' worth of data among PV solar radiation learning table data in the PV power generation learning management unit 201 from the weather forecast information and current month and day information acquired in step S32 (refer to FIG. 11A) (step S35).

Next, using solar radiation records until the current time calculated in step S33 (refer to FIG. 11(B), 24 hours' worth shown), the PV power generation prediction management unit 203 carries out a correction of the solar radiation prediction values (step S36). Specifically, the PV power generation prediction management unit 203 calculates a solar radiation correction coefficient using an operation shown in Expression 1. Σ in Expression 1 indicates a total from a start of power generation (a predicted power generation starting time in the case of a prediction) until the current time.

Solar radiation correction coefficient

$$= \Sigma \text{ Actual power generation solar radiation conversion result / } \Sigma \text{ Solar}$$
$$\text{radiation prediction result}$$
$$= 1: \text{ (time from 12 a.m. to before PV power generation start)}$$
$$\dots : \dots \text{(Expression 1)}$$

The PV power generation prediction management unit 203 carries out a correction of solar radiation based on an actual measurement result by multiplying the solar radiation correction coefficient calculated using Expression 1 by a predicted solar radiation value. Herein, a correction based on actually measured solar radiation is carried out for the following reason. That is, there are in the region of four kinds of weather forecast, those being "clear", "cloudy", "rain", and "snow", as heretofore described. Consequently, even when the weather forecast is for "clear", PV power generation differs between a blue sky with not one cloud and clear weather with a cloud ratio in the region of 75 %, because of which a minimizing of solar radiation prediction error is attempted by correcting based on an actual measurement result, as heretofore described.

When the solar radiation prediction value correction is completed, the PV power generation prediction management unit 203 implements an external air temperature prediction based on a weather forecast in step S37. Herein, the external air temperature is predicted based on weather forecast and maximum temperature and minimum air temperature forecast results, as heretofore described. Specifically, the PV power generation prediction management unit 203 reads out 24 hours' worth of data among external air temperature learning table data in the PV power generation learning management unit 201 (refer to FIG. 10), and detects a minimum air temperature and maximum air temperature from the external air temperature learning data read out.

FIG. 10 shows detected positions of minimum air temperature and maximum air temperature in a case of clear weather. Further, the whole is corrected so that the minimum air temperature and maximum air temperature at the times detected are the maximum and minimum air temperature forecast values. Specifically, the amplitude of data read out from a database is corrected so that the amplitude of (maximum air temperature - minimum air temperature) read out from the database becomes (maximum air temperature forecast value - minimum air temperature forecast value).

An offset is applied to the data after the amplitude correction so that the minimum air temperature becomes the minimum air temperature forecast value. External air temperature prediction results based on a weather forecast calculated using the heretofore described procedure are shown in FIG. 12 (A).

Next, when the external air temperature prediction based on the weather forecast is completed, the PV power generation prediction management unit 203 implements an external air temperature correction based on actual measurement results in step S38. Specifically, the PV power generation prediction management unit 203 calculates correction coefficients for maximum air temperature and minimum air temperature using operations shown in Expression (2) and Expression (3).

[Math. 1]

$$\text{External air temperature (maximum) correction coefficient} =$$

$$\frac{\dfrac{\Sigma\,\{\text{actual external air temperature} - \text{actual minimum air temperature}\}^{*2}}{(\text{minimum air temperature detection time} - \text{current time})}}{\dfrac{\Sigma\,\{\text{predicted external air temperature} - \text{predicted minimum air temperature}\}^{*3}}{(\text{predicted minimum air temperature time} - \text{current time})}}$$

$$\cdots\cdots\text{(Expression 2)}$$

\*2: total from minimum air temperature detection time to current time

\*3: total from predicted minimum air temperature time to current time

[Math. 2]

$$\text{External air temperature (minimum) correction coefficient} =$$

$$\frac{\dfrac{\Sigma\,\{\text{actual external air temperature} - \text{actual maximum air temperature}\}^{*4}}{(\text{maximum air temperature detection time} - \text{current time})}}{\dfrac{\Sigma\,\{\text{predicted external air temperature} - \text{predicted maximum air temperature}\}^{*5}}{(\text{predicted maximum air temperature time} - \text{current time})}}$$

$$\cdots\cdots\text{(Expression 3)}$$

\*4: total from maximum air temperature detection time to current time

\*5: total from predicted maximum air temperature time to current time

It is assumed that the external air temperature (maximum) correction coefficient before the minimum air temperature is detected is 1, and in the same way, that the external air temperature (minimum) correction coefficient before the maximum air temperature is detected is 1. When calculation of the maximum air temperature and minimum air temperature correction coefficients is finished, the PV power generation prediction management unit 203 multiplies the maximum air temperature forecast value and minimum air temperature forecast value by the external air temperature (maximum) correction coefficient and external air temperature (minimum) correction coefficient respectively, thereby calculating a corrected maximum air temperature value and corrected minimum air temperature value.

Further, the PV power generation prediction management unit 203 corrects the amplitude of the external air temperature prediction value so that the amplitude of (maximum air temperature forecast value - minimum air temperature forecast value) becomes (corrected maximum air temperature value - corrected minimum air temperature value), and applies an offset to the data after the amplitude correction so that the minimum air temperature becomes the corrected minimum air temperature value (refer to FIG. 12(C)). Actual external air temperature measurement values (30 minute average) measured with a temperature gauge are shown in FIG. 12(B).

When the external air temperature correction based on actual measurement values is finished, the PV power generation prediction management unit 203 predicts the same-day PV power generation based on the solar radiation correction result obtained in step S36. Specifically, the PV power generation prediction management unit 203 calculates the height of the sun based on the longitude and latitude information acquired in step S31 and the month, day, and time information acquired in step S12, and predicts the PV power generation using a result of the calculation, the attachment orientation and attachment angle of the photovoltaic panel 1, and the solar radiation correction result obtained in step S36 (step S39).

When the same-day PV power generation prediction is completed, the PV power generation prediction management unit 203 implements a next-day solar radiation prediction based on the next day's weather forecast (step S40). The next-day solar radiation prediction is such that, in the same way as when implementing the same-day solar radiation prediction in step S35, the PV power generation prediction management unit 203 reads out 24 hours' worth of data among PV solar radiation learning table data in the PV power generation learning management unit 201, based on the next day's weather forecast information. When the next-day solar radiation prediction (the reading out of data from the database) is completed, the PV power generation prediction management unit 203 implements a next-day external air temperature prediction in step S41.

Specifically, in the same way as in step S35, the PV power generation prediction management unit 203 reads out 24 hours' worth of data among external air temperature learning table data in the PV power generation learning management unit 201 based on the weather forecast, and corrects the external air temperature learning data read out from the database using the heretofore described procedure, based on the next day's maximum air temperature and minimum air temperature information.

When the next-day external air temperature prediction is finished, the PV power generation prediction management unit 203 implements a next-day PV power generation prediction in step S42. As the prediction method is the same as that in step S39, a detailed description will be omitted. When the next-day PV power generation prediction is completed, the PV power generation prediction management unit 203 notifies the storage battery and EC operating plan compilation unit 206 of the fact to finish the flow of FIG. 8, thereby finishing step S13 of FIG. 7.

When the PV power generation and external air temperature predictions and corrections are finished in step S13, the storage battery and EC operating plan compilation unit 206 issues an instruction to the load power consumption prediction management unit 202 to implement a load power consumption prediction and correction, and the flow shifts to step S14.

Hereafter, using FIG. 13 and FIG. 14, a description will be given of operations of the load power consumption prediction management unit 202 and load power consumption learning management unit 200.

On receiving the load power consumption prediction and correction implementation instruction, the load power consumption prediction management unit 202 updates a database for load power consumption prediction based on a result of actually measuring load device power consumption output from the power measuring circuit in the distribution panel 14 in step S61 shown in FIG. 13. The database for load power consumption prediction has a table for each kind of weather information for each day of the week every month. Data stored in the database cause the database to learn and hold a total load device power consumption, excepting the power consumption of the EC 5. Each connected load device may also be caused to hold a database. Also, it is assumed that an individual database is prepared in the load power consumption prediction management unit 202 for the EC 5, and a detailed description thereof will be given hereafter.

Regarding the power consumption of each load measured by the power measuring circuit in the distribution panel 14, a 30-minute average power consumption is obtained in the load power consumption learning management unit 200, and the average power consumptions of the load devices, excepting the EC 5, are added together. Further, data are read out from the learning database for load power consumption prediction based on the month, date, day, and time information acquired in step S12 and the weather information acquired in step S32, learning is carried out based on a result of adding together the calculated load device average power consumptions, and a result thereof is written into the learning database again (step S61).

One example of power consumption learning data stored in the learning database is shown in FIG. 14(A). In the diagram, a vertical axis shows power consumption, and a horizontal axis shows time. Herein, a description has been given of a case wherein the database is configured of 30-minute units, but this not being limiting, the database may also be configured of 15-minute units or 1-hour units in accordance with a memory size provided.

Next, when the load power consumption learning based on actual measurement results is completed, the load power consumption learning management unit 200 notifies the load power consumption prediction management unit 202 of the fact. The load power consumption prediction management unit 202, on receiving the finishing notification, reads out 24 hours' worth of data among the load power consumption learning table data in the load power consumption learning management unit 200 in step S62, based on the weather forecast information and current month and date and day information acquired in step S32 (refer to FIG. 14(A)). Subsequently, in step S63, the load power consumption prediction management unit 202 corrects a power consumption prediction value using power consumption records until the current time calculated in step S61 (refer to FIG. 14(B), 24 hours' worth shown). At this time, the load power consumption prediction management unit 202 refers to the family schedule.

Specifically, the load power consumption prediction management unit 202 refers to the family schedule managed by the family schedule management unit 121, and when, for example, a father is not returning home, the load power consumption prediction management unit 202 reduces the amount of water heated in the EC 5, and also reviews the power consumption of the ACN 21, lighting 23, and the like. When the power consumption correction based on the family schedule is completed using this kind of procedure, the load power consumption prediction management unit 202 implements a power consumption correction based on actual measurement values.

Specifically, the load power consumption prediction management unit 202 predicts the following power consumption based on a power consumption error going back two hours from the current time (a difference between a 2-hour average power consumption and a 2-hour predicted power consumption). An error factor when predicting power consumption is strongly linked to the weather (particularly the air temperature), in addition to the family schedule. In particular, the power consumption of air conditioning equipment such as the ACN 21 changes considerably in summer and winter. For example, when the air temperature is high or low, the time period for which the ACN 21 is used lengthens, and the difference from the external air temperature is large, because of which the power consumption also rises.

Because of this, error correction is carried out here by adding an error in the past two hours' average power consumption to the following power consumption prediction value. When predicting the power consumption, the error value is added as it is to the prediction value. As heretofore described, a power consumption error is largely due to the operating time of the EC 21, lighting 23, and the like, and an increase in the power consumption of an individual device. For example, the power consumption error is due to an increase in the power consumption of an individual device, such as the ACN 21 operating from an unscheduled time, or the power consumption of the ACN 21 being greater than expected due to the external air temperature being high (or low), because of which the configuration here is such that the average error is added. By correcting based on the family schedule and actual measurement results in this way, a load power consumption prediction error can be minimized.

Next, when the power consumption prediction value correction is completed, the load power consumption prediction management unit 202 implements a next-day power consumption prediction (step S64). The next-day power consumption prediction is such that, in the same way as when implementing the same-day power consumption prediction in step S62, the load power consumption prediction management unit 202 reads out 24 hours' worth of data among the load power consumption learning table data in the load power consumption prediction management unit 202 based on the next day's weather forecast information. As a prediction method is the same as that in step S62, a detailed description will be omitted.

When the next-day load power consumption prediction is completed, the load power consumption prediction management unit 202 notifies the storage battery and EC operating plan compilation unit 206 of the fact to finish the flow of FIG. 13, whereby step S14 of FIG. 7 is finished.

Next, when the load power consumption prediction and correction are finished, the storage battery and EC operating plan compilation unit 206 calculates surplus power (PV power generation prediction result - load power consumption prediction result) at each time from the same-day prediction results in the load power consumption prediction management unit 202 and PV power generation prediction management unit 203 (step S15). When the PV surplus power calculation is finished, the CPU 110 confirms whether the next-day weather forecast obtained in step S12 has been updated. When the next-day weather forecast has been updated, next-day storage battery 3 and EC 5 operating plans are compiled in step S17. Meanwhile, when the next-day weather forecast has not been updated, real time correction of the same-day operating plan of the storage battery 3 and EC 5 is implemented.

Hereafter, using FIG. 17A, FIG. 17B, FIG. 18A, FIG. 18B, and FIG. 18C, a description will be given of a flow of compiling the next-day storage battery 3 and EC 5 operating plans in step S17. Herein, an operating plan from 11 p.m., when power charges are in a late night power time period, until 11 p.m. the following day is compiled.

When the compilation of the next-day storage battery 3 and EC 5 operating plans is started in step S17, the storage battery and EC operating plan compilation unit 206 in the operating plan compilation unit 118 collects EC 5 information in step S201 shown in FIG. 17A. Specifically, a usage time and usage amount of hot water of the EC 5 are acquired from the family schedule management unit 121. An example of an acquired EC 5 usage plan is shown in FIG. 16. On obtaining the EC 5 usage plan, the storage battery and EC operating plan compilation unit 206 obtains a current amount of heat stored based on water temperature information. Herein, a same-day water temperature measured at a preset time by a water temperature gauge in the EC 5 is used as the water temperature for formulating the next-day EC 5 operating plan.

When the EC 5 information acquisition is completed, the storage battery and EC operating plan compilation unit 206 implements a collection of EC 5 characteristic information (step S202). Herein, the description will be continued assuming that the EC 5 characteristic information is stored in the cloud server 31. This is because, as the EC 5 is normally configured to heat water using cheap electricity in a late night time period, and to replenish an amount of heat lost by the usage time before being used, it is often the case that the EC 5 does not store characteristic data of the EC 5 itself in an interior thereof. Therefore, it is assumed here that the EC 5 characteristics are obtained from the cloud server. The acquired EC 5 information (amount of hot water used, usage time, and amount of heat stored) and EC 5 characteristic information are input into the EC model 205.

When the acquisition of the EC 5 characteristic information is completed, the storage battery and EC operating plan compilation unit 206 acquires storage battery 3 information (step S203). Specifically, the storage battery and EC operating plan compilation unit 206 acquires a result of a power storage amount prediction for 11 p.m. on the same day calculated from a same-day storage battery 3 operating plan to be described hereafter, a storage battery 3 capacity retention rate calculated at a previous day finishing time, a storage battery PCN efficiency (an efficiency obtained from loss in both the storage battery 3 and storage battery PCN 4, and a ratio of possible discharging power with respect to charging power), and storage battery 3 capacity information. Herein, the capacity retention rate will be described as a rate estimated at 11 p.m. every day from one day's storage battery 3 operation history and measurement results. As a method of calculating the capacity retention rate is not within the essence of the invention, a description will be omitted.

The CPU 110 calculates the capacity retention rate at 11 p.m. from a charging and discharging history and storage battery cell temperature of the storage battery 3 over 24 hours, and notifies the storage battery and EC operating plan compilation unit 206 thereof. Also, it is assumed that the storage battery PCN efficiency is calculated by the power measurement unit 116 from charging current, discharging current, and SoC information. The storage battery PCN efficiency calculation method not being limited to this, the efficiency may be stored in advance in the storage battery PCN 4, and acquired via the Echonet Lite communication I/F unit 113.

When the acquisition of the storage battery 3 information such as the amount of electricity stored, capacity, efficiency, and capacity retention rate is completed, the storage battery and EC operating plan compilation unit 206 acquires storage battery 3 characteristic information (step S204). Herein, the storage battery 3 characteristic information is acquired from the storage battery PCN 4 via the Echonet Lite communication I/F unit 113. In order to restrict unnecessary deterioration of the storage battery 3, it is often the case that the storage battery PCN 4 has the storage battery 3 characteristics in an unshown battery management unit in the storage battery PCN 4 or storage battery 3.

Consequently, a description will be given here of a case wherein the storage battery 3 characteristic data are acquired from the storage battery 3 main body. A configuration may also be such that storage battery characteristic information to be acquired is stored in the cloud server 31, and obtained from the cloud server 31. The storage battery 3 information and storage battery 3 characteristic information acquired in step S203 and step S204 are input into the storage battery characteristic model 204.

Next, the storage battery and EC operating plan compilation unit 206 calculates power charges by predicting power consumption when the EC 5 is caused to heat water in a late night power time period (step S205). Hereafter, a description will be given of a specific calculation method in this case.

The storage battery and EC operating plan compilation unit 206 calculates an amount of stored heat needed the next day from the EC 5 usage plan shown in FIG. 16 acquired in step S201. Specifically, the storage battery and EC operating plan compilation unit 206 calculates the amount of heat divided into an amount of heat needed for late night heating and an amount of heat needed when carrying out reheating before use.

When predicting an amount of reheating, the storage battery and EC operating plan compilation unit 206 calculates with consideration to an amount of heat lost in a hot water storage period from heating in the late night power time period being completed until starting use. When the calculation of the amount of heat needed in the late night power time period is completed, the storage battery and EC operating plan compilation unit 206 inputs necessary heat amount information and late night power time period external air temperature prediction information into the EC model 205, and issues an instruction to calculate power used in the late night power time period.

The EC model 205, on receiving the instruction, calculates power consumption backward from 7 a.m., which is the finishing time of the late night power time period. Herein, assuming that a change in external air temperature is not so great within around 30 minutes, the EC model 205 firstly obtains an average value of external air temperature prediction results from 6:30 a.m. to 7 a.m. When the external air temperature prediction average value calculation is completed, the EC model 205 obtains a load factor at which the COP is at a maximum from the average value obtained (refer to FIG. 6(B)), and calculates a 30-minute power consumption and amount of heat stored from the load factor obtained and the COP.

In the same way, the EC model 205 obtains an average air temperature from 6 a.m. to 6:30 a.m., and obtains a load factor at which the COP is at a maximum from the average air temperature obtained. Further, the EC model 205 calculates a 30-minute power consumption and amount of heat stored from the load factor obtained and the COP. The EC model 205 implements the heretofore described kind of step until the amount of heat stored exceeds the amount of heat needed. When the amount of heat stored exceeds the amount of heat needed, the EC model 205 calculates (amount of heat stored - amount of heat needed), carries out a calculation of a last heat storing time (heating time in the last 30 minutes) in proportional distribution from a result of the calculation and an amount of heat stored in the last 30 minutes, and obtains an amount of power used in the late night power time period by calculating an operation starting time at which operation of the EC 5 is to be started from the last heat storing time, and the power used in the last 30 minutes.

When the calculation of the late night power time period operating plan (heating starting time and finishing time (7 a.m.)) and power consumption is finished, the storage battery and EC operating plan compilation unit 206 calculates an amount of heat lost in the hot water storage period from a hot water usage plan shown in FIG. 16 and the external air temperature prediction results shown in FIG. 10, and devises a day time reheating operating plan.

Specifically, in order that the amount of stored heat needed can be secured before the usage time, the storage battery and EC operating plan compilation unit 206 obtains the load factor and COP from the average of 30 minutes' external air temperature prediction values using the procedure described for the late night power time period, and causes the EC model 205 to calculate the operation starting time and power used. As is also shown in the hot water usage plan shown in FIG. 16, hot water usage at, for example, 7:30 a.m. or 8:30 a.m. is such that reheating is not carried out, as little time has passed since the heating completion time. Specifically, reheating is not carried out at least until a preset operating time elapses.

Reasons for this are that an amount of increased power consumption accompanying a starting up and stopping of the EC 5 is greater than an advantage of reheating, and that starting and stopping within a short time shortens the EC 5 lifespan. When the calculation of the reheating time operating plan and power used finishes, the storage battery and EC operating plan compilation unit 206 obtains an electricity charge based on the power charge information acquired in step S11. When hot water is due to be used in the late night power time period, the storage battery and EC operating plan compilation unit 206 sets a heating starting time such that the amount of hot water needed can be secured.

Next, when the calculation of the EC 5 late night power time period operating plan and electricity charge is completed, the storage battery and EC operating plan compilation unit 206 determines from the power charge information acquired in step S11 how to treat the PV surplus power. Specifically, when the selling price of surplus power is higher than a daytime power purchasing price (in the case of "YES"), the storage battery and EC operating plan compilation unit 206 controls the energy storing device so as to give priority to selling the surplus power, as shown in step S211. Meanwhile, when the selling price of surplus power is lower than the daytime power purchasing price (in the case of "NO"), the storage battery and EC operating plan compilation unit 206 controls the energy storing device so as to actively consume the PV generated power on the subscriber's premises.

Firstly, when the selling price of surplus power is higher than the daytime power purchasing price ("YES") in step S211, actively selling the PV generated power is basically advantageous in terms of cost. Because of this, the storage battery and EC operating plan compilation unit 206 shifts to step S212, and determines whether to charge the storage battery 3 with late night power time period power. When determining this, the storage battery and EC operating plan compilation unit 206 takes the efficiency of the storage battery 3 and storage battery PCN 4 (storage battery PCN efficiency) into consideration. When charging the storage battery 3 with power from the commercial system 11 and discharging the charged power to the commercial system 11, power loss occurs. This power loss is power lost through internal resistance and the like of the storage battery 3 (loss proportional to the square of the flowing current) and power lost in the storage battery PCN 4.

Also, the power lost in the storage battery PCN 4 in particular is categorized into power lost in proportion with the square of current flowing into an unshown power conversion circuit, and power lost through connection of a switch, such as a conductor, or through a controller, such as a microcomputer, that controls the power conversion circuit. Although loss when charging or discharging the actual storage battery 3 differs in accordance with the flowing current, as heretofore described, the efficiency of the storage battery 3 will be described here as being constant, regardless of the charging or discharging current value. A result of calculating the efficiency in accordance with the flowing current value may also be used.

Therefore, compared with power input into the storage battery PCN 4 when fully charging the storage battery 3 after a full discharge of the storage battery 3 is carried out, power output from the storage battery PCN 4 to the commercial system 11 when fully discharging the storage battery 3 from a fully charged state decreases by an amount equivalent to the heretofore described efficiency. Consequently, in order to output 1 kWh of power from the storage battery PCN 4, it is necessary to purchase 1 kWh/(efficiency of storage battery PCN 4 including storage battery 3 (storage battery PCN efficiency)) from the commercial system 11, and charge the storage battery 3.

Because of this, the unit price of power purchased when discharging 1 kWh of power from the storage battery PCN 4 is (normal electricity purchasing price)/(efficiency of storage battery PCN 4 including storage battery 3 (storage battery PCN efficiency)). In FIG. 17A, the efficiency of the storage battery PCN 4 including the storage battery 3 is shown as the storage battery PCN efficiency. Also, it is assumed that the storage battery PCN efficiency takes into consideration power loss occurring both when charging and when discharging. Consequently, when a relationship is such that (daytime electricity purchasing price > late night price/storage battery PCN efficiency), there is a cost advantage in actively charging with late night power, and discharging in the daytime.

In the case of "YES" in step S212, the flow shifts to step S213, and the storage battery and EC operating plan compilation unit 206 compiles an operating plan for when charging the storage battery 3 in the late night power time period. Specifically, charging of the storage battery 3 is started at 11 p.m., which is the starting time of the late night power time period. As in the description of the storage battery 3 characteristics using FIG. 4 and FIG. 5, the storage battery 3 is shifted to constant voltage control when the SoC exceeds 0.8, because of which the maximum charging current decreases. Meanwhile, when heating the EC 5 to heat using power of the late night power time period, it is generally from 7 p.m. onward on the same day that a large amount of hot water is needed, because of which the storage battery and EC operating plan compilation unit 206 compiles an operating plan such that operation is finished at 7 a.m.,

which is when the late night power time period finishes (refer to the description of step S205). Consequently, when charging of the storage battery 3 and an EC 5 heating operation are implemented in the late night power time period, late night power time period load leveling can be achieved by controlling so that, firstly, the charging of the storage battery 3 is implemented, after which the heating of the EC 5 is implemented.

Also, the storage battery 3 is such that the maximum values of charging and discharging currents change in accordance with storage battery cell temperature. The temperature inside a frame housing the storage battery 3 rises in accordance with, in addition to external air temperature, the heretofore described storage battery 3 and storage battery PCN 4 power loss accompanying charging and discharging, because of which the extent of the rise is taken into consideration when calculating the storage battery cell temperature. At this time, the storage battery cell temperature is categorized into temperatures with a high rise and ones with a low rise, according to the disposition of the storage battery cell inside the frame.

Herein, it is assumed that the storage battery and EC operating plan compilation unit 206 compiles an operating plan based on two temperatures, one being the maximum storage battery cell temperature and one the minimum. Specifically, it is assumed that the maximum storage battery cell temperature is used when the external air temperature is high, such as in summer, and the minimum storage battery cell temperature is used when the external air temperature is low, such as in winter.

Next, in step S213, the storage battery and EC operating plan compilation unit 206 notifies the storage battery characteristic model 204 of the storage battery capacity, efficiency, capacity retention rate, and storage battery characteristic information acquired in step S203 and step S204, and instructs the storage battery characteristic model 204 to formulate an operating plan for the late night power time period. At this time, the storage battery and EC operating plan compilation unit 206 also notifies of the late night power time period external air temperature prediction results predicted in the PV power generation prediction management unit 203. The amount of storage battery charging power at 11 p.m. is notified of based on the same-day operating plan. The storage battery characteristic model 204, in the same way as the EC model 205, compiles a charging plan and charging power prediction result in 30-minute units.

In step S213, as heretofore described, the storage battery 3 is fully charged with cheap late night power of the late night power time period, and the power is used in the daytime. Consequently, the storage battery characteristic model 204 confirms the 11 p.m. air temperature prediction result, and when the confirmation is completed, the storage battery characteristic model 204 predicts maximum and minimum 11 p.m. storage battery cell temperatures from the storage battery 3 operating plan until 11 p.m. Specifically, the storage battery characteristic model 204 calculates power loss based on the operating plan, and based on a result of the calculation, calculates how many degrees the atmospheric temperature of the storage battery cell in the frame rises with respect to the external air temperature.

Further, the storage battery characteristic model 204 predicts the storage battery cell temperatures (maximum value and minimum value) by adding the calculation result and predicted external air temperature value. When the storage battery cell temperature prediction is completed, the storage battery characteristic model 204 determines from the 11 p.m. external air temperature prediction whether to use the maximum or minimum storage battery cell temperature. Herein, when the external air temperature exceeds 15 °C, the maximum storage battery cell temperature is used. Generally, frame thermal design is carried out in such a way that the rise of the storage battery cell temperature with respect to the external air temperature is kept as small as possible (maximum in the region of 15 °C). Meanwhile, in a case of 15 °C to 30 °C, the storage battery 3 is such that there is no limit on the charging and discharging currents (charging can be carried out at the rated current), because of which 15 °C is set as a boundary here. However, 15 °C is not limiting.

When the storage battery cell temperature to be used is determined, the storage battery characteristic model 204, based on the result, selects the storage battery characteristic table shown in FIG. 5(B). It is assumed that the characteristic table is compiled taking the capacity retention rate into consideration too. Specifically, it is assumed that a table fixing the maximum charging current or maximum discharging current value with respect to the SoC is compiled and provided for each storage battery cell temperature and each capacity retention rate.

The method of providing the storage battery characteristic table not being limited to this, a configuration may be such that a table main body is caused to be held in, for example, the cloud server 31, and an amount of data stored in the electrical power management device 100 reduced by downloading the characteristic table corresponding to the current capacity retention rate from the cloud server 31. Also, as the amount of data stored in the electrical power management device 100 is reduced, damage inflicted on the storage battery 3 increases, but a configuration may be such that only a table provided for each storage battery cell temperature (not changed for capacity retention rate) is used as a table fixing the maximum charging current or maximum discharging current value with respect to the SoC.

Furthermore, table data in the vicinity of a high temperature and low temperature, which are sensitive to a change in storage battery cell temperature, may be provided in, for example, 5 °C units, and only one or two representative temperatures (in the case of two, temperatures at which maximum charging and discharging currents start to change with sensitivity to a change in storage battery cell temperature) provided for a normal room temperature. With regard to a storage battery cell temperature that does not have table data, data may be obtained by a linear interpolation from preceding and subsequent table data.

When the selection of the storage battery characteristic table is completed, the storage battery characteristic model 204 determines a maximum charging current value from the SoC of the storage battery 3, and next, the storage battery characteristic model 204 calculates the maximum and minimum values of the storage battery cell temperature, for example, one minute later in a case of starting to charge at the maximum charging current. As a change in storage battery cell temperature is determined based on an amount of power loss, as heretofore described, calculation herein is carried out using a difference between an amount of heat radiated from a frame surface and an amount of heat generated due to power loss when all lost power changes to heat, and using information on the heat capacity of the frame, external air temperature, and the like.

When the calculation of the storage battery cell temperature one minute later is completed, the storage battery characteristic model 204 selects a characteristic table based on the calculated storage battery cell temperature, and obtains the maximum charging current. At this time, the storage battery characteristic model 204 adds power charged in one minute to the residual charge of the storage battery, and calculates the SoC of the storage battery 3 one minute later from a result of the addition.

Further, the storage battery characteristic model 204 calculates the storage battery cell temperature, charging power, and SoC for the next one minute by the same kind of procedure, using the previously calculated maximum charging current, and obtains the maximum charging current for the next one minute from the characteristic table. Further, the storage battery characteristic model 204 implements this kind of operation until the storage battery 3 is fully charged. Herein, 30-minute unit averages of the one-minute unit maximum charging current values, amounts of power stored, and storage battery cell temperatures obtained using the heretofore described procedure are assumed to be the storage battery operating plan.

Next, when the compilation of the storage battery 3 operating plan for the late night time period is finished, the storage battery and EC operating plan compilation unit 206 compiles an EC 5 operating plan for when carrying out EC 5 heating in the daytime period (step S214). At this time, the storage battery and EC operating plan compilation unit 206 also calculates a power charge based on the compiled operating plan. Herein, the storage battery and EC operating plan compilation unit 206 calculates the amount of power used and the electricity charge for a case of carrying out heating in a time period in which the COP of the EC 5 is at a maximum, and the external air temperature is at a maximum. When calculating, in the same way as in the case of step S205, the storage battery and EC operating plan compilation unit 206 calculates the power used and amount of heat stored from a 30-minute average air temperature of external air temperature prediction results, assuming that a change in external air temperature is not large.

The storage battery and EC operating plan compilation unit 206 issues an instruction to the EC model 205 to calculate power used when heating in the daytime. On receiving the instruction, the EC model 205 searches for the time at which the maximum daytime air temperature is observed from the external air temperature prediction information, and when the search is completed, the EC model 205 calculates a 30-minute average air temperature from that time, based on the external air temperature prediction results.

When the calculation of the average air temperature is completed, the EC model 205 obtains a load factor at which the COP is at a maximum from the average value obtained (refer to FIG. 6(B)), and calculates a 30-minute power consumption and amount of heat stored from the load factor obtained and COP. Next, the EC model 205 obtains an average air temperature for 30 minutes back from the time at which the maximum daytime air temperature is observed from the external air temperature prediction information, and obtains the load factor for which the COP is at a maximum from the obtained average air temperature. Further, the EC model 205 calculates a 30-minute power consumption and amount of heat stored from the obtained load factor and COP.

The heretofore described step is implemented, centered on the time at which the maximum daytime air temperature is observed from the external air temperature prediction information, until the amount of heat stored exceeds the amount of heat needed. When the amount of heat stored exceeds the amount of heat needed, the EC model 205 calculates (amount of heat stored - amount of heat needed), and carries out a calculation of a last heat storing time in proportional distribution from a result of the calculation and an amount of heat stored in the last 30 minutes. Further, the EC model 205 obtains an amount of power used, with a period for which this kind of operation is repeated as the daytime operating plan of the EC 5.

By compiling the EC 5 operating plan centered on a time period in which the air temperature is high, as heretofore described, there is an advantage in that the energy conversion efficiency (COP) can be increased owing to the external air temperature being high, as shown in FIG. 6 (A), whereby the amount of power used can be reduced. When hot water is used before the daytime period, as in the operating plan shown in FIG. 16, the EC 5 operating plan is compiled so that the amount of hot water used is heated in the late night power time period. Also, in the same way as in the case of step S205, when the compilation of the daytime heating operating plan is completed, the EC model 205 calculates an amount of heat lost in the hot water storage period from the hot water usage plan shown in FIG. 16. Specifically, the EC model 205 calculates an amount of heat lost from the time at which daytime heating is completed until the time at which hot water is used at night, and devises a reheating operating plan.

Next, when the formulation of the EC 5 daytime operating plan is completed, the EC model 205 notifies the storage battery and EC operating plan compilation unit 206 of the operating plan compilation result and the amount of power used at each time, and the storage battery and EC operating plan compilation unit 206 calculates the electricity charge needed for the EC 5 heating from the amount of power used and the electricity charge structure (refer to FIG. 15). Herein, when calculating the electricity charge needed, the storage battery and EC operating plan compilation unit 206 calculates for the following two cases.

In the first case, the storage battery and EC operating plan compilation unit 206 obtains the electricity charge needed by multiplying the daytime power charge and amount of power used together, based on the electricity charge structure shown in FIG. 15. In the second case, the power used when carrying out EC 5 heating in the daytime power time period is divided into PV surplus power and purchased power from a PV surplus power prediction result, excepting the power used in the EC 5.

Further, with regard to PV surplus power used, the storage battery and EC operating plan compilation unit 206 calculates the electricity charge at the surplus power selling price, calculates the purchased power at the daytime power charge based on the electricity charge structure, and obtains the electricity charge by adding the results together. The reason for obtaining the electricity charge using the second method is that power normally sold at the electricity selling price is used.

When the calculation of the electricity charge is finished, the storage battery and EC operating plan compilation unit 206 carries out a comparison to find whether the late night power time period heating in step S215 (shown as a late night hot water supply in the diagram) is advantageous in terms of electricity charge. At this time, the daytime electricity charge is compared with the power charge in the heretofore described second case. When the storage battery and EC operating plan compilation unit 206 determines as a result of the comparison that the late night hot water supply results in a loss (in the case of "NO"), the storage battery and EC operating plan compilation unit 206 shifts to step S216 shown in FIG. 17B, and formulates an operating plan for when discharging the storage battery 3. That is, the storage battery and EC operating plan compilation unit 206 compiles a storage battery 3 discharging plan such that the amount of surplus power sold is at a maximum, based on the result of predicting the surplus power in step S 15 and the result of predicting the amount of power used in the EC 5 calculated in step S214.

Specifically, the storage battery and EC operating plan compilation unit 206 calculates a next-day surplus power prediction by subtracting the amount of power used in the EC 5 calculated in step S214 from the result of predicting the next-day surplus power in step S15. Further, the storage battery and EC operating plan compilation unit 206 compiles the discharging plan in such a way that power in the storage battery 3 is discharged in a time period in which there is surplus power or a time period in which the power charge is high (for example, in a case of seasonal power charges such that the power charge is high in a specific period within the daytime period in summer only, a case in which peak shaving needs to be carried out based on a DR request (demand response), or the like).

This is because, when purchasing power from the commercial system 11 even though the PV is generating power, power that can be sold as PV surplus power is (power used by load - power purchased from commercial system 11) even when the amount of power used by the load is discharged from the storage battery 3, and not all power discharged from the storage battery 3 is sold. Meanwhile, when there is surplus power (when no power is purchased from the commercial system 11), all power discharged is selling power when the amount of power used in the load is discharged from the storage battery 3, because of which a maximum cost advantage can be obtained.

Also, although not employed here, an incentive occurs when there is a DR request, because of which the storage battery and EC operating plan compilation unit 206 compiles a storage battery 3 discharging plan such that power purchased from the commercial system 11 in a specified time period is restricted. Furthermore, when a time period-specific power charge is employed, and the power charge rises further in a time period in which power demand is particularly severe even for the daytime period, the storage battery and EC operating plan compilation unit 206 also takes this into consideration when compiling the discharging plan. Specifically, the storage battery and EC operating plan compilation unit 206 determines an order of priority for the heretofore described three cases from the case having the greatest cost advantage, and devises the storage battery 3 discharging plan based on the order of priority.

When there is still power stored in the storage battery 3 after compiling the discharging plan for a time period in which there is surplus power, the storage battery and EC operating plan compilation unit 206 selects a time period in which an amount of power that is PV generated power subtracted from purchased power is small, and compiles a discharging plan such that the storage battery 3 is fully discharged.

Hereafter, a detailed description will be given of an operation when compiling a storage battery discharging plan.

As heretofore described, the storage battery and EC operating plan compilation unit 206, on calculating a surplus power prediction including the power used in the EC 5, issues an instruction to the storage battery characteristic model 204 to compile a storage battery discharging plan. On receiving the compilation instruction, the storage battery characteristic model 204 identifies a time period in which PV surplus power is being sold from the surplus power prediction, and when the identification is completed, compiles an operating plan such that the storage battery 3 operates in a maximum electricity selling mode in the identified time period. Herein, the maximum electricity selling mode indicates a mode wherein a discharge from the storage battery 3 is carried out commensurately with the amount of power used in the load in order that practically all the power generated in the photovoltaic panel 1 can be sold.

The storage battery characteristic model 204, on identifying the time at which operation in the maximum electricity selling mode is started, simulates operations of the storage battery 3 and storage battery PCN 4 from the completion of a charging operation in the late night power time period until the time of operating in the maximum electricity selling mode. Herein, it is assumed that the storage battery 3 and storage battery PCN 4 stand by in a sleep mode wherein practically all power other than an interface unit communicating with the electrical power management device 100 is turned off, except for charging and discharging operations.

The sleep mode is a mode wherein a device is started up using a standby power of in the region of several hundred microamperes, and basically, by power loss in the storage battery 3 and storage battery PCN 4 being restricted to practically zero, heat generation in the frame is restricted too. Consequently, after the completion of the charging operation in the late night power time period, the storage battery cell is such that interior heat is radiated from the frame surface of the main body, and the storage battery cell gradually nears the external air temperature. Also, the storage battery characteristic model 204 estimates the storage battery cell temperature at the time the discharging starts from the external air temperature prediction results and amount of heat radiated.

When the storage battery cell temperature is determined, the storage battery characteristic model 204 selects the storage battery characteristic table shown in FIG. 5(C) based on a result of the determination, and next, determines the maximum discharging current value from the SoC of the storage battery 3. When the maximum discharging current value is determined, the storage battery characteristic model 204 calculates the power discharged from the storage battery 3 from the result of predicting the power consumption, including the power consumption of the EC 5, at the time, and from the efficiency when discharging the storage battery 3. The efficiency when discharging the storage battery 3 indicates the ratio of the power of the storage battery PCN 4 supplied to the commercial system 11 when discharging power from the storage battery 3 ((power supplied to commercial system 11) = (efficiency when discharging) × (power discharged from storage battery 3)). Consequently, when wishing to discharge 1kW of power to the commercial system 11, it is necessary to discharge power corresponding to 1kW/(efficiency when discharging) from the storage battery 3.

Therefore, when obtaining the discharging power from the storage battery 3 in accordance with ((result of predicting power consumption at discharge start time)/(efficiency when discharging)), the storage battery characteristic model 204 obtains the storage battery voltage from the amount of power stored by referring to FIG. 4(C), and calculates the current discharged from the storage battery 3. When the current discharged from the storage battery 3 is calculated, the storage battery characteristic model 204 compares the current with the maximum discharging current previously obtained from the characteristic table, discharges at the previously obtained discharge current when a result of the comparison is that the current is equal to or less than the maximum discharging current, and discharges at the maximum discharging current when the current exceeds the maximum discharging current.

When the discharging current value is determined, the storage battery characteristic model 204 calculates the maximum and minimum values of the storage battery cell temperature, for example, one minute later. As a change in storage battery cell temperature is determined based on an amount of power loss, as heretofore described, calculation herein is carried out using a difference between an amount of heat radiated from the frame surface and an amount of heat generated due to power loss when all lost power changes to heat, and using information on the heat capacity of the frame, external air temperature, and the like.

When the calculation of the storage battery cell temperature one minute later is completed, the storage battery characteristic model 204 selects a characteristic table based on the calculated storage battery cell temperature, and obtains the maximum discharging current. At this time, the storage battery characteristic model 204 subtracts power discharged in one minute from the residual charge of the storage battery, and calculates the SoC of the storage battery 3 one minute later from a result of the subtraction. Further, the storage battery characteristic model 204 determines the discharging current for the next one minute by the same kind of procedure, calculates the storage battery cell temperature, charging power, and SoC, and obtains the maximum discharging current for the next one minute from the characteristic table. The storage battery characteristic model 204 implements this kind of operation until the storage battery 3 is fully discharged, or until the heretofore described surplus power selling period finishes. Herein, 30-minute unit averages of the one-minute unit maximum charging current values, amounts of power stored, and storage battery cell temperatures are used.

Also, when repeatedly implementing discharging and stopping when detecting the surplus power selling period, more power than necessary is consumed, because of which it is assumed that the discharging plan is devised so that when a multiple of surplus power selling periods are detected, a period from the start of the selling period detected first until the finish when the last selling period is detected is defined as the selling period. Each period may also be treated as a selling period.

When there is power stored in the storage battery 3 even when the surplus power selling period is finished, the storage battery characteristic model 204 selects a time period in which an amount of power that is PV generated power subtracted from purchased power is small. Basically, the storage battery characteristic model 204 selects a period before or after the surplus power selling period. The selection of this period determines an extended period from the amount of power stored in the storage battery 3 and the amount of power discharged in the newly added period. When the determination of the period is finished, the discharging plan is formulated again from the time of the start of the newly set period.

As the storage battery cell temperature in accordance with the power loss changes, and the maximum discharging power changes, the formulation is carried out again. The implementation method is that, as heretofore described, the maximum discharging current value is obtained based on the characteristic table after the storage battery cell temperature at the discharge start time is calculated, the maximum discharging current value is compared with the required discharging current, and an operation determining the discharging current is repeated every minute. This operation is implemented until the storage battery 3 is fully discharged.

Next, when the formulation of the storage battery 3 discharging plan is completed, the storage battery characteristic model 204 notifies the storage battery and EC operating plan compilation unit 206 of the fact, and the storage battery and EC operating plan compilation unit 206 finishes the formulation of the storage battery 3 operating plan by combining the discharging plan with the storage battery 3 late night power time period charging plan compiled in step S213 (step S216). At this time, the EC 5 operating plan used is the operating plan formulated in step S214.

Meanwhile, when the storage battery and EC operating plan compilation unit 206 determines in step S215 that the late night hot water supply is profitable ("YES"), the storage battery and EC operating plan compilation unit 206 proceeds to step S217 shown in FIG. 17B, and formulates an operating plan for when discharging the storage battery 3. Herein, the storage battery and EC operating plan compilation unit 206 compiles a storage battery 3 discharging plan such that the amount of surplus power sold is at a maximum, based on the result of predicting the surplus power in step S15.

Specifically, the storage battery and EC operating plan compilation unit 206 compiles the discharging plan in such a way that power in the storage battery 3 is discharged in a time period in which there is surplus power, in the same way as in step S216 (the reason is the same as that in step S216). When there is still power stored in the storage battery 3 after compiling the discharging plan for a time period in which there is surplus power, the storage battery and EC operating plan compilation unit 206 selects a time period in which an amount of power that is PV generated power subtracted from purchased power is small, and compiles a discharging plan such that the storage battery 3 is fully discharged.

That is, the storage battery and EC operating plan compilation unit 206 issues an instruction to the storage battery characteristic model 204 to compile a storage battery discharging plan using the result of calculating the surplus power prediction (step S15), in the same way as in step S216, and the storage battery characteristic model 204 identifies a time period in which PV surplus power is being sold from the surplus power prediction. When the time period identification is completed, the storage battery characteristic model 204 compiles an operating plan such that the storage battery 3 operates in the maximum electricity selling mode in that time period.

The storage battery characteristic model 204, on identifying the time at which operation in the maximum electricity selling mode is started, simulates operations of the storage battery 3 and storage battery PCN 4 from the completion of a charging operation in the late night power time period until the time of operating in the maximum electricity selling mode, and the storage battery characteristic model 204 estimates the storage battery cell temperature at the time the discharging starts from the external air temperature prediction results and amount of heat radiated.

When the storage battery cell temperature is determined, the storage battery characteristic model 204 selects the storage battery characteristic table shown in FIG. 5(C) based on a result of the determination, and when the characteristic table selection is completed, determines the maximum discharging current value from the SoC of the storage battery 3. When the maximum discharging current value is determined, the storage battery characteristic model 204 calculates the power discharged from the storage battery 3 from the result of predicting the power consumption, including the power consumption of the EC 5, at the discharge start time, and from the efficiency when discharging the storage battery 3. When the power discharged from the storage battery 3 is calculated, the storage battery characteristic model 204 obtains the storage battery voltage from the amount of power stored by referring to FIG. 4(C), and calculates the current discharged from the storage battery 3.

When the current discharged from the storage battery 3 is calculated, the storage battery characteristic model 204 compares the current with the maximum discharging current previously obtained from the characteristic table, discharges at the previously obtained discharge current when a result of the comparison is that the current is equal to or less than the maximum discharging current, and discharges at the maximum discharging current when the current exceeds the maximum discharging current. When the discharging current value is determined, the storage battery characteristic model 204 calculates the maximum and minimum values of the storage battery cell temperature, for example, one minute later. As a change in storage battery cell temperature is determined based on an amount of power loss, as heretofore described, calculation herein is carried out based on a difference between an amount of heat radiated from the frame surface and an amount of heat generated due to power loss when all lost power changes to heat, and on information on the heat capacity of the frame, external air temperature, and the like.

When the calculation of the storage battery cell temperature one minute later is completed, the storage battery characteristic model 204 selects a characteristic table based on the calculated storage battery cell temperature, and obtains the maximum discharging current. At this time, the storage battery characteristic model 204 subtracts power discharged in one minute from the residual charge of the storage battery, and calculates the SoC of the storage battery 3 one minute later from a result of the subtraction. Further, the storage battery characteristic model 204 determines the discharging current for the next one minute by the same kind of procedure, calculates the storage battery cell temperature, charging power, and SoC, and obtains the maximum discharging current for the next one minute from the characteristic table. The storage battery characteristic model 204 implements this kind of operation until the storage battery 3 is fully discharged, or until the heretofore described surplus power selling period finishes. Herein, 30-minute unit averages of the one-minute unit maximum charging current values, amounts of power stored, and storage battery cell temperatures are used.

In step S217 too, in the same way as in step S216, it is assumed that the discharging plan is devised so that when a multiple of surplus power selling periods are detected, a period from the start of the selling period detected first until the finish when the last selling period is detected is defined as the selling period. When there is power stored in the storage battery 3 even when the surplus power selling period is finished, the storage battery characteristic model 204 detects a time period in which an amount of power that is PV generated power subtracted from purchased power is small.

Basically, the storage battery characteristic model 204 selects a period before or after the surplus power selling period. The selection of this period determines an extended period from the amount of power stored in the storage battery 3 and the amount of power discharged in the newly added period. When the determination of the period is finished, the discharging plan is formulated again from the time of the start of the newly set period.

The implementation method is that, as heretofore described, the maximum discharging current value is obtained based on the characteristic table after the storage battery cell temperature at the discharge start time is calculated, the maximum discharging current value is compared with the required discharging current, and an operation determining the discharging current is repeated every minute. This operation is implemented until the storage battery 3 is fully discharged.

Next, when the compilation of the storage battery 3 discharging plan is completed, the storage battery characteristic model 204 notifies the storage battery and EC operating plan compilation unit 206 of the fact, and the storage battery and EC operating plan compilation unit 206 finishes the formulation of the storage battery 3 operating plan by combining the discharging plan with the storage battery 3 late night power time period charging plan compiled in step S213. At this time, the EC 5 operating plan used is the operating plan for when supplying hot water late at night formulated in step S205.

When step S217 is finished, the storage battery and EC operating plan compilation unit 206 calculates the total of the late night power time period storage battery 3 charging power, the power used in the EC 5, and the power used in the load for each time unit, and calculates whether the total is exceeding the contracted power (step S218). When a result of the calculation is that the total is not exceeding the contracted power (in the case of "NO"), the storage battery and EC operating plan compilation unit 206 finishes the formulation of the storage battery 3 and EC 5 operating plans. When a result of the calculation is that the total is exceeding the contracted power, the storage battery and EC operating plan compilation unit 206 determines in step S219 whether to review the EC 5 operating plan.

Specifically, the storage battery and EC operating plan compilation unit 206 confirms the size of a power shortage in a time period for which the contracted power is being exceeded, and when operation can be carried out within a load factor range uniquely determined in order to operate the EC 5 efficiently, reviews the late night power time period EC 5 operating plan (step S220). Meanwhile, when the size of the power shortage in the time period for which the contracted power is being exceeded cannot be covered within the load factor range uniquely determined in order to operate the EC 5 efficiently, the storage battery and EC operating plan compilation unit 206 reviews the storage battery 3 operating plan.

When the storage battery and EC operating plan compilation unit 206 determines in step S219 to review the EC 5 operating plan, the flow shifts to step S220, the storage battery and EC operating plan compilation unit 206 determines a load factor such that the contracted power is not exceeded and the COP, which is determined by the EC 5 characteristics, is in the vicinity of a maximum, as heretofore described, and formulates the EC 5 operating plan using the procedure described in step S205.

At this time, the storage battery and EC operating plan compilation unit 206 formulates the operating plan assuming that an amount of heat storage that cannot be covered in the late night power time period is implemented at a time of reheating when using hot water. Meanwhile, when determining "NO" in step S219, the storage battery and EC operating plan compilation unit 206 compiles the storage battery 3 operating plan using the procedure described in step S213, so that charging can be carried out within a range not exceeding the amount of contracted power. At this time, the storage battery and EC operating plan compilation unit 206 devises the operating plan assuming that there is a limit on power supplied from the commercial system 11 as well as on the storage battery characteristics.

Next, when determining "NO" in step S212 shown in FIG. 17A, the storage battery and EC operating plan compilation unit 206 confirms in step S242 whether the storage battery is fully charged (equal to or higher than an amount of power deemed in advance to be necessary as an emergency power supply). Although charging the storage battery 3 with late night power time period power represents a loss in terms of cost, the flow envisages a case wherein charging in the late night power time period is better when thinking of the storage battery 3 as an emergency power supply. In the case of "YES" in step S242, the storage battery and EC operating plan compilation unit 206 shifts to step S217 without carrying out charging in the late night power time period, as the storage battery is fully charged.

Meanwhile, in the case of "NO", the storage battery and EC operating plan compilation unit 206 compiles a charging plan (although a charging and discharging operating plan is shown in the drawing) in step S244 for charging the storage battery 3 with late night power. As heretofore described, categorization of the storage battery 3 as an emergency power supply in a time of disaster is dominant, because of which the storage battery and EC operating plan compilation unit 206 compiles the charging plan using the procedure shown in step S213 so that a preset amount of charging power is secured.

Next, when the selling price of PV surplus power is lower than the purchasing price in step S211 (in the case of "NO"), the storage battery and EC operating plan compilation unit 206 implements a next-day storage battery 3 and EC 5 operating plan compilation 2 of step S261. A detailed flow of the storage battery and EC operating plan compilation 2 will be described using FIG. 18A, FIG. 18B, and FIG. 18C.

Firstly, when the operating plan 2 flow is started, the storage battery and EC operating plan compilation unit 206, in step S310, obtains a time period for which PV surplus power is generated from a result of predicting the amount of PV power generation and a result of predicting load power consumption excluding the EC 5, and compiles the EC 5 operating plan using the procedure shown in step S214 from the result obtained. In step S214, the operating plan is compiled based on the time period for which the external air temperature is at a maximum, but step S301 differs in that the operating plan is compiled based on the time period for which surplus power is generated. When calculating, the storage battery and EC operating plan compilation unit 206, in the same way as in the case of step S214, calculates the power used and amount of heat stored from the 30-minute average temperature of the external air prediction results, assuming that the change in external air temperature is not so great.

The storage battery and EC operating plan compilation unit 206 issues an instruction to the EC model 205 to calculate power used in a surplus power time period. Also, the surplus power time period is predicted by subtracting the result of predicting load power consumption excluding the EC 5 from the result of predicting the amount of PV power generation, as heretofore described. At this time, it may happen that a multiple of time periods for which surplus power is generated are detected, but in this case, it is assumed that a period from the start of the surplus power generation period detected first until the finish when the last surplus power generation period is detected is defined as the surplus power generation time period. Each period may also be treated as a surplus power generation time period.

On detecting the surplus power generation time period using the heretofore described procedure, the storage battery and EC operating plan compilation unit 206 issues an instruction to the EC model 205 to calculate the power consumption and amount of heat stored with the surplus power generation time period as the operating time. The EC model 205, on receiving the instruction, starts a prediction of the power consumption and amount of heat stored based on the external air temperature prediction information.

Specifically, in the same way as in step S214, the EC model 205 calculates a 30-minute average air temperature from the operation starting time, based on the external air temperature prediction results, and obtains a load factor at which the COP is at a maximum from the average value obtained (refer to FIG. 6(B)). The EC model 205 calculates a 30-minute power consumption and amount of heat stored from the load factor obtained and COP. Next, the EC model 205 obtains a 30-minute average air temperature, obtains a load factor at which the COP is at a maximum from the average temperature obtained, and calculates a 30-minute power consumption and amount of heat stored from the load factor obtained and COP.

The EC model 205 implements this kind of operation for the surplus power generation time period. When the amount of heat stored exceeds the amount of heat needed, the EC model 205 calculates (amount of heat stored - amount of heat needed), and carries out a calculation of a last heat storing time in proportional distribution from a result of the calculation and an amount of heat stored in the last 30 minutes. Further, the EC model 205 obtains an amount of power used, with a period for which this kind of operation is repeated as the operating plan of the EC 5 surplus power generation time period.

By compiling the EC 5 operating plan centered on a time period in which the air temperature is high, as heretofore described, there is an advantage in that the energy conversion efficiency (COP) can be increased owing to the external air temperature being high, as shown in FIG. 6 (A), whereby the amount of power used can be reduced. When hot water is used before the surplus power generation time period, as in the operating plan shown in FIG. 16, the EC 5 operating plan is compiled so that the amount of hot water used is heated in the late night power time period.

Meanwhile, when the water heating is not completed in the surplus power generation time period, the operating plan is compiled so that the lacking amount of stored heat is created in the late night time period. At this time, the EC model 205 calculates an amount of heat lost in the hot water storage period until the start of heating, and devises the operating plan so that this amount of heat too is created in the late night time period. When the compilation of the surplus power generation time period heating operating plan is completed, the EC model 205 calculates an amount of heat lost in the hot water storage period from the hot water usage plan shown in FIG. 16.

Specifically, the EC model 205 calculates the amount of heat lost from the time at which the surplus power generation time period heating is completed until the time at which hot water is used at night, and devises a reheating operating plan. When compiling the operating plan, the power used and amount of heat stored may be obtained by calculating in 30-minute units before and after a time period in which the surplus power peaks.

Next, when the formulation of the EC 5 surplus power generation time period operating plan is finished using the heretofore described procedure, the EC model 205 notifies the storage battery and EC operating plan compilation unit 206 of the operating plan compilation result and the amount of power used at each time, and the storage battery and EC operating plan compilation unit 206, in step S302, calculates the PV surplus power in the PV surplus power time period, and the amount of EC 5 power to be purchased in that time period. At this time, regarding the surplus power, the storage battery and EC operating plan compilation unit 206 calculates the amount of charging power, and also the amount of surplus power when there is still surplus power after charging, assuming that the storage battery 3 is in a fully-discharged state. Further, in step S303, the storage battery and EC operating plan compilation unit 206 calculates (late night power charge > selling price × storage battery PCN efficiency), and determines whether using the PV surplus power by charging the storage battery 3 is more profitable than charging the storage battery 3 with the late night power.

In the case of "YES" in step S303 (when prioritizing charging the storage battery 3 with the PV surplus power), the flow shifts to step S311, and the storage battery and EC operating plan compilation unit 206, firstly, issues an instruction to the EC model 205 to compile an operating plan for when causing the EC 5 to operate in the late night power time period using the procedure of step S205. On receiving the instruction, the EC model 205 formulates an operating plan such that heating is completed at 7 a.m. using the procedure of step S205. As a specific operating plan compilation procedure is the same as that described in step S205, a detailed description will be omitted.

When the compilation of the EC 5 late night power time period operating plan is finished, the EC model 205 notifies the storage battery and EC operating plan compilation unit 206 of a heating starting time and finishing time, and power consumption and an amount of heat stored at each time (also including reheating in the daytime period). The storage battery and EC operating plan compilation unit 206, on receiving the notification, calculates the electricity charge (a total of the late night power time period and daytime period) based on the power charge structure shown in FIG. 15.

At this time, the storage battery and EC operating plan compilation unit 206 calculates a power charge at which a user profits from (charging power × storage battery PCN efficiency × daytime electricity purchasing price) for the power with which the storage battery 3 is determined to be chargeable in step S302. In the same way, the storage battery and EC operating plan compilation unit 206 calculates a power charge at which the user profits using (amount of power sold × electricity selling price) for the sold power with which the storage battery 3 could not be charged. Further, the storage battery and EC operating plan compilation unit 206 calculates the electricity charge the user is to pay, which is the electricity charge at which the user profits (the power with which the storage battery 3 is once charged and the surplus power sold) subtracted from the EC 5 electricity charge.

When step S311 is finished, the storage battery and EC operating plan compilation unit 206 calculates the electricity charge for when heating of the EC 5 is carried out in the PV surplus power time period based on the results calculated in step S301 and step S302. Specifically, the storage battery and EC operating plan compilation unit 206 divides the power used when heating of the EC 5 is carried out in the surplus power generation time period into a PV surplus power portion and a purchased power portion, calculates the purchased power only using the daytime power charge based on the electricity charge structure, and obtains the electricity charge by adding the results together.

The storage battery and EC operating plan compilation unit 206 calculates the electricity charge for power used outside the surplus power time period based on the electricity charge structure at the time. Also, when further surplus power is generated by the EC 5 being operated, the amount of charging power is obtained by the storage battery 3 once being charged with the surplus power, and when further surplus power is generated, the surplus is sold. Herein, the storage battery and EC operating plan compilation unit 206 calculates a power charge at which the user profits from (charging power × storage battery PCN efficiency × daytime electricity purchasing price) for the power with which the storage battery 3 is determined to be chargeable.

In the same way, the storage battery and EC operating plan compilation unit 206 calculates a power charge advantageous to the user using (amount of power sold × electricity selling price) for the sold power with which the storage battery 3 could not be charged, and calculates the electricity charge the user is to pay, which is the electricity charge at which the user profits (the power with which the storage battery 3 is once charged and the surplus power sold) subtracted from the EC 5 electricity charge.

When step S312 is finished, the storage battery and EC operating plan compilation unit 206 compares the electricity charge when supplying hot water in the daytime and the electricity charge when supplying hot water at night from the results of step S311 and step S312, and determines which is more profitable (step S313). When the storage battery and EC operating plan compilation unit 206 determines that the daytime hot water supply is more profitable (the case of "YES"), the flow shifts to step S321, and the storage battery and EC operating plan compilation unit 206 compiles an EC 5 daytime operating plan.

Specifically, the storage battery and EC operating plan compilation unit 206 calculates the electricity charge when the amount of hot water supplied late at night is supplied in the daytime with respect to the operating plan obtained in step S301, employs the cheaper electricity charge, and adopts this for the operating plan. When the formulation of the EC 5 operating plan is completed, the storage battery and EC operating plan compilation unit 206 obtains the PV surplus power (including power used in the EC 5 as the load power consumption) (step S322).

Next, in step S323, the storage battery and EC operating plan compilation unit 206 calculates the daytime period electricity purchasing price and (late night power time period electricity purchasing price/storage battery PCN efficiency), and determines whether charging the storage battery 3 with late night power and discharging in the daytime period is profitable. When determining that late night charging is profitable (the case of "YES"), the flow shifts to step S324, and the storage battery and EC operating plan compilation unit 206 compiles a storage battery 3 charging plan for the late night power time period. Specifically, the storage battery and EC operating plan compilation unit 206 issues an instruction to the storage battery characteristic model 204 to compile a charging plan for the PV surplus power used for charging in the daytime surplus power time period calculated in step S322.

The storage battery characteristic model 204, on receiving the instruction, predicts the storage battery cell temperature based on the external air temperature prediction results and the charging current, obtains a maximum value of the charging current based on the predicted storage battery cell temperature information and the storage battery characteristics shown in FIG. 5(B), and compiles a surplus power charging plan. When compiling, the storage battery characteristic model 204 determines based on an amount of power in a latter half portion of the surplus power time period set in step S301 and the maximum charging current (determined based on the external air temperature prediction results) when the storage battery 3 moves to rated voltage charging.

Herein, the storage battery characteristic model 204 compiles the operating plan so that the storage battery 3 is fully charged by the finish of the surplus power time period. The compilation of the operating plan not being limited to that heretofore described, the operating plan may be compiled so that, for example, all the PV surplus power can be used for charging, taking the storage battery 3 charging and discharging characteristics into consideration, or the operating plan may be compiled so that selling surplus power is allowed, and the user's power charge is minimal. When a purchase of electricity from the commercial system 11 in the surplus power time period occurs when compiling the operating plan, the storage battery characteristic model 204 compiles the operating plan so that electricity is discharged from the storage battery 3, and no purchase of electricity from the commercial system 11 is carried out.

When the amount of power charged until the surplus power time period is determined using the heretofore described procedure, the storage battery and EC operating plan compilation unit 206 calculates power purchased from the late night power time period finishing until the surplus power time period is reached. Further, the storage battery and EC operating plan compilation unit 206 issues an instruction to the storage battery characteristic model 204 to compile the operating plan so that, as far as possible, no purchase of electricity occurs in the time period, and compiles a storage battery 3 discharging plan based on the external air temperature prediction results and the storage battery characteristics shown in FIG. 5(C).

Specifically, the storage battery and EC operating plan compilation unit 206 predicts the storage battery cell temperature based on the external air temperature prediction results and the discharging current, obtains a maximum value of the discharging current based on the predicted storage battery cell temperature information and the storage battery characteristics shown in FIG. 5(C), and compiles a discharging plan for a period until the surplus power time period. When compiling the discharging plan, the storage battery and EC operating plan compilation unit 206 determines a maximum value of an amount of power charged in the late night time period so as to be equal to or less than the amount of power stored at the start of the surplus power time period (the maximum amount of charging power needed in order to charge with the surplus power scheduled for charging) when the surplus power time period finishes.

When the late night power time period maximum charging power is determined, the storage battery and EC operating plan compilation unit 206 instructs the storage battery characteristic model 204 to compile an operating plan, and firstly, compiles a late night power time period charging plan. The late night power time period charging plan differs from step S213 only in the amount of charging power, and control is the same, because of which a detailed description will be omitted.

Next, the storage battery and EC operating plan compilation unit 206 once more compiles a discharging plan for the period from the late night power time period finishing until the surplus power time period starts, and when the compilation of the discharging plan for the period until the surplus power time period starts is completed, the storage battery and EC operating plan compilation unit 206 compiles a discharging plan for a period from the surplus power time period starting until the late night power time period. At this time, the storage battery and EC operating plan compilation unit 206 also obtains the PV surplus power sold. When step S324 is finished, the storage battery and EC operating plan compilation unit 206 finishes the compilation of the next-day storage battery 3 and EC 5 operating plans.

Meanwhile, when determining "NO" in step S323, the flow shifts to step S325, and the storage battery and EC operating plan compilation unit 206 compiles a charging and discharging plan for after the surplus power time period.

Specifically, the storage battery and EC operating plan compilation unit 206 issues an instruction to the storage battery characteristic model 204 to compile a plan for charging with PV surplus power and discharging to the load to be implemented after the daytime surplus power time period calculated in step S322. The storage battery characteristic model 204, on receiving the instruction, predicts the storage battery cell temperature based on the external air temperature prediction results and the charging current, obtains a maximum value of the charging current based on the predicted storage battery cell temperature information and the storage battery characteristics shown in FIG. 5(B), and compiles a surplus power charging plan.

At this time, the storage battery characteristic model 204 compiles the operating plan assuming that the storage battery 3 is in a state wherein discharging is fully completed. When a purchase of electricity from the system in the surplus power time period occurs when compiling the operating plan, the storage battery characteristic model 204 compiles the operating plan so that electricity is discharged from the storage battery 3 when an amount of power is stored, and no purchase of electricity from the commercial system 11 is carried out. When a discharge is carried out, the storage battery characteristic model 204 obtains a maximum discharging current from the result of predicting the storage battery cell temperature and the storage battery characteristics, and compiles the operating plan.

At this time, the storage battery characteristic model 204 also obtains the PV surplus power sold. A plan may also be such that only charging of the storage battery 3 is implemented in the surplus power time period, and discharging is implemented between the surplus power time period finishing and the late night power time period starting. When step S325 is finished, the storage battery and EC operating plan compilation unit 206 finishes the compilation of the next-day storage battery 3 and EC 5 operating plans.

When it is determined in step S313 that supplying hot water at night is profitable ("NO), the flow shifts to step S331 shown in FIG. 18B, and the storage battery and EC operating plan compilation unit 206 compiles in accordance with the EC 5 operating plan when PV surplus power is used in the daytime period, and a lacking amount of stored heat is created to heat in the late night power time period. Specifically, for the time period when the heating can be carried out using the PV surplus power without the purchased power, the operating plan is compiled so that the heating is carried out during the daytime period. At this time, the stored heat is also calculated.

When the PV surplus power is generated, the surplus is sold. For the stored heat lacked in the PV surplus power, the heating is carried out in the late night power time period. Specifically, in addition to the lacking amount of heat, the storage battery and EC operating plan compilation unit 206 calculates the amount of heat lost from the completion of heating using late night power until the start of heating using surplus power, and assumes that this amount of stored heat is also created in the late night power time period. As the late night power time period heating plan is the same as that described in step S205 excepting only that the targeted amount of stored heat differs, a detailed description will be omitted. Also, lastly, power used when reheating before using is also obtained.

When the compilation of the operating plan in the EC model 205 is finished, the storage battery and EC operating plan compilation unit 206 calculates the EC 5 electricity charge, including power used when reheating in the daytime period. At this time, the storage battery 3 is once charged with PV surplus power, the PV surplus power is multiplied by the storage battery PCN efficiency, and a reduction in the electricity charge is obtained by multiplying the result of the multiplication by the daytime period electricity charge. When the calculation in step S331 of the electricity charge utilizing the EC 5 daytime surplus power is completed, the flow shifts to step S332, and the storage battery and EC operating plan compilation unit 206 compares the electricity charge with the electricity charge calculated in step S311.

When a result of the comparison indicates that heating in the late night power time period is profitable (in the case of "YES"), the flow shifts to step S333, and the storage battery and EC operating plan compilation unit 206 compiles an EC 5 late night heating plan. As a compilation method is the same as that in step S205, a detailed description will be omitted.

Meanwhile, when determining "NO" in step S332, the flow shifts to step S334, and the storage battery and EC operating plan compilation unit 206 compiles an EC 5 heating plan utilizing the daytime and late night time periods. Specifically, the storage battery and EC operating plan compilation unit 206 uses the operating plan compiled in step S331 for the electricity charge calculation unchanged. When the process in step S333 or step S334 is finished, the storage battery and EC operating plan compilation unit 206 determines in step S335 whether charging the storage battery 3 late at night is better. Specifically, the storage battery and EC operating plan compilation unit 206 determines using the condition (daytime charge > late night charge/storage battery PCN efficiency).

When determining "NO" in step S335, the compilation of the next-day storage battery 3 and EC 5 operating plans is finished, but when determining "YES", the storage battery 3 is charged with late night power. Specifically, the storage battery and EC operating plan compilation unit 206, based on the EC 5 operating plan compiled above, calculates PV surplus power by subtracting load power consumption, including EC 5 power consumption, from the amount of PV power generated, and calculates the amount of power stored in the late night time period from a result of the calculation. The calculation is implemented in the storage battery characteristic model 204.

Herein, the amount of power that can be stored is calculated from the total amount of PV surplus power. Further, the storage battery and EC operating plan compilation unit 206 predicts an average external air temperature of the period

27

for which surplus power is generated and a rise in storage battery cell temperature due to heat generated by the storage battery itself. When calculating the rise in storage battery cell temperature, the storage battery and EC operating plan compilation unit 206 obtains an average charging current of the period for which surplus power is generated, and calculates the temperature rise using the average current.

Further, the storage battery and EC operating plan compilation unit 206 predicts the storage battery cell temperature from the calculated rise in storage battery cell temperature and average external air temperature, and calculates a maximum value of the average charging current from the storage battery characteristic data shown in FIG. 5(B). As the maximum charging current decreases when the storage battery 3 switches from rated current control to rated voltage control, as shown in FIG. 4(A), the average maximum current value is obtained here, and the amount of charging power of the PV surplus power is calculated from the maximum current. It is assumed that PV surplus power with which the storage battery 3 cannot be charged is sold. The storage battery and EC operating plan compilation unit 206 calculates the late night power time period charging power based on the amount of charging power of the PV surplus power, using the heretofore described procedure.

When the late night power time period charging power is determined, the storage battery and EC operating plan compilation unit 206 issues an instruction to the storage battery characteristic model 204 to compile a late night power time period charging plan, and the storage battery characteristic model 204 starts compiling a late night power time period operating plan (step S336). A basic operation of the late night power time period operating plan is the same as that described in step S213, except that the amount of charging power with which the storage battery 3 is charged differs, because of which a detailed description will be omitted.

When the formulation of the late night power time period storage battery 3 charging plan in step S336 is completed, the flow shifts to step S337, and the storage battery and EC operating plan compilation unit 206 confirms from the EC 5 late night operating plan, storage battery 3 late night charging plan, and load late night power time period power consumption prediction whether the contracted power is being exceeded. When the contracted power is not being exceeded (in the case of "NO"), the compilation of the next-day storage battery 3 and EC 5 operating plans is finished. Meanwhile, when determining "YES" in step S337, the flow shifts to step S338, and the storage battery and EC operating plan compilation unit 206 confirms whether partial EC 5 heating can reduce the electricity charge.

Specifically, the EC 5 power consumption and amount of heat stored in a time period for which the contracted power is exceeded are calculated in the EC model 205. Subsequently, the storage battery and EC operating plan compilation unit 206 confirms a time period that is a daytime period in which there is PV surplus power, and in which no EC 5 heating is being carried out. When there is such a time period, EC 5 heating is implemented in that time period. Meanwhile, when there is no such time period, heating time is extended when EC 5 heating is being implemented in the daytime period. When no heating is planned for the daytime period, the necessary amount of heat is secured by lengthening the reheating time. At this time, the storage battery and EC operating plan compilation unit 206 obtains the power used, and calculates an increase in the electricity charge when implementing partial heating in the daytime period.

Meanwhile, when changing the storage battery 3 charging plan for the late night power time period, the storage battery and EC operating plan compilation unit 206 changes the storage battery 3 charging plan so that power exceeding the contracted power does not exceed the contracted power, and calculates the reduction in power compared with the originally planned amount of charging power. Further, the storage battery and EC operating plan compilation unit 206 calculates the increase in the electricity charge when changing the storage battery 3 operating plan from (the obtained amount of power × storage battery PCN efficiency × daytime electricity charge - obtained amount of power × late night electricity charge), and determines which is cheaper (step S338).

When determining in step S338 that partially carrying out EC 5 heating in the daytime is cheaper (in the case of "YES"), the flow shifts to step S340, and the storage battery and EC operating plan compilation unit 206 selects the EC 5 operating plan previously compiled in step S338 when calculating the electricity charge, and finishes the compilation of the next-day storage battery 3 and EC 5 operating plans.

Meanwhile, when determining "NO" in step S338, the flow shifts to step S339, and the storage battery and EC operating plan compilation unit 206 once more compiles a storage battery 3 operating plan. Specifically, firstly, using the procedure of step S336, the late night charging plan is revised in the storage battery characteristic model 204 so that the contracted power is not exceeded in the late night power time period. Further, when there is PV surplus power, the storage battery characteristic model 204 compiles a storage battery discharging plan based on the result of predicting the load power consumption from the late night power finishing time until the time period in which PV surplus power is generated.

Subsequently, when the PV surplus power time period is reached, the storage battery characteristic model 204 compiles a charging and discharging plan so that electricity is discharged from the storage battery 3 when charging with PV surplus power and a purchase of power occur, and when the PV surplus power time period is exceeded, the storage battery characteristic model 204 compiles a discharging plan in accordance with the amount of power consumed for a period until the power stored in the storage battery 3 expires. When the storage battery 3 operating plan review in step S339 is finished, the compilation of the next-day storage battery 3 and EC 5 operating plans is finished.

Next, using FIG. 18C, a description will be given of a case of determining "NO" in step S303. In this case, the PV surplus power being consumed in the load or sold is better than the PV surplus power being used for charging the storage battery 3. Also, the storage battery 3 is better charged late at night (however, depending on the relationship between the daytime power time period power charges and late night power charges, it may be that not charging the storage battery 3 is better).

Consequently, in step S351, the EC model 205 calculates the electricity charge for when carrying out EC 5 heating in the late night power time period. As an operating plan compilation method is the same as that described in step S311, a detailed description will be omitted. When compiling the EC 5 operating plan, the EC model 205 also calculates transitions in the amount of power used and amount of heat stored. When the operating plan compilation is completed in the EC model 205, the storage battery and EC operating plan compilation unit 206 calculates the electricity charge needed for EC 5 heating from the amount of power used and the electricity charge structure (refer to FIG. 15). At this time, the storage battery and EC operating plan compilation unit 206 calculates the electricity charge assuming that all of the PV surplus power is sold.

When step S351 is finished, the storage battery and EC operating plan compilation unit 206, in step S352, compiles a daytime period operating plan wherein PV surplus power is utilized to a maximum. The storage battery and EC operating plan compilation unit 206 calculates the electricity charge for when heating of the EC 5 is carried out in the PV surplus power time period based on the results calculated in step S301 and step S302. Specifically, the storage battery and EC operating plan compilation unit 206 divides the power used when heating of the EC 5 is carried out in the surplus power generation time period into a PV surplus power portion and a purchased power portion. Further, the storage battery and EC operating plan compilation unit 206 calculates the purchased power only using the daytime power charge based on the electricity charge structure, and obtains the electricity charge by adding the results together.

The storage battery and EC operating plan compilation unit 206 calculates the electricity charge for power used outside the surplus power time period based on the electricity charge structure. Also, when further surplus power is generated by the EC 5 being operated, the surplus power is sold, and the electricity selling price obtained. When the necessary amount of stored heat cannot be secured in the surplus power time period, operation is continued until the necessary amount of stored heat can be secured. The storage battery and EC operating plan compilation unit 206 also formulates a plan relating to reheating before using hot water. When the operating plan is determined, the storage battery and EC operating plan compilation unit 206 obtains the power charge from the amount of power sold at each time based on the operating plan and the power charge structure shown in FIG. 15. At this time, the electricity selling price when selling the surplus power is subtracted from the electricity charge obtained.

Next, in step S353, the storage battery and EC operating plan compilation unit 206 compares the power charges obtained in step S351 and step S352, selects the EC 5 operating plan obtained in step S352 (step S354) when determining that daytime heating is cheaper (in the case of "YES"), and shifts to step S359. Meanwhile, when determining that daytime heating is more expensive (the case of "NO"), the storage battery and EC operating plan compilation unit 206 compiles an operating plan such that a lacking amount of stored heat is created in the late night power time period when the necessary amount of stored heat cannot be secured by the surplus power time period operating plan obtained in step S352 (step S355). At this time, the storage battery and EC operating plan compilation unit 206 compiles a heating plan adding an amount of heat lost from the end of the late night power time period to the start of the surplus power time period.

The storage battery and EC operating plan compilation unit 206 also formulates a plan relating to reheating before using hot water. When the operating plan is determined, the storage battery and EC operating plan compilation unit 206 obtains the power charge from the amount of power sold at each time based on the operating plan and the power charge structure shown in FIG. 15. At this time, the electricity selling price when selling the surplus power is subtracted from the electricity charge obtained.

When step S355 is finished, the flow shifts to step S356, and the storage battery and EC operating plan compilation unit 206 compares the electricity charge calculated in step S351 and the electricity charge calculated in step S355, and determines which of late night heating and late night heating utilizing PV surplus power is cheaper in terms of electricity charge. When the result of the determination is that late night heating is cheaper (in the case of "YES"), the storage battery and EC operating plan compilation unit 206 shifts to step S358, and selects the EC 5 operating plan obtained in step S351. Meanwhile, when determining "NO" in step S356, the storage battery and EC operating plan compilation unit 206 shifts to step S357, and selects the operating plan obtained in step S355.

When the formulation of the EC 5 operating plan is completed, the storage battery and EC operating plan compilation unit 206 determines in step S359 whether to implement late night charging of the storage battery 3. As this operation is the same as that of step S335, a description will be omitted. Herein, when determining not to implement late night charging (in the case of "NO"), the storage battery and EC operating plan compilation unit 206 finishes the compilation of the next-day storage battery 3 and EC 5 operating plans.

When determining "YES" in step S359, the storage battery and EC operating plan compilation unit 206 shifts to step S360, and formulates a storage battery 3 operating plan for the late night power time period. As this operation is the same as that of step S213, a detailed description will be omitted. When the compilation of the storage battery 3 late night operating plan in step S360 is completed, the storage battery and EC operating plan compilation unit 206 shifts to step S361, and confirms from the storage battery 3 and EC 5 late night time period operating plans, and from the load power consumption prediction, whether the power used is exceeding the contracted power. When the power used is not exceeding the contracted power (in the case of "NO"), the storage battery and EC operating plan compilation unit 206 finishes the compilation of the next-day storage battery 3 and EC 5 operating plans.

Meanwhile, when determining "YES" in step S361, the flow shifts to step S362, and the storage battery and EC operating plan compilation unit 206 determines whether using the EC 5 in the daytime can reduce the electricity charge. Specifically, the EC 5 power consumption and amount of heat stored in a time period for which the contracted power is exceeded are calculated in the EC model 205. Subsequently, the storage battery and EC operating plan compilation unit 206 confirms a time period that is a daytime period in which there is PV surplus power, and in which no EC 5 heating is being carried out. When there is such a time period, EC 5 heating is implemented in that time period. Meanwhile, when there is no such time period, heating time is extended when EC 5 heating is being implemented in the daytime period.

When no heating is planned for the daytime period, the necessary amount of heat is secured by lengthening the reheating time. At this time, the storage battery and EC operating plan compilation unit 206 obtains the power used. Further, the storage battery and EC operating plan compilation unit 206 calculates an increase in the electricity charge when implementing partial heating in the daytime period.

Also, when changing the storage battery 3 charging plan for the late night power time period, the storage battery and EC operating plan compilation unit 206 changes the storage battery 3 charging plan so that power exceeding the contracted power does not exceed the contracted power, and calculates the reduction in power compared with the originally planned amount of charging power. Further, the storage battery and EC operating plan compilation unit 206 calculates the increase in the electricity charge when changing the storage battery 3 operating plan from (the obtained amount of power × storage battery PCN efficiency × daytime electricity charge - obtained amount of power × late night electricity charge), and determines which is cheaper.

When determining "NO" in step S362, the flow shifts to step S363, and the storage battery and EC operating plan compilation unit 206 reviews the storage battery 3 late night charging plan. Specifically, firstly, using the procedure described in step S336, the late night charging plan is revised in the storage battery characteristic model 204 so that the contracted power is not exceeded in the late night power time period (charging with PV surplus power is not implemented), and when the review of the storage battery 3 operating plan is finished, the compilation of the next-day storage battery 3 and EC 5 operating plans is finished. When determining "YES" in step S362, the flow shifts to step S364, and the storage battery and EC operating plan compilation unit 206 selects the EC 5 operating plan previously compiled in step S362 when calculating the electricity charge, and finishes the compilation of the next-day storage battery 3 and EC 5 operating plans.

Although the storage battery 3 charging plan has been described in detail in the first embodiment, the discharging plan has not been described in detail, except for when selling PV surplus power. It is assumed that when a detailed storage battery 3 discharging operation is not described, discharging is implemented in a daytime period in which PV surplus power is not generated. Specifically, it is assumed that control is carried out so that purchased power is zero after the finish of the late night time period. A reason for this is as follows.

Generally, deterioration of the storage battery 3 advances even when the storage battery 3 is not being used, and the deterioration advances further when the storage battery 3 is in a state near fully charged, because of which is it assumed that when there is no discharging plan, discharging is carried out in order to reduce the time for which the storage battery 3 is in a state near fully charged. The amount of power discharged is determined for each time period in which electricity charges are high, such as a time period-specific electricity charge, and a discharging plan is compiled. At this time, the storage battery cell temperature and storage battery 3 characteristics are taken into consideration.

When step S364 is finished, that is, when step S17 shown in FIG. 7 is finished or when determining "NO" in step S16, the flow shifts to step S18, and the storage battery 3 and EC 5 same-day operating plan is reviewed in real time. Next, an operation in step S18 will be described using FIG. 19A and FIG. 19B.

When step S18 is started, the storage battery and EC operating plan compilation unit 206 carries out an acquisition and learning of EC 5 measurement data in step S401. Herein, by calculating the COP from the 30-minute average external air temperature, average amount of power used, and amount of heat stored (calculated from the amount of hot water and water temperature), and learning the COP value with respect to the external air temperature, a database is constructed when heating as an EC database.

In the same way, when the EC 5 is in a heat retaining state, a database is constructed by calculating the amount of heat lost from the 30-minute average external air temperature and the amount of stored heat lost (calculated from a change in the amount of hot water and water temperature), and learning the lost heat amount value with respect to the external air temperature.

When step S401 is finished, the storage battery and EC operating plan compilation unit 206 shifts to step S402, and implements a collection of storage battery 3 measurement data and a learning of storage battery characteristics. Specifically, the storage battery and EC operating plan compilation unit 206 measures the storage battery 3 30-minute average charging and discharging current values, maximum charging and discharging current values, storage battery voltage upper limit value and lower limit value, average storage battery cell temperature (maximum and minimum), average external air temperature, and SoC information, and stores each item of acquired data in a database. Herein, the storage battery and EC operating plan compilation unit 206 learns a rise in the average storage battery cell temperature with respect to the average charging and discharging current values and average external air temperature, and constructs a database. Although a description of use applications will be omitted, the other data are normally used in estimating storage battery deterioration (capacity retention rate), and the like.

When step S402 is finished, the storage battery and EC operating plan compilation unit 206 calculates the EC 5 power consumption and amount of heat stored based on the current operating plan (step S403). Specifically, the storage battery and EC operating plan compilation unit 206 causes the EC model 205 to predict a subsequent amount of power used based on the external air temperature prediction result corrected in step S13, the current amount of heat stored, and the current operating plan, and to calculate a final amount of heat stored. When step S403 is finished, the storage battery and EC operating plan compilation unit 206 calculates transitions in the charging and discharging powers and amount of power stored based on the current storage battery 3 charging and discharging plans (step S404).

Specifically, the storage battery characteristic model 204 calculates from the current storage battery cell temperature, the external air temperature, the amount of power stored, the external air temperature prediction result corrected in step S13, the load power consumption prediction result corrected in step S14, and the current charging and discharging plans. Also, the upper limit values of the charging and discharging currents are obtained from the storage battery characteristic table for the current storage battery cell temperature (refer to FIG. 5).

In this case, as heretofore described, the storage battery 3 characteristics are such that the maximum values of the charging and discharging currents are restricted when the storage battery cell temperature is high or low, because of which, when selecting the characteristic table, the maximum value of the storage battery cell temperature is used when 15° is exceeded. Generally, frame thermal design is carried out in such a way that the rise of the storage battery cell temperature with respect to the external air temperature is kept as small as possible (maximum in the region of 15 °C).

Meanwhile, in a case of 15 °C to around 30 °C, the storage battery 3 is such that there is no limit on the charging and discharging currents (charging can be carried out at the rated current). A configuration may also be such that two characteristic tables are selected based on two temperature measurement results, those being the maximum and minimum storage battery cell temperatures, and the charging and discharging currents with the smaller maximum values are selected.

When the maximum charging and discharging current values are determined, the storage battery characteristic model 204 refers to the current operating plan. When charging is in progress, the storage battery characteristic model 204 confirms the charging current value, and compares the charging current value with the previously obtained maximum charging current value. When charging with PV surplus power, the storage battery characteristic model 204 calculates the PV surplus power from the surplus power prediction result calculated in step S15 and the result of predicting the amount of power used in the EC 5 obtained in step S403, and determines the charging current value. When the charging current value exceeds the maximum charging current value, the maximum charging current value is adopted as the charging current value, and when the charging current value is equal to or less than the maximum charging current value, charging is carried out using the current value.

Herein, charging is carried out using the current value for one minute. When one minute of charging is completed, the amount of power charged, the SoC, and the storage battery voltage are calculated from the amount of power charged, and the storage battery cell temperature one minute later is calculated from the charging current, current storage battery cell temperature, and external air temperature prediction result. When the calculation of the storage battery cell temperature is completed, the maximum charging and discharging current values are calculated from the calculated storage battery cell temperature using the heretofore described procedure, and the storage battery characteristic model 204 confirms from the previously calculated storage battery voltage and SoC whether the storage battery 3 is fully charged.

When the storage battery 3 is fully charged, further charging is cancelled when no discharging from the storage battery 3 is carried out, even though the operating plan specifies charging. When the storage battery 3 is not fully charged, the storage battery characteristic model 204 confirms the operating plan for the next one minute, and charging is carried out using the heretofore described procedure when charging is specified.

Meanwhile, when the operating plan specifies discharging, the storage battery characteristic model 204 confirms the amount of power discharged. Herein, when within a period for which discharging is specified in the operating plan, the amount of power discharged is power that is the load power consumption including the EC 5 divided by the storage battery PCN efficiency. In other words, control is carried out so that purchased power is "0". In actuality, a margin is provided so that power discharged from the storage battery 3 does not flow back even when the load power consumption suddenly changes (control is carried out so that a preset purchased power target is reached). Also, when the discharging current value exceeds the maximum discharging current value, discharging is carried out using the maximum discharging current value.

When one minute of discharging is completed, the amount of power discharged, the SoC, and the storage battery voltage are calculated from the amount of power discharged, and the storage battery cell temperature one minute later is calculated from the discharging current, current storage battery cell temperature, and external air temperature prediction result. When the calculation of the storage battery cell temperature is completed, the maximum charging and discharging current values are calculated from the calculated storage battery cell temperature using the heretofore described procedure, and the storage battery characteristic model 204 confirms from the previously calculated storage battery voltage and SoC whether the lower limit value is reached when discharging.

When the lower limit value of discharging is reached, further discharging is cancelled when no charging of the storage battery 3 is carried out, even though the operating plan specifies discharging. When the lower limit value of discharging is not reached, the storage battery characteristic model 204 confirms the operating plan for the next one minute, and discharging is carried out using the heretofore described procedure when discharging is specified.

When the calculation of the power consumption, charging and discharging powers, amount of heat stored, and amount of power stored based on the current EC 5 and storage battery 3 operating plan until the start of the same-day late night power time period (11 p.m.) is completed using the heretofore described procedure, the storage battery and EC operating plan compilation unit 206 calculates the amount of power sold from the corrected value of the PV power generation prediction, and calculates the electricity charge from the amount of power purchased at each time and the amount of PV surplus power sold (step S405). When reheating is carried out due to an insufficient amount of heat stored when using hot water, it is assumed that the storage battery and EC operating plan compilation unit 206 calculates that amount of power, and adds this to the electricity charge.

When the calculation of the electricity charge in step S405 is completed, the storage battery and EC operating plan compilation unit 206 shifts to step S411, confirms whether the current time is in the late night power time period, and when the current time is in the late night power time period (in the case of "YES"), reviews the same-day storage battery 3 and EC 5 operating plans for the current time onward (step S412). This is in order to respond to the weather forecast changing since devising the same-day operating plan the previous day, to the actual measurement results of minimum air temperature and the like changing, and the like. Also, for example, in summer, the PV starts generating power at 6 a.m., which is in the late night power time period, because of which the late night power time period operating plan is reviewed based on a corrected result of the PV power generation prediction.

In step S412, the storage battery and EC operating plan compilation unit 206 compiles the EC 5 late night power time period operating plan again. Specifically, the storage battery and EC operating plan compilation unit 206 calculates the power consumption and amount of heat stored when subsequently implementing heating until the late night time period finishes, based on the external air temperature prediction result corrected for the EC model 205 in step S13 and on the current amount of heat stored. When the targeted amount of heat stored cannot be secured when the late night time finishes, heating is implemented in the daytime period.

Regarding daytime heating, as heretofore described, heating is basically implemented in a time period in which no PV surplus power is generated, and the external air temperature is high, when the PV surplus power selling price indicates that selling is better. At this time, the storage battery and EC operating plan compilation unit 206 also considers the amount of heat lost by the start of heating when calculating the amount of heat stored when heating in the daytime period. Regarding reheating before use too, the storage battery and EC operating plan compilation unit 206 obtains the amount of heat lost after the daytime period heating is completed, and calculates the power used together with the operating plan.

Meanwhile, when the electricity selling price is low and consumption is better, the storage battery and EC operating plan compilation unit 206 compiles the operating plan so that heating is carried out in a time period in which surplus power is generated. Details of the compilation method are described above, so will be omitted. When there is no surplus power, the storage battery and EC operating plan compilation unit 206 devises the plan so that heating is carried out in a time period in which the air temperature is high. When compiling the operating plan, the storage battery and EC operating plan compilation unit 206 obtains the amount of heat lost after the daytime period heating is completed with regard to reheating before use too, and calculates the power used together with the operating plan.

When step S412 is finished, the storage battery and EC operating plan compilation unit 206 compiles a storage battery 3 late night power time period charging plan (step S413). Specifically, the storage battery characteristic model 204 calculates from the current storage battery cell temperature, the external air temperature, the amount of power stored, the external air temperature prediction result corrected in step S13, and the load power consumption prediction result corrected in step S14. Firstly, the upper limit value of the charging current is obtained (details are described above, so will be omitted) from the storage battery characteristic table for the current storage battery cell temperature (refer to FIG. 5(B)), and the storage battery characteristic model 204 charges the storage battery 3 using the maximum charging current value.

As heretofore described, the storage battery characteristic model 204 calculates the amount of power charged, SoC, and storage battery voltage from the amount of power charged after one minute of charging is completed. When these calculations are completed, the current storage battery cell temperature after one minute is calculated from the charging current, the current storage battery cell temperature and the external air temperature prediction result. Then, the maximum charging and discharging current values are calculated from the calculated storage battery cell temperature using the heretofore described procedure.

When the calculation of the maximum charging and discharging current value are completed, the storage battery characteristic model 204 confirms from the previously calculated storage battery voltage and SoC whether the storage battery 3 is fully charged. When the storage battery 3 is fully charged, further charging is cancelled, and when the storage battery 3 is not fully charged, the maximum charging current is obtained using the heretofore described procedure, and the storage battery 3 is charged for the next one minute. This kind of operation is repeated until the storage battery 3 is fully charged, or until the late night power time period finishes, and the storage battery 3 operating plan for when charging late at night is compiled.

When the compilation of the late night power time period charging plan is finished, the storage battery characteristic model 204 implements a compilation of storage battery 3 daytime period charging and discharging plans. Basically, when the PV surplus power selling price indicates that selling is better, the storage battery characteristic model 204 compiles a discharging plan such that purchased power is "0", based on the result of predicting power used in the load in a time period in which surplus power is generated.

A period from the late night power time period finishing until surplus power is generated is such that the storage battery 3 is charged for a time period until surplus power is generated when (power sold > daytime period electricity charge/storage battery PCN efficiency), and (load power consumption (total) in surplus power time period > amount of power stored in storage battery 3). When the amount of power stored in the storage battery 3 is not "0" even though the PV surplus power time period has elapsed, the storage battery characteristic model 204 controls so that purchased power is "0" in a time period in which a large amount of PV power is generated, and devises the operating plan so that as much PV generated power as possible is sold.

When the weather is bad, little PV power is generated, and no surplus power is generated, the storage battery characteristic model 204 devises the storage battery 3 discharging plan centered on a time period in which a large amount of PV power is generated, and devises the operating plan so that as much PV generated power as possible is sold. When power is stored in the storage battery 3 even after PV power generation finishes, the discharging plan is compiled unchanged.

Meanwhile, when the electricity selling price is lower than the daytime period power charge, the EC 5 and the like are used so that as little surplus power as possible is generated, whereby surplus power is reduced. When surplus power is generated despite this, selling surplus power is profitable when (electricity selling price > daytime period power charge $\times$ storage battery PCN efficiency), because of which no charging of the storage battery 3 with surplus power is carried out. When this condition is not satisfied, however, charging with the surplus power and using the surplus power in the daytime period is profitable, because of which the operating plan is compiled so that charging is carried out using surplus power.

When (electricity selling price < late night time period power charge $\times$ storage battery PCN efficiency), charging using surplus power is more profitable than charging with late night power, because of which the storage battery characteristic model 204 reviews the discharging plan for after the late night time period finishes when the storage battery 3 is fully charged and cannot be charged with surplus power, reviews the late night power time period charging plan again when further surplus power is generated, and reviews the operating plan so that surplus power other than surplus power that cannot be used for charging due to the storage battery 3 characteristics is used for charging.

When step S413 is finished, the storage battery and EC operating plan compilation unit 206, in step S414, predicts the amount of power used from the storage battery 3 operating plan, EC 5 operating plan, and load power consumption prediction, and confirms whether the amount of power used is exceeding the contracted power. When the amount of power used is not exceeding the contracted power (in the case of "NO"), the flow shifts to step S418. An operation of step S418 will be described hereafter.

When the amount of power used is exceeding the contracted power (in the case of "YES"), the storage battery and EC operating plan compilation unit 206 implements a review of the late night power time period operating plan. Specifically, the storage battery and EC operating plan compilation unit 206 determines whether the electricity charge for EC 5 daytime heating is lower compared with when not carrying out partial late night charging of the storage battery 3 (when not charging with power that exceeds the contracted power) (step S415). As the details are the same as in the case of step S362, a description will be omitted.

When determining "NO" in step S415, the storage battery and EC operating plan compilation unit 206 shifts to step S416, and reviews the storage battery 3 late night charging plan. As step S416 is the same as the case of step S363, a description will be omitted. When determining "YES" in step S415, the storage battery and EC operating plan compilation unit 206 shifts to step S417, and selects the EC 5 operating plan previously compiled when calculating the electricity charge in step S415.

Next, in step S418, the storage battery and EC operating plan compilation unit 206 calculates the electricity charge based on a new operating plan using the storage battery 3 and EC 5 operating plans obtained as heretofore described, the PV power generation prediction result, the result of predicting the amount of power used in the load, and the electricity charge table shown in FIG. 15. When the calculation of the new electricity charge is completed, the storage battery and EC operating plan compilation unit 206, in step S419, selects the storage battery 3 and EC 5 operating plans for which the electricity charge is lower from the result of calculating the electricity charge based on the original operating plan calculated in step S405 and the result of calculating the electricity charge calculated based on the new operating plan, and finishes step S419, that is, the storage battery and EC operating plan compilation (step S18).

Next, using FIG. 19B, a description will be given of a case in which the current time is not in the late night power time period (in the case of "NO") in step S411. In this case, the daytime period electricity charge is employed, because of which treatment of PV surplus power and the EC operating plan are major problems.

Firstly, in step S431, the storage battery and EC operating plan compilation unit 206 compares the PV selling price and purchasing price, and when determining that (electricity selling price > electricity purchasing price) (in the case of "YES"), reviews the storage battery 3 and EC 5 operating plans so that the amount of PV power sold is at a maximum. Specifically, the storage battery and EC operating plan compilation unit 206 confirms in step S432 whether the amount of PV power sold is at a maximum, and confirms the time period in which PV surplus power is generated from the amount of PV surplus power calculated in step S15. Further, the storage battery and EC operating plan compilation unit 206 confirms that the storage battery 3 discharging plan is planned for the time period in which PV surplus power is generated, and that the EC 5 operating plan is not carried out in the surplus power time period.

When there is no discharging plan for the time period in which PV surplus power is generated (including also a case in which there is no discharging plan for one portion of the time period), and storage battery 3 discharging is planned for a time period in which no PV surplus power is generated, the storage battery and EC operating plan compilation unit 206 determines that the amount of PV power sold is not at a maximum at this point. Also, the storage battery and EC operating plan compilation unit 206 determines that neither is the amount of power sold at a maximum in a case in which EC 5 heating is planned for the time period in which PV surplus power is generated.

When determining "YES" in step S432, only the EC 5 operating plan is reconfirmed. As heretofore described, the EC 5 COP value differs in accordance with the external air temperature, because of which heating in the PV surplus power period when the air temperature is high can result in the amount of power purchased decreasing, and there may be an advantage in terms of cost. Consequently, the EC 5 operating plan is reviewed again in step S434. Specifically, the storage battery and EC operating plan compilation unit 206 notifies the EC model 205 of the amount of heat currently stored in the EC 5, the external air temperature, the air temperature prediction result, and the like. The EC model 205 calculates the amount of stored heat subsequently needed from the notified amount of stored heat, and obtains the time at which the external air temperature will subsequently peak from the external air temperature prediction result. When the time at which the external air temperature will peak is obtained, the EC model 205 calculates a 30-minute average air temperature from that time from the external air temperature prediction result.

When the calculation of the average air temperature is completed, the EC model 205 obtains a load factor at which the COP is at a maximum from the average value obtained (refer to FIG. 6(B)), and calculates a 30-minute power consumption and amount of heat stored from the load factor obtained and COP. Next, the EC model 205 obtains an average air temperature for 30-minutes back from the time at which the maximum daytime period air temperature is observed from the external air temperature prediction information, and obtains the load factor for which the COP is at a maximum from the obtained average air temperature. The EC model 205 calculates a 30-minute power consumption and amount of heat stored from the load factor and COP.

The heretofore described step is implemented, centered on the time at which the maximum daytime period air temperature is observed from the external air temperature prediction information, until the amount of heat stored exceeds the amount of heat needed. When the amount of heat stored exceeds the amount of heat needed, the EC model 205 calculates (amount of heat stored - amount of heat needed), and carries out a calculation of a last heat storing time in proportional distribution from a result of the calculation and an amount of heat stored in the last 30 minutes. Further, the EC model 205 obtains an amount of power used, with a period for which this kind of operation is repeated as the EC 5 daytime period operating plan.

By compiling the EC 5 operating plan centered on a time period in which the air temperature is high, as heretofore described, there is an advantage in that the energy conversion efficiency (COP) can be increased owing to the external air temperature being high, as shown in FIG. 6 (A), whereby the amount of power used can be reduced. When hot water is used before the daytime period, as in the operating plan shown in FIG. 16, the EC 5 operating plan is compiled so that the amount of hot water used is heated in the late night power time period. Also, when the compilation of the daytime period heating operating plan is completed, the EC model 205 calculates an amount of heat lost in the hot water storage period from the hot water usage plan shown in FIG. 16. Specifically, the EC model 205 calculates an amount of heat lost from the time at which daytime period heating is completed until the time at which hot water is used at night, devises a reheating operating plan, and calculates the electricity charge based on the compiled operating plan.

At this time, the EC model 205 calculates the electricity charge for power furnished by PV power generation using the PV selling price, and when determining as a result of the calculation that the electricity charge is lower when utilizing PV surplus power, notifies the storage battery and EC operating plan compilation unit 206 in step S434 of the operating plan devised in step S433 as the EC 5 operating plan, and finishes the formulation of the storage battery 3 and EC 5 operating plans. The storage battery 3 operating plan is not changed. In the same way, when determining "NO" in step S433, the formulation of the storage battery 3 and EC 5 operating plans is finished without changing the storage battery 3 and EC 5 operating plans.

Meanwhile, when determining "NO" in step S432, the storage battery and EC operating plan compilation unit 206 shifts to step S435, and reviews the storage battery 3 operating plan. Specifically, in order that the storage battery discharging plan is planned for a time period in which PV surplus power is generated, the storage battery and EC operating plan compilation unit 206 reviews the discharging plan so that the storage battery 3 is charged in the storage battery 3 late night power time period, and discharging is carried out in the surplus power time period in the daytime period.

When little PV power is generated, and no surplus power is generated, the storage battery and EC operating plan compilation unit 206 compiles the operating plan so that discharging of the storage battery 3 is carried out in a time period in which PV power is generated and there is little purchased power. A specific operating plan compilation method is described above, so will be omitted.

When step S435 is finished, the storage battery and EC operating plan compilation unit 206 reviews the EC 5 operating plan (step S436). Specifically, the storage battery and EC operating plan compilation unit 206 issues an instruction to the EC model 205 to devise an EC 5 heating plan for a time period in which discharging of the storage battery 3 is not being implemented in order to maximize the amount of PV power sold, based on the storage battery 3 discharging plan compiled in step S435. The EC model 205, on receiving the instruction, implements an operating plan change when there is an EC 5 operating plan for a time period in which there is a storage battery 3 discharging plan for maximizing PV selling.

Specifically, the EC model 205 detects a time period for which discharging of the storage battery 3 is not planned, obtains the amount of heat stored at the starting time of the detected time period, and determines whether heating is needed. When determining that heating is needed, the EC model 205 compiles the operating plan from the result of predicting the external air temperature at the time and the necessary amount of stored heat. Firstly, as heretofore described, the EC model 205 calculates a 30-minute average air temperature from the time at which heating is determined to be needed from the external air temperature prediction results, and obtains a load factor at which the COP is at a maximum from the average value obtained (refer to FIG. 6(B)).

Next, the EC model 205 calculates a 30-minute power consumption and amount of heat stored from the load factor obtained and COP, and obtains a next 30-minute average air temperature. The EC model 205 obtains a load factor at which the COP is at a maximum from the average air temperature obtained, and calculates a 30-minute power consumption and amount of heat stored from the load factor obtained and COP. The EC model 205 implements the heretofore described step until the amount of heat stored exceeds the amount of heat needed.

When the amount of heat stored exceeds the amount of heat needed, the EC model 205 calculates (amount of heat stored - amount of heat needed), and carries out a calculation of a last heat storing time in proportional distribution from a result of the calculation and an amount of heat stored in the last 30 minutes. Further, the EC model 205 obtains an amount of power used, with a period for which the heretofore described operation is repeated as the EC 5 daytime period operating plan. When the compilation of the operating plan is finished, the EC model 205 notifies the storage battery and EC operating plan compilation unit 206 that the operating plan compilation is finished.

When step S436 is finished, the flow shifts to step S437, and the storage battery and EC operating plan compilation unit 206 calculates the electricity charge based on a new operating plan using the storage battery 3 and EC 5 operating plans obtained as heretofore described, the PV power generation prediction result, the result of predicting the amount of power used in the load, and the electricity charge table shown in FIG. 15, then, in step S438, selects the storage battery 3 and EC 5 operating plans for which the electricity charge is lower from the result of calculating the electricity charge based on the original operating plan calculated in step S405 and the result of calculating the electricity charge calculated based on the new operating plan, and finishes the storage battery and EC operating plan compilation (step S18).

Meanwhile, when determining "NO" in step S431, the flow shifts to step S451, and the storage battery and EC operating plan compilation unit 206 determines whether to sell the PV surplus power or charge the storage battery 3. As heretofore described, power with which the storage battery 3 is charged is such that a loss occurs in accordance with the storage battery PCN efficiency, because of which a profit can be obtained by utilizing the surplus power for charging once when (electricity purchasing price > electricity selling price/storage battery PCN efficiency).

Consequently, when determining "YES" in step S451, the storage battery and EC operating plan compilation unit 206 confirms in step S452 whether there is PV surplus power. The surplus power confirmation method is to subtract the power used in the EC 5 from the surplus power prediction and correction result calculated in step S15. When there is no surplus power (in the case of "NO"), the formulation of the storage battery 3 and EC 5 operating plans is finished without changing the storage battery 3 and EC 5 operating plans. When there is surplus power, the storage battery and EC operating plan compilation unit 206 issues an instruction to the EC model 205 to compile an operating plan that utilizes the surplus power.

Next, the EC model 205 finishes without carrying out an operating plan formulation when there is an operating plan for a time period in which there is surplus power, and when there is no operating plan, the EC model 205 obtains the amount of heat stored in that time period from the operating plan, and determines whether heating is needed. When determining that heating is needed, the EC model 205 compiles the operating plan from the result of predicting the external air temperature at the time and the necessary amount of stored heat. Firstly, as heretofore described, the EC model 205 calculates a 30-minute average air temperature from the time at which heating is determined to be needed from the external air temperature prediction results, and obtains a load factor at which the COP is at a maximum from the average value obtained (refer to FIG. 6(B)).

Next, the EC model 205 calculates a 30-minute power consumption and amount of heat stored from the load factor obtained and COP, and obtains a next 30-minute average air temperature. Furthermore, the EC model 205 obtains a load factor at which the COP is at a maximum from the average air temperature obtained, and calculates a 30-minute power consumption and amount of heat stored from the load factor obtained and COP. The EC model 205 implements the heretofore described step until the amount of heat stored exceeds the amount of heat needed.

When the amount of heat stored exceeds the amount of heat needed, the EC model 205 calculates (amount of heat stored - amount of heat needed), and carries out a calculation of a last heat storing time in proportional distribution from a result of the calculation and an amount of heat stored in the last 30 minutes, and obtains an amount of power used, with a period for which the heretofore described operation is repeated as the EC 5 daytime period operating plan. When the compilation of the operating plan is finished, the EC model 205 notifies the storage battery and EC operating plan compilation unit 206 of the fact.

On receiving the notification, the storage battery and EC operating plan compilation unit 206 issues an instruction to the storage battery characteristic model 204 to compile an operating plan again. Specifically, the storage battery characteristic model 204 subtracts the power used in the EC 5 from the surplus power prediction and correction result calculated in step S15, and confirms to what extent surplus power will subsequently be generated. Further, the storage battery characteristic model 204 confirms from the current amount of power stored whether surplus power can be sufficiently used for charging. When surplus power cannot be sufficiently used for charging, the storage battery characteristic model 204 compiles the operating plan so that discharging is carried out until charging with the surplus power starts, and compiles the operating plan so that charging with the surplus power is carried out in a time period in which surplus power is generated.

When surplus power can be sufficiently used for charging, the storage battery characteristic model 204 compiles the operating plan so that charging is carried out in the surplus power time period. Whether surplus power can be sufficiently used for charging is determined with consideration to the storage battery 3 characteristics of FIG. 4 and FIG. 5. For example, when near fully charged, the storage battery 3 shifts to the rated voltage mode, as heretofore described, because of which the maximum value of charging power decreases. Consequently, when surplus power is generated by the charging power, the discharging plan is devised so that the amount of power stored in the storage battery 3 is further reduced.

When the formulation of the storage battery 3 operating plan is completed using the heretofore described procedure, the flow shifts to step S455, and the storage battery and EC operating plan compilation unit 206 calculates the electricity charge based on the operating plans compiled in step S453 and step S454. When determining as a result of the calculation that the new operating plan can reduce the electricity charge, the storage battery and EC operating plan compilation unit 206 selects the new operating plan, and when determining that the new operating plan increases the electricity charge, the storage battery and EC operating plan compilation unit 206 selects the original operating plan (step S456). When the selection of the operating plan is finished, the storage battery and EC operating plan compilation unit 206 finishes the formulation of the storage battery 3 and EC 5 operating plans.

When determining "NO" in step S451, an operating plan is formulated so that surplus power is actively consumed, and power still remaining is sold. Therefore, in step S457, when there is surplus power, the storage battery and EC operating plan compilation unit 206 issues an instruction to the EC model 205 to compile an operating plan that utilizes the surplus power. The EC model 205, on receiving the instruction, finishes without carrying out an operating plan formulation when there is an operating plan for a time period in which there is surplus power, and when there is no operating plan, the EC model 205 obtains the amount of heat stored in that time period from the operating plan, and determines whether heating is needed.

When determining that heating is needed, the EC model 205 compiles the operating plan from the result of predicting the external air temperature at the time and the necessary amount of stored heat. As the formulation of the operating plan is the same as in step S453, a detailed description will be omitted. When the compilation of the operating plan is finished, the EC model 205 notifies the storage battery and EC operating plan compilation unit 206 of the fact.

On receiving the notification, the storage battery and EC operating plan compilation unit 206 issues an instruction to the storage battery characteristic model 204 to compile an operating plan again. When the daytime period electricity charges do not change, there is no need to review the operating plan, but in a case in which power charges in a specific time period are high, such as special summer charges, and the like, the power charges increase when power is purchased due to the EC 5 being used in the time period, because of which the storage battery discharging plan is reviewed in this case, and control is carried out so that there is no purchase of power in the time period (step S458).

When the formulation of the storage battery 3 operating plan is completed using the heretofore described procedure, the flow shifts to step S455, and the storage battery and EC operating plan compilation unit 206 calculates the electricity charge based on the operating plans compiled in step S457 and step S458. When determining as a result of the calculation that the new operating plan can reduce the electricity charge, the storage battery and EC operating plan compilation unit 206 selects the new operating plan, and when determining that the new operating plan increases the electricity charge, the storage battery and EC operating plan compilation unit 206 selects the original operating plan (step S456). When the selection of the operating plan in step S456 is finished, the storage battery and EC operating plan compilation unit 206 finishes the formulation of the storage battery 3 and EC 5 operating plans, that is, finishes step S17 in FIG. 7.

When step S17 and step S18 are finished, the storage battery and EC operating plan compilation unit 206 notifies the CPU 110 of the fact, and the CPU 110 notifies the device management unit 119 of the newly compiled operating plan. On receiving the operating plan, the device management unit 119 notifies the storage battery PCN 4 and EC 5 of the operating plan via the Echonet Lite communication I/F unit 113, and the CPU 110 waits until a next operating plan formulation time.

Meanwhile, the power measurement unit 116 stores an input power measurement result in an unshown database (step S20), collects information on a measured amount of PV generated power, power consumption of each device, storage battery 3 charging and discharging power amounts, storage battery cell temperature and external air temperature measured by an unshown temperature gauge, and the like, and implements a processing of data used for prediction error corrections implemented in step S13 to step S15 (step S21). When the generation of prediction error correcting data for each item of measurement data (step S21) is finished, the storage battery and EC operating plan compilation unit 206 confirms whether it is an operating plan compilation time, and repeats the operation from step S20 when it is not an operating plan compilation time.

Also, when it is a compilation time, the storage battery and EC operating plan compilation unit 206 returns to step S12, and starts an operating plan compilation again. Herein, for the sake of the description, step S20 and step S21 are described as shown in the drawing, but in actuality, each item of measurement data needs to be stored in the database and processed during an operating plan compilation too, because of which step S20 and step S21 need to be constantly caused to operate.

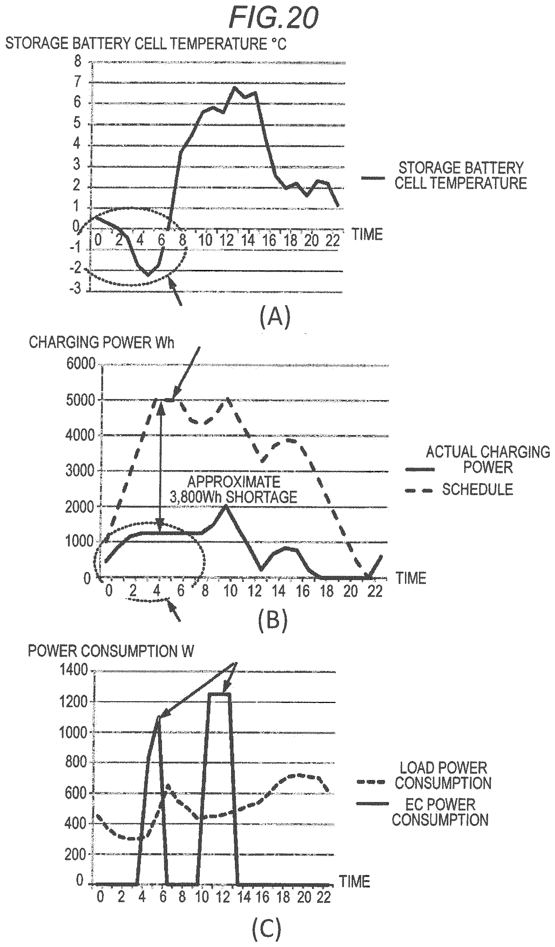

Next, using FIG. 20 to FIG. 23, advantages of the first embodiment will be described.

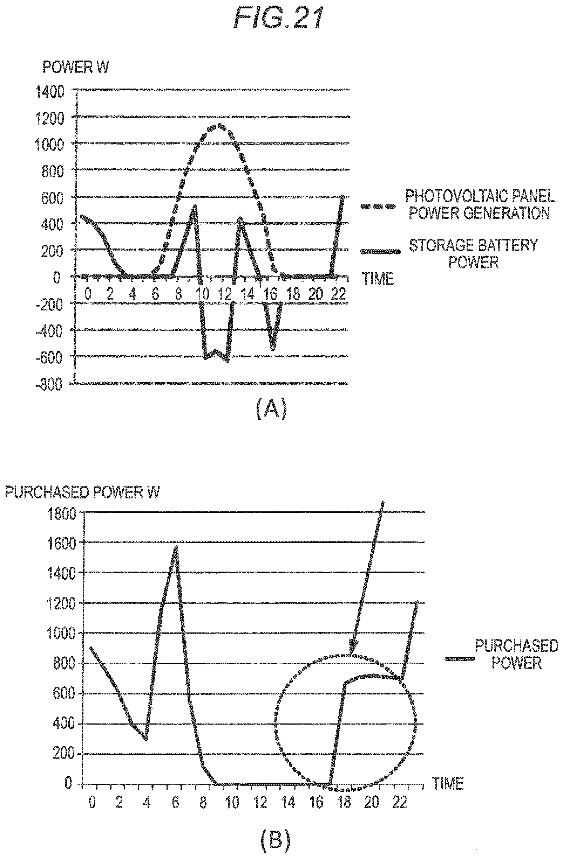

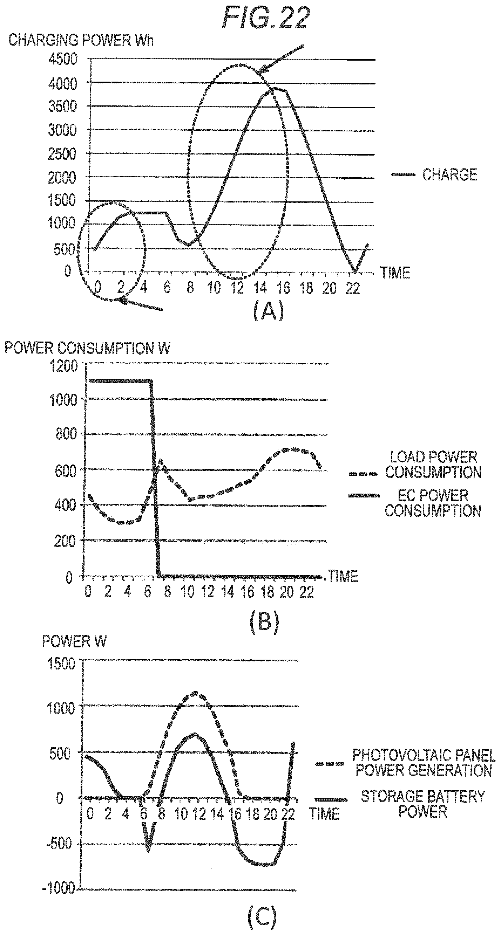

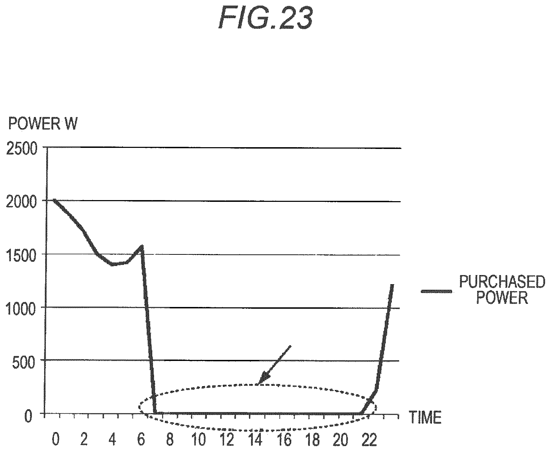

FIG. 20 and FIG. 21 are diagrams for describing operations when compiling an operating plan without considering the storage battery 3 characteristics. FIG. 22 and FIG. 23 are diagrams for describing operations when compiling an operating plan with consideration to the storage battery 3 characteristics. It is assumed that consideration is given to the EC 5 characteristics (the COP when supplying hot water late at night is 2.5, and the COP when supplying hot water in the daytime is in the region of 3.9). Also, the description will be given assuming that the selling price of power generated in the photovoltaic panel 1 is practically the same as the late night power charges. Consequently, consuming surplus power in the home has a greater economic advantage than selling the surplus power. Furthermore, in order to simplify the description of efficiency when charging and discharging the storage battery 3, the efficiency is shown as 100 % in the drawings. At this time, it is assumed that storage battery charging and discharging efficiency reflects the late night power purchasing price and the like.

FIG. 20(A) shows the storage battery cell temperature at each time, and FIG. 20(B) shows the amount of power stored in the storage battery 3 at each time when formulating an operating plan such that full charging of the storage battery 3 is carried out using late night power. Also, "schedule" in the drawing indicates a charging and discharging schedule planned in the operating plan compilation unit 118 without considering the storage battery 3 characteristics (characteristics with respect to temperature and SoC), and "Actual" in the drawing indicates an amount of charging power with which the storage battery 3 is actually charged in accordance with the storage battery 3 characteristics. FIG. 20(C) shows load power consumption, excepting the EC 5, and the EC 5 operating plan at each time.

The reason that there is an EC operating plan for the late night time period is that the EC operating plan is planned so that an amount of heat that cannot be furnished with surplus power generated in the photovoltaic panel 1 and power with which the storage battery 3 is charged (assuming that the storage battery 3 can be fully charged late at night without considering the storage battery 3 characteristics) is supplied using late night power, for which the electricity charges are low. FIG. 21(A) shows photovoltaic panel 1 power generation and storage battery 3 charging and discharging power at each time, wherein the storage battery power is such that a positive figure indicates charging power, and a negative figure discharging power. FIG. 21(B) shows an amount of power sold from the system at each time.

Next, using FIG. 20 and FIG. 21, a description will be given of an operation when compiling an operating plan without considering the storage battery 3 characteristics. The operating plan compilation unit 18 compiles an operating plan from the result of predicting the amount of power generated in the photovoltaic panel 1 and the result of predicting the load power consumption so that electricity charges are minimal (surplus power of the photovoltaic panel 1 is consumed or used for charging, and power purchased in the daytime period is practically zero). Herein, as the storage battery 3 characteristics are not considered, the operating plan compilation unit 118 formulates an operating plan that supplies hot water to the EC 5 in the daytime, when the COP value is high, as shown in FIG. 20(C).

At this time, the operating plan compilation unit 118 formulates the operating plan assuming that the storage battery 3 is fully charged in the late night power time period, as shown by the schedule in FIG. 20(B). Therefore, it is predicted that when the EC 5 is fully supplied with hot water in the daytime period, a purchase of electricity will occur in the night. Consequently, in order to secure the amount of power used in the night, the operating plan compilation unit 18 supplies the EC 5 in advance with an amount of heat lacking in a latter portion of the late night power time period, when electricity charges are low, thereby suppressing the storage battery 3 discharging power used to supply hot water to the EC 5 in the daytime period.

However, as the storage battery cell temperature is actually low, the storage battery 3 cannot earn sufficient charging current in the late night time period, and can only be charged with power in the region of one-fourth of the planned value, as shown in FIG. 20(B). Therefore, the heretofore described EC 5 operating plan is such that the storage battery 3 charging power is practically used up by 6 p.m., after which a purchase of power from the system occurs.

Next, using FIG. 22 and FIG. 23, a description will be given of an operation when considering the storage battery 3 characteristics.

FIG. 22(A) shows an amount of charged power in the storage battery 3 at each time when formulating an operating plan such that charging of the storage battery 3 is carried out using late night power as far as possible. The reason that the amount of charged power in the storage battery 3 increases from 8 a.m. onward in the drawing is that surplus power generated in the photovoltaic panel 1 is used for charging the storage battery 3 (as the storage battery cell temperature of the storage battery 3 is high in the daytime period, surplus power in the region of several hundred watts can all be used for charging).

FIG. 21(B) shows load power consumption, excepting the EC 5, and the EC 5 operating plan at each time. As the storage battery 3 characteristics are taken into consideration, the operating plan compilation unit 18 can predict that the storage battery 3 can only be charged to in the region of one-fourth in the late night power time period, because of which a case wherein the operating plan compilation unit 118 devises an operating plan such that the EC 5 is supplied with hot water in the late night power time period, in which electricity charges are low, is shown here. FIG. 22(C) shows photovoltaic panel 1 power generation and storage battery 3 charging and discharging power at each time, and in the drawing, the storage battery power is such that a positive figure indicates charging power, and a negative figure discharging power. FIG. 22(D) shows an amount of power sold from the system at each time.

Firstly, the operating plan compilation unit 18 compiles an operating plan from the result of predicting the amount of power generated in the photovoltaic panel 1 and the result of predicting the load power consumption so that electricity charges are minimal (surplus power of the photovoltaic panel 1 is consumed or used for charging, and power purchased in the daytime period is practically zero).

Conditions such as storage battery cell temperature are assumed to be the same as in the case illustrated in FIG. 20. In the case shown in FIG. 22, the storage battery 3 characteristics are taken into consideration, because of which, as heretofore described, the operating plan compilation unit 118 determines that the storage battery 3 can be more effectively used by supplying the EC 5 with hot water late at night rather than in the daytime, as shown in FIG. 22(B), and formulates an operating plan such that the EC 5 is supplied with hot water using late night power.

Also, regarding the storage battery 3 too, the operating plan compilation unit 118 formulates an operating plan such that charging is carried out using late night power, for which electricity charges are low, as far as possible. When the operating plan is formulated as heretofore described, the storage battery 3 can be charged with surplus power generated in the photovoltaic panel 1 from 9 a.m. to 3 p.m. (refer to the storage battery power of FIG. 22(C)), and in the region of 3,900 Wh of power can be secured by 3 p.m. By this charged power being supplied to the load from 3 p.m. onward, a purchase of power in the daytime period can be kept to practically zero, as shown in FIG. 23.

Herein, when assuming that daytime period electricity charges are three times more than late night power time period electricity charges, the electricity charges can be reduced by in the region of approximately 30 % between the cases shown in FIG. 21 and FIG. 23 (electricity charges in the operating plan of FIG. 23 with respect to electricity charges in the operating plan of FIG. 21B), as an economic cost, even when the EC 5 COP is in the region of 2.5 in the late night time period and in the region of 3.9 (in the region of 1.56 times) in the daytime period.

In the first embodiment, the storage battery 3 and EC 5 are used as energy storing devices, but this is based on the following reason. That is, the storage battery 3 can use electrical energy unchanged as electrical energy, because of which, while energy can be stored in a way that is extremely easy to utilize, the cost per 1 kWh is extremely high. For example, the price of a stationary storage battery in which a 5.53 kWh storage battery is mounted is in the region of 2,500,000 yen at market price, which is extremely expensive. Meanwhile, the market price of the EC 5 is around 700,000 yen, in the region of 7.5 kWh of heat can be stored, and the unit price per 1 kWh of the EC 5 is extremely low at in the region of one-fourth to one-fifth that of the storage battery 3. Consequently, by combining the storage battery 3 and EC 5, the whole system can be configured for a low price.

As heretofore described, the electrical power management device 100 is such that when compiling an energy storing device operating plan, the operating plan is compiled taking energy storing device characteristics and a power charge structure into consideration, because of which an operating plan such that operating costs are kept to a minimum can be executed. Also, limits of heat storing device efficiency and storage battery charging and discharging currents due to external air temperature, a charging current limit caused by an amount of power charged in the storage battery, and the like, are considered in advance, because of which there is an advantage in that, for example, the occurrence of problems such as the external air temperature being low and not being able to secure the necessary amount of stored heat at the planned power consumption, the external air temperature being too high in a time period in which storage battery charging is planned, or the amount of power stored being too high and not being able to secure the planned charging current, can be restricted.

Furthermore, the operating plan is compiled with consideration to an energy conversion efficiency based on the external air temperature and load characteristics of a heat storing device in which a heat pump is utilized, because of which there is an advantage in that errors in predicting power consumption and amount of heat stored due to the heat storing device characteristics in an actual operation can be kept to a minimum. For example, the electrical power management device 100 of the invention is such that, although depending on the electricity charge structure, the operating plan is formulated taking storage battery characteristics into consideration, because of which effective energy management can be carried out by allocating energy to operation of the heat storing device in a time period after noon when the air temperature is comparatively high, and devising a charging plan for the morning, when the air temperature is comparatively low, or for the evening onwards, when the air temperature starts to drop.

Furthermore, the heat storing device is controlled in accordance with a family activity schedule, because of which the amount of hot water can be set appropriately when, for example, the father is away on business, or the like, whereby unnecessary power use can be suppressed. Also, when compiling electricity storing device and heat storing device operating plans, power used is predicted based on the family schedule, because of which, when the father is away as heretofore described, devices such as the lighting and ACN in the father's room do not operate, because of which there is an advantage in that accuracy when estimating load power consumption can also be improved.

In the first embodiment, a description has been given of a case of two kinds of power charge structure, the kinds of late night power time period and daytime power time period shown in FIG. 15, but with regard to a DR and the like to be introduced in the future, verification is being advanced by implementing proof-of-concept experiments and the like for increasing electricity charges in a peak time period beyond normal power charges, and suppressing power consuming activities. In this case, as heretofore described, the operating plan is configured so as to be updated in real time (30-minute units), because of which, when power charges rise in, for example, a specific time period on the same day, or when there is a request to restrict demand, the operating plan can be formulated again so that power charges are minimal in accordance with the amount of power stored in the storage battery 3, the result of predicting the amount of PV power generation, the result of predicting the load power consumption, and the like (an incentive is also used when restricting demand). For example, power charges can be kept to a minimum by the storage battery 3 being charged even in the daytime time period when determining that there is little power stored in the storage battery 3, and controlling so that no electricity is purchased in a time period in which power charges increase.

Also, the same kind of advantage can be obtained by changing the EC 5 heating timing or changing the storage battery 3 discharging timing. Furthermore, even when the weather forecast is incorrect, the operating plan is recovered in real time, because of which there is an advantage in that electricity charges can be kept to a minimum. Further still, even when the electricity charge structure is changed, the latest power charge structure can be imported via the cloud server 31, because of which there is an advantage in that power charges can be kept to a minimum.

Also, in the first embodiment, power used in the load is learned, because of which even when, for example, new devices such as the ACN increase, or when a device is replaced and the power consumption changes, the advantage of power charges being kept to a minimum can be enjoyed, without the user being aware of the device replacement, by learning the power used in the load. When a device is replaced or added, the load power consumption changes until learning is completed, because of which a prediction error increases, but when a new device or a device replacement is detected in the device management unit 110, learning is carried out with consideration to these, whereby a period in which errors in predicting the amount of power used in the load occur can be kept short.

Also, learning is carried out in the same way for the storage battery 3 and EC 5 too, because of which characteristics can be ascertained based on actual measurements rather than on specifications written in a catalog or the like, and an operating plan such that prediction errors are further suppressed can be devised. Furthermore, storage battery capacity is such that the capacity that can actually be used with respect to the catalog value is in the region of 80 to 90 % even for a new storage battery, and depending on the product, there is variation in the extent to which the storage battery can be used.

Consequently, by carrying out learning for storage battery capacity too, there is an advantage in that the storage battery capacity that can actually be used in the electrical power management device 100 can be ascertained, and an operating plan can be devised based on the actual device. Also, storage battery deterioration depends heavily on usage environment and method of use in addition to storage battery variation, because of which accuracy of estimating storage battery deterioration can be increased by storing storage battery charging and discharging history (charging and discharging currents, charge termination voltage, discharge termination voltage, and the like), and environment information (air temperature, storage battery cell temperature), and determining storage battery deterioration from storage results, actually measured storage battery capacity, and the like, and there is an advantage in that more appropriate charge and discharge limit tables can be used.

Also, by using a heat storing device as an energy storing device, there is an advantage in that the device cost when accumulating 1 kWh of energy can be suppressed compared with an electricity storing device, and the capacity of the expensive storage battery can be reduced, whereby the cost of introducing the whole system can be suppressed.

Furthermore, in the first embodiment, the configuration is such that the storage battery 3 characteristic table is switched in accordance with the storage battery capacity retention rate (degree of deterioration), because of which control in accordance with the degree of deterioration of the storage battery 3 can be carried out, and unnecessary deterioration of the storage battery 3 can be suppressed. Also, charging and discharging plans can be compiled with consideration to storage battery 3 control (maximum charging and discharging currents, charge termination voltage, discharge termination voltage, timing of shift from rated current control to rated voltage control (this can also be realized by limiting the maximum charging and discharging currents with respect to the SoC), and the like) in accordance with the degree of deterioration, because of which actual operation of the storage battery 3 can be simulated more or less precisely, and errors when compiling the operating plan can be kept to a minimum.

The storage battery 3 operating plan and EC 5 operating plan are not limited to the method described in the first embodiment. For example, the storage battery 3 charging and discharging characteristics and EC 5 characteristics (COP characteristics and the like) may be approximated in a polynomial expression of, for example, one degree or more ($A \times X^2 + B \times X + C$ or the like: A, B, and C are constants), and the operating plan compiled so that electrical charges are minimal based on the approximated polynomial expression.

First Embodiment Modification Example

In the first embodiment, to help understanding of the description, a description has been given of a case wherein the power measurement unit 116, time management unit 117, operating plan compilation unit 118, device management unit 119, load device control unit 120, family schedule management unit 121, DR treatment unit 122, load power consumption learning management unit 200, PV power generation learning management unit 201, load power consumption prediction management unit 202, PV power generation prediction management unit 203, storage battery characteristic model 204, and EC model 205 in the electrical power management device 100 are configured as hardware, but this not being limiting, all the circuits or one portion of the circuits may be realized as software operated in the CPU 110. Also, the functions of all the circuits may be divided into software and hardware, and the same functions realized.

Also, with regard to functions that need a comparatively large database (memory), such as the load power consumption learning management unit 200 or PV power generation learning management unit 201, the same advantages are achieved by the same functions being mounted in the cloud server 31, without being mounted in the electrical power management device 100, and the system being constructed with the functions divided. Furthermore, charging and discharging history data necessary for estimating the degree of deterioration of the storage battery 3, and the like, is such that the amount of data swells, because of which the same advantages are also achieved by configuring so that the data are managed in the cloud server 31 rather than being managed in the electrical power management device 100.

Further still, when considering that a weather forecast is issued in regional units, the function in the PV power generation prediction management unit 203 that estimates solar radiation from the weather forecast need not necessarily be held in the electrical power management device 100. Rather, a configuration may be such that the solar radiation for each region is estimated based on the weather forecast in the cloud server 31, and a result of the estimation sent to the electrical power management device 100. Also, the invention not being limited to the heretofore described embodiment, changes and omissions can be made as appropriate without departing from the scope of the invention.

List of Reference Signs

1    Photovoltaic panel
2    Photovoltaic power conditioner
3    Storage battery (electricity storing device)
4    Storage battery power conditioner

| | |
|---|---|
| 5 | EC (electrical heat storing device) |
| 10 | System power supply |
| 11 | Commercial system |
| 12 | Communication network |
| 13 | Signal line |
| 14 | Distribution panel |
| 15 | Smart meter |
| 21 | Air conditioner |
| 22 | Refrigerator |
| 23 | Lighting |
| 24 | IH cooking heater |
| 30 | Public network |
| 31 | Cloud server |
| 100 | Electrical power management device |
| 110 | CPU |
| 111 | ROM |
| 112 | RAM |
| 113 | Echonet Lite communication I/F unit |
| 114 | Ethernet communication I/F unit |
| 115 | Display unit |
| 116 | Power measurement unit |
| 117 | Time management unit |
| 118 | Operating plan compilation unit |
| 119 | Device management unit |
| 120 | Load device control unit |
| 121 | Family schedule management unit |
| 122 | DR treatment unit |
| 123 | CPU bus |
| 200 | Load power consumption learning management unit |
| 201 | PV power generation learning management unit |
| 202 | Load power consumption prediction management unit |
| 203 | PV power generation prediction management unit |
| 204 | Storage battery characteristic model |
| 205 | EC model |
| 206 | Storage battery and EC operating plan compilation unit (electricity storing device and heat storing device operating plancompilation unit) |

**Claims**

1. An electrical power management device (100) configured to manage a system having an energy generating device (1, 2), an electricity storing device (3, 4) which is a storage battery (3), an electrical heat storing device (5), and an electric load (21, 22, 23, 24), the electrical power management device (100) comprising:

- a communication unit configured to carry out an exchange of data with at least the electricity storing device (3, 4) and the electrical heat storing device (5);
- an electricity storing device (3, 4) information acquisition unit configured to acquire information of the electricity storing device (3, 4) via the communication unit;
- a heat storing device information acquisition unit configured to acquire information of the electrical heat storing device (5) via the communication unit;
- a power charge structure management unit configured to obtain and manage electricity charge structure information indicating a relation between each time period and an electricity charge;
- a surplus power estimation unit configured to estimate surplus power corresponding to a difference between power generated by the energy generating device (1, 2) and power consumed by the electric load (21, 22, 23, 24); and
- an energy storing device management plan formulation unit (206) configured to compile operation plans of the electricity storing device (3, 4) and the electrical heat storing device (5), wherein,
the energy storing device management plan formulation unit (206) is configured to predict energy conversion efficiency of the electrical heat storing device (5) at each time based on at least an external air temperature prediction information indicating predicted external air temperature, and is configured to calculate power consumption in the electrical heat storing device (5) based on a result of the energy conversion efficiency prediction, and is configured to predict temperature of the storage battery (3) at each time based on at least the external air temperature prediction information, and is configured to determine limit of charging and discharging of the electricity storing device (3, 4) based on a result of temperature prediction of the storage battery (3), and is configured to compile the operation plans of the electricity storing device (3, 4) and the electrical heat storing device (5) based on the power consumption calculated by the electrical heat storing device (5), surplus power information estimated by the surplus power estimation unit, the determined limit of the electricity storing device (3, 4), and electricity charge structure information managed in the power charge structure management unit.

2. The electrical power management device (100) according to claim 1, wherein the electricity charge structure information is configured to include surplus power electricity selling price information of the energy generating device (1, 2).

3. The electrical power management device (100) according to claim 1 or 2, comprising
an energy generating device power generation prediction unit configured to predict an amount of power generated at each time by the energy generating device (1, 2) based on weather forecast information, wherein the surplus power estimation unit is configured to control so as to calculate surplus power using a result of a power generation prediction by the energy creating device power generation prediction unit.

4. The electrical power management device (100) according to claim 1 or 2, comprising:
an energy generating device power generation prediction unit configured to predict an amount of power generated at each time by the energy generating device (1, 2) based on weather forecast information; and a load-use power prediction unit configured to predict an amount of load-use power used at each time in the electric load (21, 22, 23, 24), excepting power consumption used when heating the electrical heat storing device (5), wherein the surplus power estimation unit is configured to control so as to calculate surplus power from a result of a power generation prediction by the energy generating device power generation prediction unit and a result of a load-use power prediction by the load-use power prediction unit.

5. The electrical power management device (100) according to claim 3 or 4, wherein the energy generating device power generation prediction unit is configured to calculate, when predicting power generated by the energy generating device (1, 2) based on weather forecast information, a prediction error of a result of the power generation prediction based on power generation records to date for a time period in which the energy generating device (1, 2) is generating power, and is configured to control so as to correct the power generation prediction result based on a result of calculating the prediction error.

6. The electrical power management device (100)

according to any one of claims 1 to 5,
comprising an external air temperature prediction unit configured to generate external air temperature prediction information based on minimum temperature and maximum temperature forecast information.

7. The electrical power management device (100) according to claim 6,
wherein the external air temperature prediction unit has at least a database for predicting an external air temperature, and the database comprises a database table for each kind of weather in each season.

8. The electrical power management device (100)

according to any one of claims 1 to 7,
wherein when compiling the operating plan of the electrical heat storing device (5), the operating plan is compiled based on an operating point at which the energy conversion efficiency of the electrical heat storing device (5) is at a maximum.

9. The electrical power management device (100)

according to any one of claims 1 to 8,
wherein the energy storing device management plan formulation unit is configured to determine the limit of charging and discharging of the storage battery based on charging power amount information of the storage battery (3) in addition to the result of a temperature prediction by the storage battery (3).

10. The electrical power management device (100)

according to any one of claims 1 to 9,
wherein the charging and discharging limit information is at least a maximum charging and discharging power and a maximum charging and discharging current of the storage battery (3), or at least one of a charge termination voltage and discharge termination voltage of the storage battery (3).

11. The electrical power management device (100) according to claim 1, comprising
a capacity retention rate estimation unit configured to estimate a degree of deterioration of the storage battery (3), wherein the limit of charging and discharging of the storage battery (3) is determined based on the degree of deterioration estimated by the capacity retention rate estimation unit.

12. The electrical power management device (100) according to any one of claims 1 to 6,

further comprising
a database indicating an external air temperature for each kind of weather, wherein weather forecast is acquired while the external air temperature corresponding to the weather indicated by the weather forecast is acquired from the database, and
the external air temperature prediction information is generated by correcting the external air temperature acquired from the database based on a measurement value of the external air temperature.

## Patentansprüche

1. Elektroenergie-Verwaltungsvorrichtung (100), die dazu konfiguriert ist, ein System zu verwalten, das eine Energieerzeugungsvorrichtung (1, 2), eine Elektrizitätsspeichervorrichtung (3, 4), die eine Speicherbatterie (3) ist, eine Elektrowärme-Speichervorrichtung (5) und einen elektrischen Verbraucher (21, 22, 23, 24) aufweist, wobei die Elektroenergie-Verwaltungsvorrichtung (100) Folgendes aufweist:

- eine Kommunikationseinheit, die dazu konfiguriert ist, einen Austausch von Daten zumindest mit der Elektrizitätsspeichervorrichtung (3, 4) und der Elektrowärme-Speichervorrichtung (5) durchzuführen;
- eine Einheit zur Erfassung von Informationen über die Elektrizitätsspeichervorrichtung (3, 4), die dazu konfiguriert ist, Informationen über die Elektrizitätsspeichervorrichtung (3, 4) mittels der Kommunikationseinheit zu erfassen;
- eine Einheit zur Erfassung von Informationen über die Wärmespeichervorrichtung, die dazu konfiguriert ist, Informationen über die Elektrowärme-Speichervorrichtung (5) mittels der Kommunikationseinheit zu erfassen;
- eine Energiekostenstruktur-Verwaltungseinheit, die dazu konfiguriert ist, Informationen über eine Elektrizitätskostenstruktur zu erhalten und zu verwalten, die eine Beziehung zwischen einer jeweiligen Zeitperiode und Elektrizitätskosten angeben;
- eine Überschussenergie-Schätzungseinheit, die dazu konfiguriert ist, die Überschussenergie zu schätzen, die einer Differenz zwischen der von der Energieerzeugungsvorrichtung (1, 2) erzeugten Energie und der von dem elektrischen Verbraucher (21, 22, 23, 24) verbrauchten Energie entspricht; und
- eine Einheit zur Formulierung eines Verwaltungsplans für die Energiespeichervorrichtung (206), die dazu konfiguriert ist, Betriebspläne der Elektrizitätsspeichervorrichtung (3, 4) und der Elektrowärme-Speichervorrichtung (5) zusammenzustellen,
wobei die Einheit zur Formulierung eines Verwaltungsplans für die Energiespeichervorrichtung (206) dazu konfiguriert ist, die Energieumwandlungseffizienz der Elektrowärme-Speichervorrichtung (5) zu einem jeweiligen Zeitpunkt, basierend auf zumindest einer Vorhersageinformation über eine Außenlufttemperatur vorherzusagen, welche eine vorhergesagte Außenlufttemperatur angibt, und dazu konfiguriert ist, den Energieverbrauch in der Elektrowärme-Speichervorrichtung (5), basierend auf einem Ergebnis der Vorhersage der Energieumwandlungseffizienz zu berechnen, und dazu konfiguriert ist, eine Temperatur der Speicherbatterie (3) zu jedem Zeitpunkt, basierend auf zumindest der Vorhersageinformation über die Außenlufttemperatur vorherzusagen, und dazu konfiguriert ist, die Grenze des Ladens und Entladens der Elektrizitätsspeichervorrichtung (3, 4), basierend auf einem Ergebnis der Temperaturvorhersage der Speicherbatterie (3) zu bestimmen, und dazu konfiguriert ist, die Betriebspläne der Elektrizitätsspeichervorrichtung (3, 4) und der Elektrowärme-Speichervorrichtung (5), basierend auf den folgenden Werten zusammenzustellen: dem von der Elektrowärme-Spei-

**EP 3 247 016 B1**

chervorrichtung (5) berechneten Energieverbrauch, der von der Überschussenergie-Schätzungseinheit geschätzten Information über die Überschussenergie, der bestimmten Grenze der Elektrizitätsspeichervorrichtung (3, 4) und der in der Energiekostenstruktur-Verwaltungseinheit verwalteten Informationen über die Elektrizitätskostenstruktur.

2. Elektroenergie-Verwaltungsvorrichtung (100) nach Anspruch 1, wobei die Informationen über die Elektrizitätskostenstruktur derart konfiguriert sind, dass sie Informationen über den Verkaufspreis von Überschussenergie der Energieerzeugungsvorrichtung (1, 2) enthalten.

3. Elektroenergie-Verwaltungsvorrichtung (100) nach Anspruch 1 oder 2, die Folgendes aufweist:

   eine Einheit zur Vorhersage der Energieerzeugung der Energieerzeugungsvorrichtung, die dazu konfiguriert ist, basierend auf Wettervorhersageinformationen eine Energiemenge vorherzusagen, die zu einem jeweiligen Zeitpunkt von der Energieerzeugungsvorrichtung (1, 2) erzeugt wird,
   wobei die Überschussenergie-Schätzungseinheit dazu konfiguriert ist, die Überschussenergie unter Verwendung eines Ergebnisses einer Energieerzeugungsvorhersage der Einheit zur Vorhersage der Energieerzeugung der Energieerzeugungsvorrichtung zu berechnen.

4. Elektroenergie-Verwaltungsvorrichtung (100) nach Anspruch 1 oder 2, die Folgendes aufweist:

   eine Einheit zur Vorhersage der Energieerzeugung der Energieerzeugungsvorrichtung, die dazu konfiguriert ist, basierend auf Wettervorhersageinformationen eine Energiemenge vorherzusagen, die zu einem jeweiligen Zeitpunkt von der Energieerzeugungsvorrichtung (1, 2) erzeugt wird; und
   eine Verbrauchernutzungsenergie-Vorhersageeinheit, die dazu konfiguriert ist, eine Menge an Verbrauchernutzungsenergie vorherzusagen, die zu einem jeweiligen Zeitpunkt in dem elektrischen Verbraucher (21, 22, 23, 24) verwendet wird, ausgenommen den Energie-verbrauch, der verwendet wird, wenn die Elektrowärme-Speichervor-richtung (5) geheizt wird, wobei die Überschussenergie-Schätzungseinheit dazu konfiguriert ist, Überschussenergie aus einem Ergebnis einer Energieerzeugungsvorhersage durch die Einheit zur Vorhersage der Energieerzeugung der Energieerzeugungsvorrichtung und einem Ergebnis einer Vorhersage über die Verbrauchernutzungsenergie durch die Verbrauchernutzungsenergie-Vorhersageeinheit zu berechnen.

5. Elektroenergie-Verwaltungsvorrichtung (100) nach Anspruch 3 oder 4, wobei die Einheit zur Vorhersage der Energieerzeugung der Energieerzeugungsvorrichtung dazu konfiguriert ist, bei dem Vorhersagen der von der Energieerzeugungsvorrichtung (1, 2) erzeugten Energie, basierend auf Wettervorhersageinformationen, einen Vorhersagefehler eines Ergebnisses der Energieerzeugungsvorhersage, basierend auf bisherigen Energieerzeugungsaufzeichnungen für einen Zeitraum zu berechnen, in dem die Energieerzeugungsvorrichtung (1, 2) Energie erzeugt, und dazu konfiguriert ist, das Energieerzeugungs-Vorhersageergebnis, basierend auf einem Ergebnis des Berechnens des Vorhersagefehlers zu korrigieren.

6. Elektroenergie-Verwaltungsvorrichtung (100)

   nach einem der Ansprüche 1 bis 5,
   die eine Außenlufttemperatur-Vorhersageeinheit aufweist, die dazu konfiguriert ist, Vorhersageinformationen über die Außenlufttemperatur, basierend auf Vorhersageinformationen über eine Mindesttemperatur und eine Höchsttemperatur zu erzeugen.

7. Elektroenergie-Verwaltungsvorrichtung (100) nach Anspruch 6,
   wobei die Außenlufttemperatur-Vorhersageeinheit zumindest eine Datenbank zur Vorhersage einer Außenlufttemperatur aufweist und wobei die Datenbank eine Datenbanktabelle für jede Wetterart in jeder Jahreszeit aufweist.

8. Elektroenergie-Verwaltungsvorrichtung (100)

   nach einem der Ansprüche 1 bis 7,
   wobei bei dem Zusammenstellen des Betriebsplans der Elektrowärme-Speichervorrichtung (5) der Betriebsplan, basierend auf einem Betriebspunkt zusammengestellt wird, an dem sich die Energieumwandlungseffizienz der Elektrowärme-Speichervorrichtung (5) auf einem Maximum befindet.

9. Elektroenergie-Verwaltungsvorrichtung (100)

nach einem der Ansprüche 1 bis 8,
wobei die Einheit zur Formulierung eines Verwaltungsplans für die Energiespeichervorrichtung dazu konfiguriert ist, die Grenze des Ladens und Entladens der Speicherbatterie, basierend auf Informationen über die Ladeenergiemenge der Speicherbatterie (3) zusätzlich zu dem Ergebnis einer Temperaturvorhersage durch die Speicherbatterie (3) zu bestimmen.

10. Elektroenergie-Verwaltungsvorrichtung (100)

nach einem der Ansprüche 1 bis 9,
wobei die Informationen über die Grenze des Ladens und Entladens durch zumindest eine maximale Lade- und Entladeenergie und einen maximalen Lade- und Entladestrom der Speicherbatterie (3) oder durch zumindest eine Ladebeendigungsspannung und eine Entladebeendigungsspannung der Speicherbatterie (3) gegeben sind.

11. Elektroenergie-Verwaltungsvorrichtung (100) nach Anspruch 1,
die eine Kapazitätserhaltungsraten-Schätzeinheit aufweist, die dazu konfiguriert ist, einen Verschlechterungsgrad der Speicherbatterie (3) zu schätzen, wobei die Grenze des Ladens und Entladens der Speicherbatterie (3), basierend auf dem Verschlechterungsgrad der Kapazitätserhaltungsraten-Schätzeinheit bestimmt wird.

12. Elektroenergie-Verwaltungsvorrichtung (100)

nach einem der Ansprüche 1 bis 6,
die ferner eine Datenbank aufweist, die eine Außenlufttemperatur für jede Wetterart angibt, wobei eine Wettervorhersage erfasst wird, während die Außenlufttemperatur, die mit dem durch die Wettervorhersage angegebenen Wetter korrespondiert, aus der Datenbank erfasst wird, und
wobei die Vorhersageinformation über die Außenlufttemperatur durch Korrigieren der aus der Datenbank erfassten Außenlufttemperatur, basierend auf einem Messwert der Außenlufttemperatur erzeugt wird.

**Revendications**

1. Dispositif de gestion de puissance électrique (100) configuré pour générer un système ayant un dispositif de génération d'énergie (1, 2), un dispositif de stockage d'électricité (3, 4) qui est une batterie de stockage (3), un dispositif de stockage de chaleur électrique (5), et une charge électrique (21, 22, 23, 24), le dispositif de gestion de puissance électrique (100) comprenant :

- une unité de communication configurée pour exécuter un échange de données avec au moins le dispositif de stockage d'électricité (3, 4) et le dispositif de stockage de chaleur électrique (5) ;
- une unité d'acquisition d'information de dispositif de stockage d'électricité (3, 4) configurée pour acquérir une information du dispositif de stockage d'électricité (3, 4) via l'unité de communication ;
- une unité d'acquisition d'information de dispositif de stockage de chaleur configurée pour acquérir une information du dispositif de stockage de chaleur électrique (5) via l'unité de communication ;
- une unité de gestion de structure de charge de puissance configurée pour obtenir et gérer une information de structure de charge d'électricité indiquant une relation entre chaque période temporelle et une charge d'électricité ;
- une unité d'estimation de surplus de puissance configurée pour estimer un surplus de puissance correspondant à une différence entre une puissance générée par le dispositif de génération d'énergie (1, 2) et une puissance consommée par la charge électrique (21, 22, 23, 24) ; et
- une unité de formulation de plan de gestion de dispositif de stockage d'énergie (206) configurée pour compiler des plans de fonctionnement du dispositif de stockage d'électricité (3, 4) et du dispositif de stockage de chaleur électrique (5), dans lequel
l'unité de formulation de plan de gestion de dispositif de stockage d'énergie (206) est configurée pour prédire une efficacité de conversion d'énergie du dispositif de stockage de chaleur électrique (5) à chaque fois sur la base d'au moins une information de prédiction de température d'air extérieur indiquant une température d'air extérieur prédite, et est configurée pour calculer une consommation de puissance dans le dispositif de stockage de chaleur électrique (5) sur la base d'un résultat de la prédiction d'efficacité de conversion d'énergie, et est configurée pour prédire une température de la batterie de stockage (3) à chaque fois sur la base d'au moins l'information de prédiction de température d'air extérieur, et est configurée pour déterminer une limite de chargement et de déchargement du dispositif de stockage d'électricité (3, 4) sur la base d'un résultat de prédiction de température de la batterie de stockage (3), et est configurée pour compiler les plans de fonctionnement du dispositif de stockage d'électricité (3, 4) et du dispositif de stockage de chaleur électrique (5) sur la base de la consommation de puissance calculée par le dispositif de stockage de chaleur électrique (5), de l'information de surplus de puissance estimé par l'unité d'estimation de surplus de puissance, de la limite déterminée du dispositif de stockage d'électricité (3, 4), et de l'information de structure de charge d'électricité gérée dans l'unité de gestion de structure de charge de puissance.

**2.** Dispositif de gestion de puissance électrique (100) selon la revendication 1, dans lequel l'information de structure de charge d'électricité est configurée pour inclure une information de prix de vente de surplus de puissance électrique du dispositif de génération d'énergie (1, 2).

**3.** Dispositif de gestion de puissance électrique (100)

selon la revendication 1 ou 2, comprenant une unité de prédiction de génération de puissance de dispositif de génération d'énergie configurée pour prédire une quantité de puissance générée à chaque fois par le dispositif de génération d'énergie (1, 2) sur la base d'une information météorologique, dans lequel l'unité d'estimation de surplus de puissance est configurée pour commander de manière à calculer un surplus de puissance en utilisant un résultat d'une prédiction de génération de puissance par l'unité de prédiction de génération de puissance de dispositif de création d'énergie.

**4.** Dispositif de gestion de puissance électrique (100) selon la revendication 1 ou 2, comprenant : une unité de prédiction de génération de puissance de dispositif de génération d'énergie configurée pour prédire une quantité de puissance générée à chaque fois par le dispositif de génération d'énergie (1, 2) sur la base d'une information météorologique ; et une unité de prédiction de puissance d'utilisation de charge configurée pour prédire une quantité de puissance d'utilisation de charge utilisée à chaque fois dans la charge électrique (21, 22, 23, 24), à l'exception d'une consommation de puissance utilisée lors du chauffage du dispositif de stockage de chaleur électrique (5), dans lequel l'unité d'estimation de surplus de puissance est configurée pour commander de manière à calculer un surplus de puissance à partir d'un résultat d'une prédiction de génération de puissance par l'unité de prédiction de génération de puissance de dispositif de génération d'énergie et d'un résultat d'une prédiction de puissance d'utilisation de charge par l'unité de prédiction de puissance d'utilisation de charge.

**5.** Dispositif de gestion de puissance électrique (100)

selon la revendication 3 ou 4, dans lequel l'unité de prédiction de génération de puissance de dispositif de génération d'énergie est configurée pour calculer, lors d'une prédiction d'une puissance générée par le dispositif de génération d'énergie (1, 2) sur la base d'une information météorologique, une erreur de prédiction d'un résultat de la prédiction de génération de puissance sur la base d'enregistrements de génération de puissance à dater pour une période temporelle dans laquelle le dispositif de génération d'énergie (1, 2) est en train de générer une puissance, et est configurée pour commander de manière à corriger le résultat de prédiction de génération de puissance sur la base d'un résultat de calcul de l'erreur de prédiction.

**6.** Dispositif de gestion de puissance électrique (100)

selon l'une quelconque des revendications 1 à 5, comprenant une unité de prédiction de température d'air extérieur configurée pour générer une information de prédiction de température d'air extérieur sur la base d'une information météorologique de température minimum et de température maximum.

**7.** Dispositif de gestion de puissance électrique (100)

selon la revendication 6, dans lequel l'unité de prédiction de température d'air extérieur a au moins une base de données destinée à prédire une température d'air extérieure, et la base de données comprend une table de base de données pour chaque type de temps dans chaque saison.

8.  Dispositif de gestion de puissance électrique (100)

    selon l'une quelconque des revendications 1 à 7,
    dans lequel, lors de la compilation du plan de fonctionnement du dispositif de stockage de chaleur électrique (5), le plan de fonctionnement est compilé sur la base d'un point de fonctionnement auquel l'efficacité de conversion d'énergie du dispositif de stockage de chauffage électrique (5) est à un maximum.

9.  Dispositif de gestion de puissance électrique (100),

    selon l'une quelconque des revendications 1 à 8,
    dans lequel l'unité de formulation de plan de gestion de dispositif de stockage d'énergie est configurée pour déterminer la limite de chargement et de déchargement de la batterie de stockage sur la base d'une information de quantité de puissance de chargement de la batterie de stockage (3) en addition au résultat d'une prédiction de température par la batterie de stockage (3).

10. Dispositif de gestion de puissance électrique (100)

    selon l'une quelconque des revendications 1 à 9,
    dans lequel l'information de limite de chargement et de déchargement est au moins une puissance de chargement et de déchargement maximum et un courant de chargement et de déchargement maximum de la batterie de stockage (3), ou au moins une tension parmi une tension d'arrêt de charge et une tension d'arrêt de décharge de la batterie de stockage (3).

11. Dispositif de gestion de puissance électrique (100)

    selon la revendication 1,
    comprenant
    une unité d'estimation de taux de rétention de capacité configurée pour estimer un degré de détérioration de la batterie de stockage (3), dans lequel la limite de chargement et de déchargement de la batterie de stockage (3) est déterminée sur la base du degré de détérioration estimé par l'unité d'estimation de taux de rétention de capacité.

12. Dispositif de gestion de puissance électrique (100)

    selon l'une quelconque des revendications 1 à 6,
    comprenant en outre
    une base de données indiquant une température d'air extérieur pour chaque type de temps, dans lequel l'information météorologique est acquise tandis que la température d'air extérieur correspondant au temps indiqué par l'information météorologique est acquise à partir de la base de données, et
    l'information de prédiction de température d'air extérieur est générée en corrigeant la température d'air extérieur acquise à partir de la base de données sur la base d'une valeur de mesurage de la température d'air extérieur.

*FIG.1*

ENERGY CREATING DEVICE

PHOTOVOLTAIC PANEL — 1

PHOTOVOLTAIC PCN — 2

ENERGY STORING DEVICE

STORAGE BATTERY — 3

STORAGE BATTERY PCN — 4

HEAT STORING DEVICE

EC — 5

ELECTRICAL POWER MANAGEMENT DEVICE — 100

CLOUD — 31

30

11

12

13

POWER MEASURING CIRCUIT / DISTRIBUTION PANEL — 14

SMART METER — 15

10

ACN — 21

REFRIGERATOR — 22

LIGHTING — 23

IH COOKING HEATER — 24

SUBSCRIBER LOAD

EP 3 247 016 B1

48

## FIG.2

COMMUNICATION NETWORK 12

113 — Echonet Lite COMMUNICATION I/F

110 — CPU

111 — ROM

112 — RAM

115 — DISPLAY UNIT

114 — Ethernet COMMUNICATION I/F

30 — PUBLIC NETWORK

100

123

POWER MEASUREMENT RESULT 13

POWER MEASUREMENT UNIT — 116

TIME MANAGEMENT UNIT — 117

OPERATING PLAN COMPILATION UNIT — 118

DEVICE MANAGEMENT UNIT — 119

LOAD DEVICE CONTROL UNIT — 120

FAMILY SCHEDULE MANAGEMENT UNIT — 121

DR TREATMENT UNIT — 122

EP 3 247 016 B1

FIG.3

STORAGE BATTERY AND EC OPERATING PLAN COMPILATION UNIT

## FIG.4

CHARGING CURRENT

CHARGE AT
RATED CURRENT

CHARGE AT
RATED VOLTAGE

0                          1.0   SoC

(A)

SoC

CHARGE AT
RATED
CURRENT

CHARGE AT
RATED
VOLTAGE

0                 1.0          2.0   CHARGING TIME

(B)

STORAGE BATTERY VOLTAGE

0                          1.0   SoC

(C)

# FIG.5

STORAGE BATTERY CAPACITY

1.0 --

0.5 --

0         2000         4000    CHARGING AND
                               DISCHARGING QUANTITY

(A)

MAXIMUM CHARGING CURRENT

STORAGE BATTERY CELL TEMPERATURE
IS ROOM TEMPERATURE (20°C TO 25°C)

STORAGE BATTERY
CELL TEMPERATURE
IS LOW OR HIGH

0                              1.0   SoC

(B)

MAXIMUM DISCHARGING CURRENT

STORAGE BATTERY CELL TEMPERATURE
IS ROOM TEMPERATURE (20°C TO 25°C)

STORAGE BATTERY
CELL TEMPERATURE
IS LOW OR HIGH

0                              1.0   SoC

(C)

## FIG.6

(A)

(B)

## FIG.7

```
      ┌─────────────────────────┐
      │   OPERATING PLAN        │
      │  COMPILATION STARTS     │
      └────────────┬────────────┘
                   ▼
      ┌─────────────────────────┐
      │   ELECTRICITY CHARGE    │──── S11
      │ INFORMATION ACQUIRED    │
      └────────────┬────────────┘
                   ▼
    ┌─────────────────────────────────┐
    │    DATE, DAY, TIME, EXTERNAL AIR │
    │ TEMPERATURE INFORMATION, AND     │──── S12
    │    WEATHER FORECAST              │
    │  INFORMATION ACQUIRED           │
    └────────────┬────────────────────┘
                 ▼
    ┌─────────────────────────────────┐
    │  AMOUNT OF PV POWER GENERATED   │
    │  AND EXTERNAL AIR TEMPERATURE   │──── S13
    │   PREDICTED AND CORRECTED       │
    └────────────┬────────────────────┘
                 ▼
    ┌─────────────────────────────────┐
    │  LOAD POWER CONSUMPTION         │──── S14
    │  PREDICTED AND CORRECTED        │
    └────────────┬────────────────────┘
                 ▼
    ┌─────────────────────────────────┐
    │   SURPLUS POWER                 │──── S15
    │    PREDICTED                    │
    └────────────┬────────────────────┘
                 ▼
```

LATEST NEXT-DAY WEATHER FORECAST ACQUIRED? — S16

YES — S17

NEXT-DAY STORAGE BATTERY AND EC OPERATING PLAN FORMULATED

NO

NEXT-DAY STORAGE BATTERY AND EC OPERATING PLAN CORRECTED IN REAL TIME — S18

OPERATING PLAN NOTIFICATION — S19

EACH KIND OF MEASUREMENT DATA ACQUIRED — S20

PREDICTION ERRORS CORRECTED — S21

OPERATING PLAN COMPILATION TIME? — S22

NO

YES

## FIG.8

PV POWER GENERATION
PREDICTION STARTS

↓

PHOTOVOLTAIC PANEL 1 INSTALLATION
ANGLE, ORIENTATION, LONGITUDE, AND
LATITUDE INFORMATION ACQUIRED ⟿ S31

↓

WETHER FORECAST
INFORMATION ACQUIRED ⟿ S32

↓

PV POWER GENERATION LEARNING BASED
ON ACTUAL MEASUREMENT RESULTS ⟿ S33

↓

EXTERNAL AIR TEMPERATURE LEARNING BASED
ON ACTUAL MEASUREMENT RESULTS ⟿ S34

↓

SORAR RADIATION (SAME DAY) ESTIMATION
BASED ON WEATHER FORECAST ⟿ S35

↓

SORAR RADIATION (SAME DAY) CORRECTION
BASED ON ACTUAL MEASUREMENT RESULTS ⟿ S36

↓

EXTERNAL AIR TEMPERATURE (SAME DAY)
PRECDICTION BASED ON WEATHER FORECAST ⟿ S37

↓

EXTERNAL AIR TEMPERATURE CORRECTION
BASED ON ACTUAL MEASUREMENT RESULTS
(SAME-DAY EXTERNAL AIR TEMPERATURE PREDICTION) ⟿ S38

↓

PV POWER GENERATION (SAME DAY)
PREDICTION ⟿ S39

↓

SORAR RADIATION (NEXT DAY) PREDICTION
BASED ON WEATHER FORECAST ⟿ S40

↓

EXTERNAL AIR TEMPERATURE (NEXT DAY)
PRECDICTION BASED ON WEATHER FORECAST ⟿ S41

↓

PV POWER GENERATION
(NEXT DAY) PREDICTION ⟿ S42

↓

PV POWER GENERATION
PREDICTION ENDS

# FIG.9

SOLAR RADIATION PREDICTION

CLEAR

CLOUDY

RAIN

TIME

0    6    12    18    24

# FIG.10

EXTERNAL AIR TEMPERATURE

MAXIMUM
TEMPERATURE

MINIMUM
TEMPERATURE

CLOUDY    CLEAR

RAIN

TIME

0    6    12    18    24

## FIG.11

SOLAR RADIATION
PREDICTION

24 HOURS' WORTH PREDICTED
IN 30-MINUTE UNITS

TIME

(A)

SOLAR RADIATION
CALCULATION VALUE

SOLAR RADIATION CALCULATED EVERY
30-MINUTES BY CONVERTING FROM
30-MINUTE AVERAGE POWER GENERATION

TIME

(B)

SOLAR RADIATION
PREDICTION

RESULT OF SOLAR RADIATION CORRECTION
BASED ON AMOUNT OF PV POWER GENERATION

RESULT OF SOLAR RADIATION
PREDICTION BASED ON
WEATHER FORECAST

TIME

SOLAR RADIATION
CORRECTION
COEFFICIENT

$$= \frac{\Sigma \text{ SOLAR RADIATION CONVERSION RESULT}[1]}{\Sigma \text{ SOLAR RADIATION PREDICTION RESULT}[1]}$$

[1]: TOTAL FROM 0 TO CURRENT TIME

(C)

# FIG.12

PREDICTED EXTERNAL AIR TEMPERATURE

(A)

ACTUAL MEASUREMENT EXTERNAL AIR TEMPERATURE

(B)

TEMPERATURE

$$\text{EXTERNAL AIR TEMPERATURE (MAXIMUM) CORRECTION COEFFICIENT} = \frac{\dfrac{\Sigma \text{ [ACTUAL MEASUREMENT EXTERNAL AIR TEMPERATURE } - \text{ ACTUAL MEASUREMENT MINIMUM AIR TEMPERATURE]}^{*2}}{\text{(MINIMUM AIR TEMPERATURE DETECTION TIME } - \text{ CURRENT TIME)}}}{\dfrac{\Sigma \text{ [PREDICTED EXTERNAL AIR TEMPERATURE } - \text{ PREDICTED MINIMUM AIR TEMPERATURE]}^{*3}}{\text{(PREDICTED MINIMUM AIR TEMPERATURE TIME } - \text{ CURRENT TIME)}}}$$

$$\text{EXTERNAL AIR TEMPERATURE (MINIMUM) CORRECTION COEFFICIENT} = \frac{\dfrac{\Sigma \text{ [ACTUAL MEASUREMENT EXTERNAL AIR TEMPERATURE } - \text{ ACTUAL MEASUREMENT MAXIMUM AIR TEMPERATURE]}^{*4}}{\text{(MAXIMUM AIR TEMPERATURE DETECTION TIME } - \text{ CURRENT TIME)}}}{\dfrac{\Sigma \text{ [PREDICTED EXTERNAL AIR TEMPERATURE } - \text{ PREDICTED MAXIMUM AIR TEMPERATURE]}^{*5}}{\text{(PREDICTED MAXIMUM AIR TEMPERATURE TIME } - \text{ CURRENT TIME)}}}$$

* 2: TOTAL FROM MINIMUM AIR TEMPERATURE DETECTION TIME TO CURRENT TIME
* 3: TOTAL FROM PREDICTED MINIMUM AIR TEMPERATURE TIME TO CURRENT TIME
* 4: TOTAL FROM MAXIMUM AIR TEMPERATURE DETECTION TIME TO CURRENT TIME
* 5: TOTAL FROM PREDICTED MAXIMUM AIR TEMPERATURE TIME TO CURRENT TIME

(C)

# FIG.13

```
┌─────────────────────────────┐
│   LOAD POWER CONSUMPTION     │
│     PREDICTION STARTS        │
└─────────────────────────────┘
              │
              ▼
┌─────────────────────────────┐
│      LEARNING BASED          │
│  ON ACTUAL MEASUREMENT       │── S61
│  LOAD POWER CONSUMPTION      │
│         RESULT               │
└─────────────────────────────┘
              │
              ▼
┌─────────────────────────────┐
│       LOAD POWER             │
│  CONSUMPTION PREDICTION      │── S62
│       (SAME DAY)             │
└─────────────────────────────┘
              │
              ▼
┌─────────────────────────────┐
│  LOAD POWER CONSUMPTION      │
│   CORRECTION (RESULT OF      │
│   SAME-DAY LOAD POWER        │── S63
│  CONSUMPTION PREDICTION)     │
└─────────────────────────────┘
              │
              ▼
┌─────────────────────────────┐
│  LOAD POWER CONSUMPTION      │── S64
│   PREDICTION (NEXT DAY)      │
└─────────────────────────────┘
              │
              ▼
┌─────────────────────────────┐
│  LOAD POWER CONSUMPTION      │
│     PREDICTION ENDS          │
└─────────────────────────────┘
```

# FIG.14

POWER CONSUMPTION kWh

(A)

POWER CONSUMPTION kWh

(B)

POWER CONSUMPTION kWh

(C)

# FIG.15

# FIG.16

EC USAGE PLAN PREDICTION

| USAGE TIME | AMOUNT OF HOT WATER USED |
|------------|--------------------------|
| 7:30       | 40 LITERS                |
| 8:30       | 10 LITERS                |
| ⋮          | ⋮                        |
| 19:30      | 450 LITERS               |

60

# FIG.17A

NEXT-DAY STORAGE
BATTERY AND EC OPERATING PLAN
COMPILATION STARTS

↓

EC INFORMATION ACQUIRED — S201

↓

EC CHARACTERISTIC
INFORMATION ACQUIRED — S202

↓

STORAGE BATTERY
INFORMATION ACQUIRED — S203

↓

STORAGE BATTERY CHARACTERISTIC
INFORMATION ACQUIRED — S204

↓

POWER CHARGE CALCULATION 1 FOR EC LATE
NIGHT TIME PERIOD HOT WATER SUPPLY — S205

↓

PV SURPLUS
POWER SOLD? (ELECTRICITY SELLING
PRICE > ELECTRICITY PURCHASING
PRICE?) — S211

NO → NEXT-DAY STORAGE
BATTERY AND EC
OPERATING
PLAN COMPILATION 2 — S261

↓

NEXT-DAY STORAGE
BATTERY AND EC
OPERATING PLAN
COMPILATION 2 ENDS

YES ↓

STORAGE BATTERY CHARGED LATE
AT NIGHT? (DAYTIME ELECTRICITY
PURCHASING PRICE > LATE NIGHT
PRICE/STORAGE BATTERY PCN
EFFICIENCY?) — S212

NO →

STORAGE BATTERY
FULLY CHARGED? — S242

NO → STORAGE BATTERY
CHARGING AND
DISCHARGING OPERATING
PLAN COMPILATION 1 — S244

YES → NO LATE NIGHT
STORAGE BATTERY
CHARGING — S243

YES ↓

LATE NIGHT STORAGE
BATTERY CHARGING
OPERATING PLAN
COMPILATION 1 — S213

↓

EC DAYTIME PERIOD
SUPPLY OPERATING PLAN
COMPILATION 1 — S214

↓

NIGHT TIME HOT WATER
SUPPLY PROFITABLE? — S215

NO → TO S216

YES → TO S217

61

# FIG.17B

S215     S216

**STORAGE BATTERY OPERATING PLAN COMPILATION (MAXIMUM ELECTRICITY SELLING MODE)**

S215     S217

**STORAGE BATTERY OPERATING PLAN COMPILATION (MAXIMUM ELECTRICITY SELLING MODE)**

S218

NO ←— **POWER USED AT NIGHT TIME EXCEEDING CONTRACTED POWER?**

YES

S219

NO ←— **REVIEW EC OPERATING PLAN?**

YES

S221

**STORAGE BATTERY LATE NIGHT TIME PERIOD OPERATING PLAN REVIEW 1**

**EC LATE NIGHT TIME PERIOD OPERATING PLAN REVIEW 1**   S220

**NEXT-DAY STORAGE BATTERY AND EC OPERATING PLAN COMPILATION ENDS**

## FIG.18A

NEXT-DAY STORAGE BATTERY AND EC OPERATING PLAN COMPILATION 2 STARTS

ACQUIRE EC POWER CONSUMPTION IN THE PV SURPLUS POWER PERIOD — S301

CALCULATE EC PURCHASED POWER AND PV SURPLUS POWER IN THE PV SURPLUS POWER PERIOD — S302

PV SURPLUS POWER SOLD? (LATE NIGHT ELECTRICITY CHARGE > ELECTRICTY SELLING PRICE ∗ STORAGE BATTERY PCN EFFICIENCY?) — S303 — NO → TO S351

YES

ELECTRICITY CHARGE CALCULATION 10 FOR WHEN HOT WATER SUPPLIED IN EC LATE NIGHT TIME PERIOD — S311

ELECTRICITY CHARGE CALCULATION 10 FOR WHEN HOT WATER SUPPLIED IN EC DAYTIME PERIOD — S312

DAYTIME HOT WATER SUPPLY CHARGE < LATE NIGHT HOT WATER SUPPLY CHARGE? — S313 — NO → TO S331

YES

EC DAYTIME PERIOD OPERATING PLAN REVIEW 10 — S321

PV SURPLUS POWER CALCULATION — S322

STORAGE BATTERY CHARGED LATE AT NIGHT? (DAYTIME ELECTRICTY PURCHASING PRICE > LATE NIGHT PRICE/STORAGE BATTERY PCN EFFICIENCY?) — S323 — YES

NO — S325

STORAGE BATTERY OPERATING PLAN COMPILATION (SURPLUS POWER CHARGING AND DISCHARGING) 10

STORAGE BATTERY OPERATING PLAN COMPILATION (INCLUDING LATE NIGHT CHARGING) 11 — S324

NEXT-DAY STORAGE BATTERY AND EC OPERATING PLAN COMPILATION 2 ENDS

## FIG.18B

S313

ELECTRICITY CHARGE CALCULATION 10
FOR WHEN HOT WATER SUPPLIED IN EC
DAYTIME AND LATE NIGHT TIME PERIODS ⎯ S331

LATE NIGHT HOT WATER SUPPLY PROFITABLE? ⎯ S332

NO

YES ⎯ S333

EC DAYTIME AND LATE NIGHT
TIME PERIOD OPERATING PLAN
COMPILATION 10 ⎯ S334

EC LATE NIGHT TIME
PERIOD OPERATING
PLAN COMPILATION 10

STORAGE BATTERY CHARGED LATE AT NIGHT?
(DAYTIME ELECTRICTY PURCHASING PRICE > LATE
NIGHT PRICE/STORAGE BATTERY PCN EFFICIENCY?) ⎯ S335

NO

YES

STORAGE BATTERY LATE NIGHT
TIME PERIOD OPERATING
PLAN COMPILATION 10 ⎯ S336

POWER USED AT NIGHT TIME
EXCEEDING CONTRACTED POWER? ⎯ S337

NO

YES

ELECTRICITY CHARGE LOWER FOR EC DAYTIME USE? ⎯ S338

NO

YES

STORAGE BATTERY LATE
NIGHT TIME PERIOD
OPERATING
PLAN REVIEW 10 ⎯ S339

EC LATE NIGHT TIME
PERIOD OPERATING
PLAN REVIEW 10 ⎯ S340

NEXT-DAY STORAGE BATTERY
AND EC OPERATING PLAN
COMPILATION 2 ENDS

## FIG.18C

S303

ELECTRICITY CHARGE CALCULATION 11 FOR WHEN HOT WATER SUPPLIED IN EC LATE NIGHT TIME PERIOD — S351

ELECTRICITY CHARGE CALCULATION 11 FOR WHEN HOT WATER SUPPLIED IN EC DAYTIME PERIOD — S352

S353
DAYTIME HOT WATER SUPPLY CHARGE < LATE NIGHT HOT WATER SUPPLY CHARGE? — NO

S355
ELECTRICITY CHARGE CALCULATION 11 FOR WHEN HOT WATER SUPPLIED IN EC DAYTIME AND LATE NIGHT TIME PERIODS

YES

EC DAYTIME PERIOD HOT WATER SUPPLY OPERATING PLAN COMPILATION 11

S354

S356
LATE NIGHT HOT WATER SUPPLY PROFITABLE? — NO

S357
EC DAYTIME AND LATE NIGHT TIME PERIOD OPERATING PLAN COMPILATION 11

YES

S358
EC LATE NIGHT TIME PERIOD OPERATING PLAN COMPILATION 11

S359
STORAGE BATTERY CHARGED LATE AT NIGHT? (DAYTIME ELECTRICTY PURCHASING PRICE > LATE NIGHT PRICE/STORAGE BATTERY PCN EFFICIENCY?) — NO

YES

STORAGE BATTERY LATE NIGHT TIME PERIOD OPERATING PLAN COMPILATION 11 — S360

S361
POWER USED AT NIGHT TIME EXCEEDING CONTRACTED POWER? — NO

YES

S362
ELECTRICITY CHARGE LOWER FOR EC DAYTIME USE? — NO

S363
STORAGE BATTERY LATE NIGHT TIME PERIOD OPERATING PLAN REVIEW 11

YES

EC LATE NIGHT TIME PERIOD OPERATING PLAN REVIEW 10 — S364

NEXT-DAY STORAGE BATTERY AND EC OPERATING PLAN COMPILATION ENDS

# FIG.19A

```
STORAGE BATTERY AND EC OPERATING
PLAN COMPILATION STARTS
        │
        ▼
EC ACTUAL MEASUREMENT                        ─── S401
DATA ACQUIRED AND LEARNED
        │
        ▼
STORAGE BATTERY ACTUAL                       ─── S402
MEASUREMENT DATA ACQUIRED AND LEARNED
        │
        ▼
POWER CONSUMPTION AND AMOUNT OF HEAT         ─── S403
STORED PREDICTED BASED ON EC OPERATING PLAN
        │
        ▼
CHARGING AND DISCHARGING POWERS AND          ─── S404
AMOUNT OF POWER STORED PREDICTED BASED
ON STORAGE BATTERY OPERATING PLAN
        │
        ▼
ELECTRICITY CHARGE CALCULATED BASED          ─── S405
ON ORIGINAL OPERATING PLAN
        │
        ▼
LATE NIGHT TIME PERIOD?  ─── S411  NO ──► TO S431
        │ YES
        ▼
EC LATE NIGHT TIME PERIOD                    ─── S412
OPERATING PLAN COMPILATION 20
        │
        ▼
STORAGE BATTERY LATE NIGHT TIME              ─── S413
PERIOD OPERATING PLAN COMPILATION 20
        │
        ▼
POWER USED AT NIGHT TIME  ─── S414  NO ──┐
EXCEEDING CONTRACTED POWER?               │
        │ YES                             │
        ▼                                 │
POWER CHARGE LOWER FOR  ─── S415  NO ──┐  │
EC DAYTIME USE?                        │  │
        │ YES                          ▼  │
        │                  STORAGE BATTERY LATE   ─── S416
        │                  NIGHT TIME PERIOD
        ▼                  OPERATING PLAN REVIEW 20
EC LATE NIGHT TIME PERIOD                 │
OPERATING PLAN REVIEW 20  ─── S417        │
        │                                 │
        ▼◄────────────────────────────────┘
ELECTRICITY CHARGE CALCULATED                ─── S418
BASED ON NEW OPERATING PLAN
        │
        ▼
OPERATING PLAN SELECTED                      ─── S419
        │
        ▼
STORAGE BATTERY AND EC OPERATING
PLAN COMPILATION ENDS
```

# FIG.19B

S411

S431 — PV SURPLUS POWER SOLD?
(ELECTRICITY SELLING PRICE >
ELECTRICITY PURCHASING PRICE?)   NO

YES   S432 — PV POWER SOLD
AT MAXIMUM?   NO

YES   S433

S435 — STORAGE BATTERY
OPERATING
PLAN COMPILATION 21

YES   EC OPERATING PLAN OPTIMAL?

S436 — EC OPERATING PLAN
COMPILATION 21

NO

S434 — EC OPERATING
PLAN REVIEW 21

S437 — ELECTRICITY CHARGE
CALCULATED BASED ON
NEW OPERATING PLAN

S438 — OPERATING PLAN
SELECTED

S451 — PV SURPLUS POWER SOLD?
(ELECTRICITY PURCHASING PRICE > ELECTRICITY
SELLING PRICE/STORAGE BATTERY
PCN EFFICIENCY?)   NO

S457 — EC OPERATING
PLAN REVIEW 22

SURPLUS POWER
CHARGING PLAN
CONSIDERED   YES

NO   S452 — ANY PV SURPLUS
POWER SOLD?

YES

S453 — EC OPERATING PLAN
COMPILATION 21

S458 — STORAGE BATTERY
OPERATING PLAN
REVIEW 23

S454 — STORAGE BATTERY OPERATING
PLAN COMPILATION 21

S455 — ELECTRICITY CHARGE
CALCULATED BASED ON
NEW OPERATING PLAN

S456 — OPERATING PLAN
SELECTED

STORAGE BATTERY AND
EC OPERATING PLAN
COMPILATION ENDS

## FIG.20

STORAGE BATTERY CELL TEMPERATURE °C

STORAGE BATTERY
CELL TEMPERATURE

(A)

CHARGING POWER Wh

APPROXIMATE
3,800Wh SHORTAGE

ACTUAL CHARGING
POWER
SCHEDULE

(B)

POWER CONSUMPTION W

LOAD POWER
CONSUMPTION
EC POWER
CONSUMPTION

(C)

## FIG.21

POWER W

PHOTOVOLTAIC PANEL POWER GENERATION

STORAGE BATTERY POWER

TIME

(A)

PURCHASED POWER W

PURCHASED POWER

TIME

(B)

## FIG.22

(A)

(B)

(C)

*FIG.23*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011086886 A
- JP 5215822 B
- JP 2012172915 A
- EP 2375528 A2
- JP 2013124926 A
- EP 2800221 A1
- US 2012205456 A1
- US 2012130556 A1
- JP 2013044466 A
- WO 2012057305 A1
- JP 2013002794 A
- JP 2011055575 A
- JP 2011075364 A